(19) Europäisches Patentamt

European Patent Office

Office européen des brevets

(11) **EP 0 420 142 B1**

(12) **EUROPEAN PATENT SPECIFICATION**

(45) Date of publication and mention
of the grant of the patent:
**08.03.2000 Bulletin 2000/10**

(51) Int. Cl.[7]: **G06F 9/46**

(21) Application number: **90118379.8**

(22) Date of filing: **25.09.1990**

(54) **Parallel processing system**

Paralleles Verarbeitungssystem

Système de traitement parallèle

(84) Designated Contracting States:
**CH DE ES FR GB IT LI**

(30) Priority: **29.09.1989 US 414990**

(43) Date of publication of application:
**03.04.1991 Bulletin 1991/14**

(73) Proprietor:
**MYRIAS RESEARCH CORPORATION
Edmonton, Alberta, T5K 2P7 (CA)**

(72) Inventors:
• **Broughton, Colin G.
Edmonton, Alberta T6G 0M1 (CA)**
• **Savage, James R.
Edmonton, Alberta T6E 5G8 (CA)**

(74) Representative:
**Sparing Röhl Henseler
Patentanwälte
Postfach 14 04 43
40074 Düsseldorf (DE)**

(56) References cited:
• **PROCEEDINGS OF THE 5TH ANNUAL ACM SYMPOSIUM ON PRINCIPLES OF DISTRIBUTED COMPUTING August 1986, pages 229 - 239 KAI LI AND PAUL HUDAK 'Memory Coherence in Shared Virtual Memory Systems'**
• **PROCEEDINGS OF THE 1988 INTERNATIONAL CONFERENCE ON PARALLEL PROCESSING vol. II, 15 August 1988, NEW YORK US pages 94 - 101 KAI LI 'IVY: A Shared Virtual Memory System for Parallel Computing'**

**Description**

## BACKGROUND OF THE INVENTION

### 1. Field of the Invention

This invention relates to computer systems, and in particular to computer systems in which a large number of logic elements operate simultaneously to execute programs in parallel.

### 2. Description of the Prior Art

Computer systems in which a number of logic elements operate simultaneously on an instruction stream and data are known as parallel processors. Several kinds of systems have been built which can be considered to be parallel processors. For example, in some pipeline systems several processors may be employed, each of which is specialized for a particular task to be performed by the system. The instructions to be executed flow through these processors in sequential order with each processor performing its specialized function on the instruction stream. Because each processor can be optimized for the task it performs, that task can be executed in a shorter time than if all tasks were performed by a general purpose processor.

Another form of parallel processor employs many identical processing elements and employs those processing elements on separate parts of a problem under the control of a single instruction sequence. An example of this type system is the Illiac IV.

Yet another type of parallel processing system has evolved from hardware concepts, for example the Hypercube or Banyan interconnection of relatively low priced microprocessors. In such systems the independent processors typically operate under separate, self-contained control structures to perform independent parts of the task. Communication of data and instructions among the processors is performed as necessary. Unfortunately, the resulting machines are difficult to program, primarily because the hardware architecture of the machine dictates the user programming model.

One prior art system is described in "An Overview of the NYU Ultracomputer Project" by Allan Gottlieb. In that system the computational tasks share a global memory. The user specifies which memory is private to a computational task and which is globally available to all tasks. An underlying "fetch-and-add" construct for interprocessor coordination enables every processor to fetch a value from the shared memory and simultaneously replace that value with a new one formed by adding an integer value to the value that was already present. The effect of the actions is to make it appear to the system as though they had occurred in an unspecified serial order. Unfortunately, this introduces an indeterminacy into the programming model. In addition, in the NYU project there is no simple model of memory behavior.

In "A Controllable MIMD Architecture" by S. Lundstrom and G. Barnes, the authors propose a flow model processor which includes extensions to Fortran to provide the user with explicit control of the use of memory. Control of the memory is specified at the time of compiling the program. There is no dynamic control of memory behavior during the execution of the program. The MIMD architecture includes memory private to each processor and memory shared by all processors. There is no possibility of a unit of computation executing on one processor which has part of its private memory located other than in that processor's local memory. Unfortunately, because the types of memory are statically allocated at the time of compilation and do not change, there is no possibility of dynamic load balancing across processors during program execution.

The MIMD architecture also presents the usual question with access to global shared memory; viz. if a processor accesses a location in shared memory, what processor stored into that location last and what value will be fetched? As a result, extreme care must be exercised to insure that the answers to these questions yield a program which executes correctly. While the issue is discussed in the paper, there does not appear to be any final resolution.

There are several general methods for distributing user work to such parallel processors. A first technique is to keep information concerning the user work at some known location. Whenever processors are idle, they check this location to obtain user work to execute.

This method seems to be used by most shared memory multiprocessor systems. In this approach the information concerning the tasks to be distributed, e.g., the iteration number of the next task to execute, is assigned to a known shared variable. Whenever a processor is idle it periodically checks the value of this variable to determine if there are tasks to execute. If there are tasks to execute, the processor can obtain one or more tasks by appropriately decrementing the variable. To inform the parent task that a child task has completed, a second shared variable is decremented whenever a child task has completed. When this variable is zero, the parent task can resume execution.

There are two problems with this approach. First, many processors can access the same shared variables at about the same time. This results in memory contention which can adversely affect system scalability. Second, this approach does not provide a mechanism for distributing tasks to processors to make the best use of the available resources. For example, it is not clear how to assign tasks to processors to reduce the communication requirements of the executing tasks.

We have developed a multiple instruction multiple data (MIMD) parallel computing system which increases programmer productivity through programmability and ease of use, achieves high performance through scalability to large numbers of processors, and executes programs efficiently through distribution and redistribution of computational work to processors and exploitation of the locality of reference of computer programs.

Our invention distinguishes between the units of computational work, or tasks, to be executed concurrently, and the address spaces needed by those tasks. In particular, tasks are assigned to processors independently of their memory requirements. The entire memory contained in an embodiment of our system is potentially available to each task executing on the system.

Two of the most significant features of our invention are a language extension to capture the parallelism inherent in computer applications, and a mechanism to manage the execution of parallel programs. The semantics of the language extension include a memory model for parallel computing. In the preferred embodiment of the control mechanism of our system, this memory model is implemented using a distributed scalable version of demand-paged virtual memory.

Shared virtual memory management for parallel processing is known from document: PROCEEDINGS OF THE 1988 INTERNATIONAL CONFERENCE ON PARALLEL PROCESSING, vol. II, 15 August 1988, NEW YORK, US, pages 94-101, KAI LI: "IVY: A shared Virtual Memory System for Parallel Computing".

In the preferred embodiment of our system, a copy of the control mechanism, or kernel, resides in the memory physically associated with each processor in the system. This kernel manages the execution of parallel programs by sending messages among its instantiations and maintaining distributed records of information on the status of the system and executing program.

There are several problems with this approach. First, it is up to the programmer to assign tasks to processors and to coordinate their execution. Second, each task's code and data must fit onto its processor. Third, the direct approach to starting parallel tasks and completing them can result in system resource contention.

## SUMMARY OF THE INVENTION

We have developed a parallel computing system which is faster and easier to use than prior art parallel systems. Our system is easy to program because the hardware and system software support the user programming model. In addition, computational tasks are assigned to processors independently of their memory requirements.

In the preferred embodiment our parallel system is programmed in Fortran or C and does not require systems programming expertise. Our system permits programs to run on arbitrary size configurations of hardware. Because our system is arbitrarily scalable, it does not employ shared central memory or user-specified task communication. Task and data management overhead grows minimally as a function of the size of the system as measured by the number of processors employed. Assignment of tasks to processors and management of the memory requirements of tasks is automatic and transparent to users of the system.

Our system employs a minimal extension to existing Fortran in which a single parallel do (*PARDO*) is employed. Our pardo construct syntactically resembles a do loop construct, but differs in the sense that each iteration of a pardo is a separate task, complete with its own memory. As a result, the tasks may be executed in parallel, or in any desired order.

In our preferred embodiment, when a task executes a pardo instruction, a collection of *child* tasks are created, and the *parent* is suspended until all of the child tasks complete. Each child task inherits an identical copy of the parent's memory with only the iterator differing. As a result, each task is able to execute independently. Because each task executes independently, the child tasks do not affect each other's memory image. When all of the child tasks are completed, their memories are merged together to form a new memory for the parent.

By virtue of the architecture of our system, the assignment of tasks to processors is hidden from the user. To employ our system the user need only insert the pardo construct into the executable code at appropriate locations. Because the operating system automatically and dynamically assigns and reassigns tasks to processors, our system maintains a near optimal number of processors busy with a load evenly distributed among the processors. Our system also manages all of the copying, storage, and merging of memory images associated with each task. By virtue of our system, the user can express the parallelism inherent in the user's application program at whatever level the user considers appropriate. The parallel do instruction places no limit on the number of child tasks and allows nested pardos with no limit on the depth of nesting. In addition, pardos can be combined with recursion to obtain programs with parallel recursion.

Because each task references its own address space, the existence of a task is potentially "expensive" in terms of systems hardware. As a result, at least in principle, each memory state of a parent task must be duplicated and managed for each child task which has been created. We have developed techniques for minimizing the work associated in managing parallel tasks as well as managing their address spaces. In particular, our system is designed so that the total management overhead per processor grows slowly as the number of processors used to execute the program increases. Our control system is designed to avoid concentrations of management work at isolated processors. By distributing the management work as uniformly as possible across the portion of the machine used to run the program, a more efficient parallel processing system results. For example, the management work needed to distribute and redistribute tasks is not performed by any designated processor or memory within the system, but instead employs only those processors directly effected by the task distribution or redistribution operation.

In the preferred embodiment the hardware structure of our system consists of a hierarchy of clusters of processing elements. Each processing element consists of a processor and an arbitrarily sized memory associated with it. We organize our processing elements into clusters which define the distance between relative processing elements. For example, the lowest level of the hierarchy corresponds to the cluster of tasks being performed by a single processor and its associated memory. The next level of the hierarchy corresponds to a board containing a fixed number of processing elements. Moving further up the hierarchy, the next level corresponds to the card cage containing a fixed number of boards. The concept can be extended as desired. The arbitrary number of processors communicate with each other using messages. Thus, for example, to locate a page in memory, the control system sends a message from processor to processor searching for the page.

In the preferred embodiment of our system, the control mechanism includes a pager for managing the address space for tasks which are being executed. The pager searches domains of processors for pages and combines them as necessary, services page faults, and the like. A planner component distributes new tasks among the processors, and redistributes the tasks among processors when the workload in a group of processors becomes unbalanced. The control system also includes a task manager for managing the execution of tasks on a single processor, enabling multitasking. To provide the interface between our control system and the hardware, we employ a *framework* component to determine the next activities to be performed by processors.

We employ a concept of *fame* to localize management work to small portions of the domain of processors employed for a particular problem. The fame of a task is the level of the smallest cluster of processors such that all of the pages of memory belonging to that task and all descendants of that task reside within that cluster. In our system fame is controlled by a fame manager component in the control system.

## BRIEF DESCRIPTION OF THE DRAWINGS

Figure 1 is a block diagram illustrating the memory model employed by the parallel processing system.
Figure 2 is a block diagram illustrating the hardware of the parallel processing system.
Figure 3 is a block diagram illustrating the overall structure of the kernel.
Figure 4 is a schematic diagram illustrating a management tree.
Figures 5a-5f illustrate aspects of merging and page creation.
Figure 6 is a diagram illustrating the relationship of the transaction control.
Figure 7 is a diagram illustrating the transaction control data flow.
Figure 8 is a diagram illustrating the receive transactions data flow.
Figure 9 is a diagram illustrating the quiesce transactions data flow.
Figure 10 is a diagram illustrating the relationship of the framework to other portions of the kernel and the hardware.
Figure 11 is a diagram illustrating the top level data flow in the framework.
Figure 12 is a diagram illustrating the framework top level state transition.
Figure 13 is a diagram illustrating the service message data flow.
Figure 14 is a diagram illustrating the send message state transition.
Figure 15 is a diagram illustrating the receive message state transition.
Figure 16 is a diagram illustrating the service timer data flow.

## DETAILED DESCRIPTION OF THE PREFERRED EMBODIMENT

### Table of Contents

I. Parallel Processing System Overview
II. Planner

A. Introduction

B. Leveling Subcomponent

1. Overview
2. Design of the Leveling Subcomponent

a. Invoking Load Leveling
b. Coordinating Load Leveling
c. Examples of Load Leveling
d. Interaction of Load-Leveling Transactions
e. Assigning Work to Clusters
f. Summary of Leveling Subcomponent

C. Motion Subcomponent

1. Overview
2. Design of the Motion Subcomponent

a. Requesting Work
b. Choosing Intervals
c. Assigning Task Intervals to Clusters
d. Task Transfer
e. Started Task Motion f. Summary of Motion Subcomponent Design

III. Pager

A. Overview
B. Types of Pages

1. Task Pages
2. Merging Pages

C. Pager Data Structures

1. Distributed Data Structures
2. Page Name Records
3. Task and Merging Page Headers
4. Task-based Records
5. Page Trees

a. Pager Agents
b. Head and Leaf Pager Agents
c. Pager Agent and Agent List Structures
d. Task-active and Merge-active Pager Agents
e. Page Paths

D. Merging

1. Pager Agent Record Fields Used for Merging
2. Page Creation

a. The Note-page-creation Transaction

(i) NPC Structure
(ii) NPC Processing

b. The Acknowledge-page-creation Transaction

(i) APC Structure

(ii) APC Processing

3. Starting Merging

    a. The Permit-merging Transaction

    (i) PEM Structure
    (ii) PEM Processing

    b. The Force-merging Operation

    (i) Force-merging Processing
    (ii) RQM Structure
    (iii) RQM Processing
    (iv) Force-merging/Fame Interactions

4. Continuing Merging

    a. The Perform-merging Operation (i) Perform-merging Processing
    b. The Merge-page Transaction

    (i) MPI Structure
    (ii) MPI Processing

5. Finishing Merging

    a. Page Destruction and the Delete-pages Transaction

    (i) DPS Structure
    (ii) DPS Processing

    b. Page Renaming and the Rename-pages Transaction

    (i) RPS Structure
    (ii) RPS Processing

E. Task Page Motion and Deletion

1. The Delete-path Transaction

    a. DPR Structure
    b. DPR Processing

2. The Transfer-archival-page Transaction

    a. TAP Structure
    b. TAP Processing

3. The Build-taskpage-path Transaction

    a. BPA Structure
    b. BPA Processing

4. The Locate-archival-page Transaction

    a. LAP Structure
    b. LAP Processing

F. Page Searches

    1. Page Search Names
    2. Fame-level Page Searches
    3. Pager Agent Record Fields Used for Page Searches
    4. Beginning a Page Search

        a. Page Faults and Local Page Searches
        b. Page Request Processing
        c. Local Page Search Processing

    5. Global Page Searches and the Request-task-page Transaction

        a. RPR Structure
        b. Ending a Global Page Search
        c. Starting a Global Page Search
        d. Global Page Search States

            (i) Path Build
            (ii) After Path-build
            (iii) Path Find and Path Follow
            (iv) Path Fail
            (v) Archival Search and Archival Fail

        e. RPR Processing
        f. RPR/fame Interactions

    6. Page Delivery

        a. The Transfer-requested-page Transaction

            (i) TPR Structure
            (ii) Page Delivery Processing
            (iii) TPR/fame Interactions

    7. Page Arrival

        a. TPR Processing
        b. The Note-page-equivalence Transaction

            (i) NEQ Structure
            (ii) NEQ Processing

G. Pager Fame Operations

    1. Fame Increase Operations

        a. The Raise-pager-agent Transaction

            (i) RPA Structure
            (ii) RPA Processing

        b. The Acknowledge-pager-agent-motion Transaction

            (i) APM Structure
            (ii) APM Processing

        c. The Move-page-to-head Transaction

(i) MPH Structure

(ii) MPH Processing

H. Pager Interfaces

1. Domain Initialization
2. Planner Interfaces

a. Task Records
b. Tasks and Page Creations

3. Framework Interfaces
4. Task Manager Interfaces
5. Page Frame Manager Interfaces
6. Fame Manager Interfaces

IV. Fame

A. Introduction
B. Recording Fame
C. Fame Increases
D. Fame Commands

1. Fame Command Coordination
2. Fame Command Pseudo-code

V. Kernel Transations

A. Introduction
B. Format
C. Transaction Cycles
D. Transaction Patterns
E. Transaction Control

1. Overview

a. Transaction Sequencing
b. Transaction Quiesce

2. Functional Description

a. Receive Logical Model
b. Quiesce Logical Model

3. Interfaces

a. Transaction Service
b. Quiesce Service
c. TQU Structure

4. Physical Design

a. Data Structures
b. Pseudo Code

VI. Task Manager

A. Virtual Memory Mapping

B. Task Manager Activities

C. Task Manager Interfaces


VII. Information Component


A. Introduction

B. Design of the Information Subcomponent


1. Periodic Information Flow

2. Episodic Information Flow

3. Component Coordination

4. Interfaces and Data Structures


VIII. Framework


A. Functional Description

B. Messages

C. Timers

D. Exceptions

E. PMMU Support

F. Dispatcher

**I. Parallel Processing System Overview**

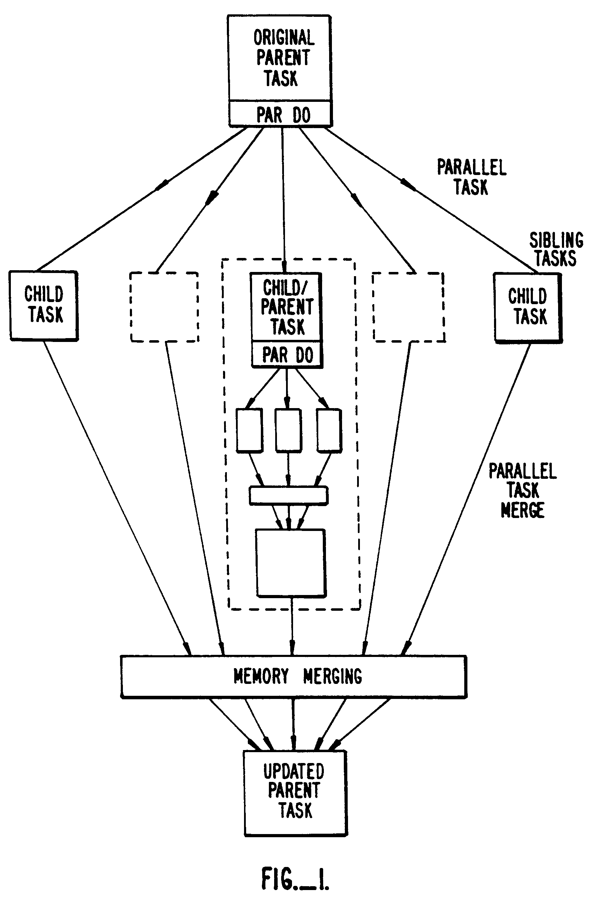

Figure 1 is a block diagram illustrating the memory model employed by the parallel processing system of our invention. The system depicted in Figure 1 gives users of the system easy access to parallel processing. In particular, there are no restrictions on the number or heterogeneity of the parallel process, and there are no synchronization requirements visible to the programmer.

Figure 1 illustrates the principal aspect of achieving parallelism with the system of our invention. As shown in Figure 1, the *PARDO* statement (parallel do) is the language construct used by the system to execute code in parallel.

In our version of Parallel Fortran the pardo statement has the following form:


```
pardo label index = I, J

        code block

label continue
```


where "label" is a positive integer and the integers I and J satisfy I <= J. The code represented by "code block" can contain further pardo statements. While Fortran is employed in a preferred embodiment, it should be appreciated that many other languages can also be employed, for example, in another embodiment C is used.

The execution of the pardo statement results in the creation of n = J - I + 1 *tasks*, with each task assigned a particular iteration number, which is an integer between 0 and n. Each task runs in its own address space, the initial state of which is identical to that of the parent task except for the task's iteration number.

The control mechanism or *kernel* is the operating system running on each processor. It assigns a unique name to each task. From this name, the genealogy of the task can be determined; that is, the parent task, grandparent, and so on. The set of processors used to execute a program is called a *domain* and the program code which initially starts execution on a particular processor in the domain is called the *primal* task. The primal task's name is a single number which identifies the domain.

When a task performs a pardo it is referred to as a *parent* task and the tasks created by the pardo are called *child* tasks. The child task's name is composed of the parent task's name, the parent task's current incarnation number, and the child task's iteration number.

The chief difference between a parallel do and a sequential do loop is that the meaning assigned to memory is slightly changed. In a parallel do loop, the code being executed finds the machine state to be the same as it was in the beginning of the pardo instead of what it was at the end of the preceding iteration. As shown in the figure, conceptually, this machine state is a parent to many child tasks or loop iterations. The child tasks may be completely heterogeneous, and conceptually are being done in parallel. Of course, the actual amount of parallelism is dependent upon the number of processors employed.

Each task makes its own private copy of those portions of the parent memory state that it will modify. As each child task is created by the pardo, its memory state is an exact copy of its parent, except for the pardo control variable. The pardo control variable has a unique value in each of the sibling tasks.

The memory states of the sibling tasks are independent. A task cannot effect the memory state of any of its siblings. A child can, however, and does change the memory state of its parent at the end of the task when the child's memory state and those of its siblings are merged together after the completion of the pardo.

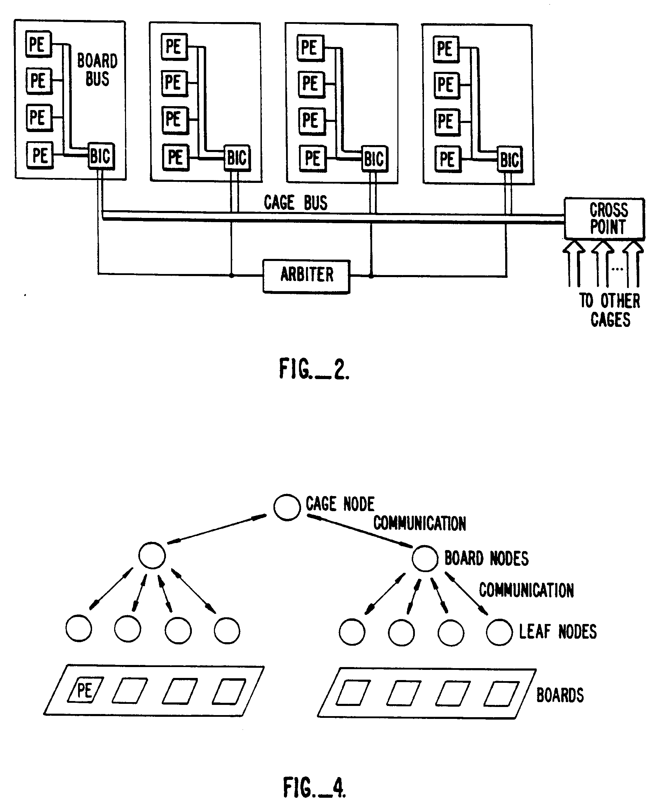

As shown in Figure 2, the hardware architecture consists of a collection of *processor elements* (PEs) 10 which communicate with each other only via messages or transactions. Each processor element corresponds to a processor together with an associated memory. Typically, a processor is a commercially available single chip microprocessor, while the associated memory is an array of commercially available dynamic random access memory. In the following we will refer sometimes to a processor element as a processor.

A processor board 20 contains four processors, which communicate through a board bus 15. A collection of boards 20 which share a common bus 15 is called a cage 30. In the preferred embodiment there can be sixteen boards in a cage. Processors on different boards within a single cage communicate through the cage bus. Processors in different cages communicate through the cage interconnections 35.

We give the generic name *cluster* to the various collections of processors: a leaf cluster is a single processor; higher level clusters are boards, cages, and so on. We will refer sometimes to subcluster and superclusters of a given cluster. For example, the cage containing a particular board is a supercluster of the board, while a processor on the board is a subcluster of the board.

A task's incarnation number is initially zero. After a task does a pardo and all of its child tasks have completed, the task's incarnation number is incremented. Thus, the incarnation number counts the number of times that the task has resumed execution after a executing a pardo statement.

A collection of tasks resulting from a pardo statement with contiguous iteration numbers is called a *task interval*. A task interval is sometimes called a task subinterval to emphasize that the tasks have been obtained from some other task interval.

After the completion of the pardo statement, all child tasks are merged into one machine state using certain rules. In our system, if no child tasks stored a value in a memory location, then that location in memory in the parent memory state retains the value it had before the execution of the pardo. The next rule we employ is that if only child stored a value in the location, that location in the parent memory state receives the last value stored by the child task. On the other hand, if more than one child stored a value in the memory location, but the last value stored was the same for each child task, then that location in the parent memory state receives that value. Finally, if more than one child tasks stored a value in the memory location and the last value stored was not the same for each child task, then that memory location and the parent memory state will be undefined.

A control mechanism must manage the resources of a computer system. Our system uses the management trees to accomplish this. A *management tree* is a form of distributed data structure. The nodes of the tree correspond to the hardware hierarchy. There are leaf nodes at each processor, a board node for each board, a cage node for each cage, and so on. The way in which a management trees nodes are assigned to processors is known to each processor in the domain. Thus, given the node's name, which specifies the type of resource, the location of the node can be determined.

*Fame* is our method of confining certain objects and information within a cluster of a domain. A non-negative integer is associated with each task in the user's program. This integer is called the fame level of the task, or more simply, the fame of the task.

A task's fame indicates which cluster may contain objects associated with the task. These objects include the task itself, its pages, its name, records of the task or its pages, and transactions which were caused by the task. In general, any object from which the existence of the task can be deduced is confined. Such objects are called famed objects. They are also said to have fame equal to the fame of the associated task.

The cluster to which task objects are so confined is called the *fame cluster* (or fame region) of the task. It is identified by the *fame level*, which is the cluster level of the fame cluster, and any record of the task, which may exist in only one cluster of that level. A fame level of zero indicates that the task is confined to one processor (processor fame); a fame of one indicates board fame; and so on. The maximum fame level is the cluster level of the domain (domain fame).

A child task is, in many respects, a part of its parent. The child task name contains the parent task name; the child task creates pages which eventually become the parent task's merging pages; and so on. Consequently, the parent task's fame cluster must contain the child task's fame cluster.

A task's fame is a dynamic property, subject to change. The fame increase operation changes the fame cluster of a task to a higher cluster. The fame reduction operation changes it to a lower cluster, while a fame transfer operation changes it to a disjoint cluster.

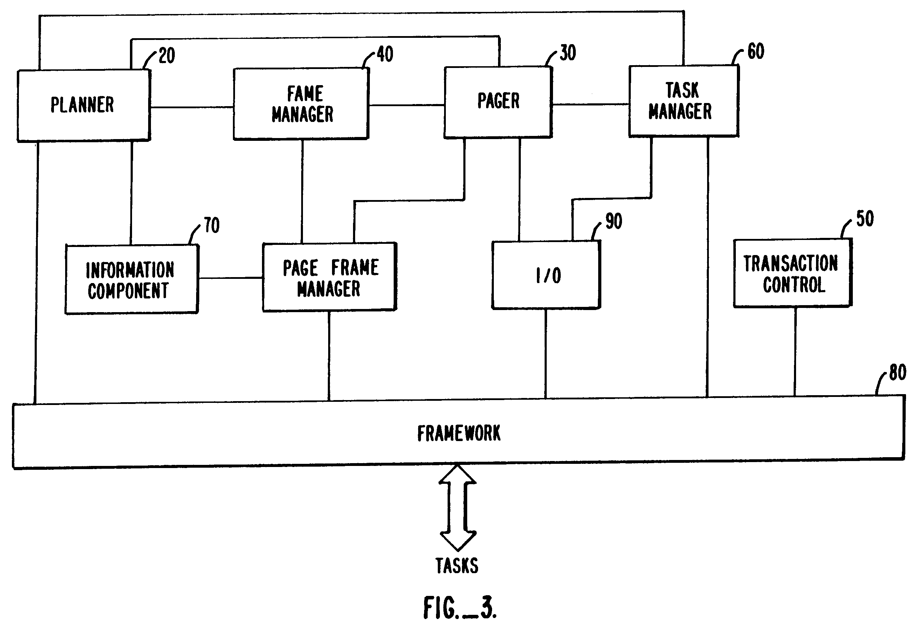

Figure 3 is a block diagram illustrating the relationship of various components of the kernel. As shown in Figure 3, the kernel includes a planner 20 which distributes new tasks and redistributes tasks when the workload in a domain becomes unbalanced. A pager 30 manages the address space for tasks, that is, it searches a domain for pages, merges pages, services page faults, and the like. A fame manager 40 localizes task management work to small subclusters of the domain. A transaction control 50 insures that transactions are correctly sent and processed among the various processors in the system. A task manager 60 manages the execution of tasks on a processor and performs other multi-tasking related functions. An information component 70 collects and distributes information needed by the planner and the page frame manager, which attempts to keep an adequate supply of page frames on a processor. The framework 80 provides the interface between the kernel and the hardware, and determines the next activity to be performed on a processor. An I/O unit 90 performs input/output functions for each task. The specific operation of the above components is discussed in detail below.

The operating system assigns a unique name to each task. This name indicates the genealogy of the task; that is, the parent task, grandparent, and so on. The primal task's name is a single number, which identifies the set of processors on which the program is running (the domain identifier).

When a task performs a pardo, each child task is assigned a distinct iteration number, starting from zero, up to one less than the number of tasks created. The child task's name is composed of the parent task's name, the parent task's current incarnation number, and the child task's iteration number.

A task's incarnation number is initially zero. After a task does a pardo and all of its child tasks have completed, the task's incarnation number if incremented. Thus, the incarnation number counts the number of times that the task has resumed execution after a pardo.

More formally, a task name looks like this:

$$\{ (t1,c1), (t2,c2), (t3,c3), ..., \text{-}(tn) \}$$

The (t1,c1) pairs are called germs; germs contain an iteration number tn and an incarnation number ci. The last germ of a task name has only the iteration number.

We have incarnation names:

$$\{ (t1,c1), (t2,c2), (t3,c3), ..., (tn,cn) \}$$

These are the same as task names, except that the task's incarnation number if included in the last germ. Such incarnation names are useful, since the address spaces of different "incarnations" of a task have different contents.

Each page also has a unique name, composed of the name of the task incarnation to which the page belongs, the page number, and an indicator specifying task page or merging page. For example:

$$[ \{ (12,1), (5,0) \}, 1000, TP ]$$

This names task page 1000 of the sixth child task of the second incarnation of the program running in domain 12. TP, indicating task page, is changed to MP, indicating merging page, when the task completes.

## II. Planner

### A. Introduction

To make effective use of a parallel system's processors, there must be a mechanism for distributing user work to the processors. The *planner component* of the control mechanism performs this function for the system.

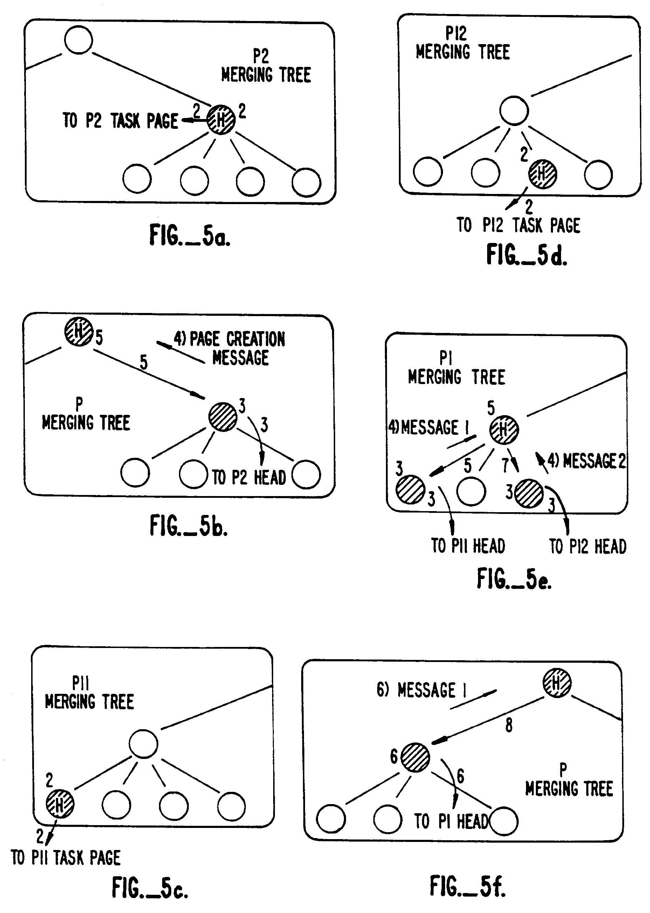

A single management tree, referred to as the *planner tree*, as shown in Figure 4, is used to carry out the planner's activities. The nodes of the planner tree are referred to as *planner agents* and are represented by a planner agent record containing information which is needed by the planner. Each planner agent is responsible for carrying out the planner's activities for a particular cluster of the hardware. Thus, the connectivity of the planner tree parallels the hardware configuration of our systems. For example, as shown in Figure 4, there are leaf nodes corresponding to individual processing elements, board nodes corresponding to printed circuit boards, etc. Assignment of tasks to processors by the planner is coordinated by appropriate planner agents. Then the movement of task intervals is performed by the planner agents making up the planner tree.

A planner agent is represented by the information contained in its planner agent record. The planner agent contains cluster information, for example, the amount of started and unstarted work in the agent's cluster. If the planner agent record corresponds to a non-leaf resource management agent, then it points to a child cluster information record for each active child cluster. The child cluster information includes the amount of started and unstarted work in the child cluster, and the amount of work in the process of being sent or received by processors in the child cluster. The planner agent also contains domain information, for example, the existence of superclusters which need work, and the number of tasks needed by these superclusters.

The planner agent record looks as follows:

```
struct pla-mgmtpdata(
        interval-motion        *pmd-intervals;
        int                     pmd-unstarted-weights[2]
        int                     pmd-unstarted-denom;
        int                     pmd-started-weights[2]
        int                     pmd-started-denom;
        int                     pmd-lctl;
        int                     pmd-total-work;
        int                     pmd-total-ustarted;
        int                     pmd-total-started;
        int                     pmd-unstarted [MAX_DOMAIN_DEPTH][2];
        int                     pmd-started [MAX_DOMAIN_DEPTH][2];
        int                     pmd-sent-or-rec [MAX_DOMAIN_DEPTH];
        bool                    pmd-child-has-excess-work;


        bool                    pmd-child-has-work;
        bool                    pmd-child-can-use-work;
        bool                    pmd-child-needs-work;
        bool                    pmd-cluster-without-tasks
                                [MAX_DOMAIN_DEPTH];
        int                     pmd-cluster-needs-tasks
                                [MAX_DOMAIN_DEPTH];
        int                     pmd-cluster-can-use-tasks
                                [MAX_DOMAIN_DEPTH];
        child-info              *pmd-child-info[MAX_DOMAIN_AGENTS];
    /* other information which is omitted */
```

where:

PMD_INTERVALS points to a list of interval motion records for this agent, or is nil.
PMD_UNSTARTED_WEIGHTS is the numerator of the weight of each unstarted task length;
PMD_UNSTARTED_DENOM is the denominator for the PLA_UNSTARTED_WEIGHTS entries;
PMD_STARTED_WEIGHTS is the numerator of the weight for each started task length;
PMD_STARTED_DENOM is the denominator for the PLA_STARTED_WEIGHTS entries;
PMD_LCTL is the clusters local contending task limit;

PMD_TOTAL_WORK is the total number of tasks in the cluster;

PMD_TOTAL_UNSTARTED is the total number of unstarted tasks in the cluster;

PMD_TOTAL_STARTED is the total number of started tasks in the cluster;

PMD_UNSTARTED is the number of unstarted tasks in the cluster classified by the fame of the parent task and the length of the task;

PMD_STARTED is the number of started tasks in the cluster classified by the fame of the parent task and the length of the task;

PMD_SENT_OR_REC is the number of tasks sent (negative) or received (positive) by processors in the cluster listed by the level of the agent which is coordinating the movement of the tasks;

PMD_TASKS_EXECUTED is the number of tasks which have completed execution during the previous sample period in this cluster;

PMD_CHILD_HAS_EXCESS_WORK is set if a child has reported and its cluster has more tasks than its local contending task limit;

PMD_CHILD_HAS_WORK is set if a child has reported and its cluster has the same number of tasks as its local contending task limit;

PMD_CHILD_CAN_USE_WORK is set if a child has reported and its cluster has a task count greater than its tasks_needed count but less than its local contending task limit;

PMD_CHILD_NEEDS_WORK is set if a child has reported and its task count is less than its task_needed count;

PMD_CHILD_INFO points to information records for each child cluster;

PMD_CLUSTER_WITHOUT_TASKS is set if the agent at that level has a child cluster without tasks;

PMD_CLUSTER_NEEDS_TASKS is the number of tasks needed by the agent at that level, if the agent needs work, otherwise, it is 0;

PMD_CLUSTER_CAN_USE_WORK is the number of tasks that can be used by the agent at that level, if the agent can use work, otherwise, it is 0.

The child-info records appearing in the planner records look as follows:

struct child-info{

```
int       chi-lctl;
int       chi-total-unstarted;
int       chi-total-started;
int       chi-unstarted[MAX_DOMAIN_DEPTH][2];
int       chi-started[MAX_DOMAIN_DEPTH][2];
int       chi-work-motion;
```

where:

CHI_CHILD_LCTL is the local contending task limit for the child cluster;

CHI_TOTAL_UNSTARTED is the total number of unstarted tasks for the child cluster;

CHI_TOTAL_STARTED is the total number of started tasks for the child cluster;

CHI_STARTED is for the child cluster the number of started tasks classified by the fame of the parent task and the length of the task;

CHI_WORK_MOTION is the total of the amount of work that the child should expect to receive (negative for work sent out).

Task intervals are the objects with which the planner works. When a PARDO is performed a task interval is created. As will be described, the distribution of tasks involves the splitting of a task interval into subintervals and assigning the subintervals to processors. Each task interval is represented by a task interval record. The fields of this record contain information which is associated with the whole collection of tasks making up the task interval. There are three types of information contained in a task interval: information concerning the interval (the iteration numbers of the tasks making up the interval, and the estimated amount of work contained in the interval); information used by the task manager (queues of started tasks, and the status of the task interval); and paging information concerning the parent task.

The task interval record is as follows:

```
struct task_interval {
    task_interval     *tir_next;
    task_interval     *tir_prev;



    interval_motion   *tir_motion;
    int               tir_lo_iteration;
    int               tir_hi_iteration;
    address           tir_grts_stack;
    /* other information which is omitted */
};
```

where:

TIR_NEXT points to the next task interval record on this processor.
TIR_PREV points to the previous task interval record on this processor.
TIR_MOTION points to the interval motion record for this interval.
TIR_LO_ITERATION is the lowest iteration number of unstarted tasks in this interval.
TIR_HI_ITERATION is the highest iteration number of unstarted tasks in this interval.
TIR_GRTS_STACK is the virtual address where the GRTS control stack for this task begins.

The process of distributing tasks usually involves a collection of planner agents with each agent dividing the task interval it receives into subintervals and sending the subintervals to planner subagents. Once all the tasks have completed execution this information makes its way back to the parent task so that the parent task may resume execution. The interval motion record is used to keep track of the movement and splitting of task intervals involved in the distribution of tasks. Interval motion records contain two types of information: information concerning the movement of associated task intervals (the source of the task interval or the parent task which created the task interval); and information concerning the task interval (the time consumed by the tasks making up the interval and the page usage of the tasks making up the interval). The interval motion records located on a processor are associated with particular planner agents and thus can be accessed via the planner agent records which are located on the processor.

The interval motion record is as follows:

```
struct interval_motion {
    interval_motion    *imr_next;
    interval_motion    *imr_prev;
    task_interval      *imr_interval;
    agent_name         imr_tri_source;
    int                imr_tri_iden;
    started_task       *imr_parent_task;
    int                imr_dispensed;
    int                imr_completed_tasks;
    /* other information which is omitted */
};
```

where:

IMR_NEXT points to the next interval motion record on the list.
IMR_PREV points to the previous interval motion record on the list.
IMR_INTERVAL points to a task interval record for this interval, if one is on this processor.
IMR_TRI_SOURCE contains the name of the agent which sent the interval here, and is invalid if a local PARDO created the interval.
IMR_TRI_IDEN contains the identifier from the TRI transaction which brought the interval here, and is invalid if a local PARDO created the interval.
IMR_PARENT_TASK points to the started task record for the parent task if a local PARDO created the interval, or is nil if a TRI transaction brought the interval here.
IMR_DISPENSED indicates how many subintervals were split off from this interval and dispensed to other processors, but have not yet completed and returned
IMR_COMPLETED_TASKS indicates how many tasks in this interval have completed.

A cycle record is used to keep track of the interval motion record for a particular task interval. The cycle record is as follows:

```
struct cycle {
    cycle              *cyc_next;
    cycle              *cyc_prev;
    int                cyc_iden;
    interval_motion    *cyc_motion;
    /* other information which depends on the use made of the cycle
    record and omitted */
};
```

where:

CYC_NEXT points to the next cycle record on this processor.
CYC_PREV points to the previous cycle record on this processor.
CYC_IDEN is a unique (for this processor) integer assigned to each cycle record.
CYC_MOTION points to the interval motion record.

A list of cycle records is kept on each processor.

The planner consists of two subcomponents. The *leveling subcomponent* is responsible for assigning excess user work to collections of processors which require user work. The *motion* subcomponent is responsible for translating the decisions made by the leveling subcomponent into the actual transfer of tasks from processors having excess user work to processors which require user work.

The motion subcomponent consists of a subcomponent which requests that tasks be moved (the *requestor component*), together with a subcomponent that actually moves the tasks (the task *transfer* component).

The main goal of the planner is to distribute tasks in such a manner that the user program execution time is as small as possible. The planner attempts to achieve this goal by keeping the user work load across the domain as "uniform" as possible, and by distributing "closely related" tasks to nearby clusters. By keeping the workload "uniform," the parallelism of the hardware is exploited. By distributing closely related tasks to nearby clusters, the overhead of the pager is reduced.

A second goal of the planner is consistency. It is undesirable to have the execution time of a program with a fixed input vary greatly from run to run. To achieve this the planner is consistent in its assignment of tasks to processors. Thus, for a program with a fixed input the distribution of tasks for each PARDO performed by the primal task does not vary from run to run.

**B. Leveling Subcomponent**

**1. Overview**

The function of the leveling subcomponent of the planner is to assign excess user work to clusters which require user work. To carry out this function the leveling subcomponent determines when excess user work is to be distributed, which part of the domain should be involved in the distribution, and how much of the excess user work should be allocated to each cluster which requires work.

To perform these functions, the leveling subcomponent has up-to-date information concerning the state of the domain and the user program. The system distributes child tasks in a manner which is valid for most situations, but without a complete estimate of the child task's "future work". For example, when a pardo is executed the planner is given the likelihood (PARDO IMPOSSIBLE, PARDO POSSIBLE, PARDO CERTAIN) that newly created child tasks will create further work.

To keep the processors making up the domain as busy as possible, the leveling function of the planner is invoked whenever there is work that needs distribution. The distribution of work starts as quickly as possible to reduce idle time of the processors, and work is only distributed if its distribution reduces the execution time of the program.

Typically, the planner's leveling subcomponent is invoked when a PARDO is performed because new work is created which may require distribution. Work is also redistributed during the execution of the program to keep a balanced user work load on as many processors in the domain as possible.

The fame of the ancestor tasks places an important restriction on the portion of the domain over which the leveling component distributes work. To explain this, some terms must be introduced. A *task interval* is a collection of tasks having the same parent task and contiguous iteration numbers. A *task interval sequence* is a sequence of task intervals T1, T2, ... ,Tk where the parent of T2 is a task in the interval T1, the parent of T3 is a task in the interval T2, etc. The *primal task interval* is denoted by T0 and is assumed to have domain fame. The planner is responsible for assigning a fame value to the tasks making up a new task interval. One goal of the leveling component is to distribute the tasks intervals resulting from a nested PARDO so as to avoid performing a fame raise operation (if possible). Thus, if the tasks in T1 are distributed over cluster C1 and have fame cluster F1, and the tasks in T2 are distributed over cluster C2 and have fame cluster F2, then both C2 and F2 should be subclusters of F1. Likewise, if the tasks in T3 are distributed over the cluster C3 and have a fame cluster F3 then C3 and F3 should be subclusters of F2. Thus, for a nested PARDO, for each task interval Ti, the leveling subcomponent must choose a cluster Ci to distribute the task interval over, and a fame cluster Fi for each task in Ti. These clusters must be chosen so that C2 and F2 are subclusters of F1, C3 and F3 are subclusters of F2, etc.

Once a decision has been made to distribute work over a particular cluster the leveling subcomponent must decide how much work each child cluster is to receive. This is accomplished using the following considerations, listed in order of importance: If possible, each needy cluster should receive enough work so that each processor in the cluster has at least one task to execute. The remaining excess user work should be allocated to each cluster on the basis of its local contending task limit (lctl). Thus, those child clusters having a large lctl have more tasks than those clusters with a smaller lctl.

The local contending tasks limit of a processor is assigned at domain initialization and represents the maximum number of concurrently executing tasks for the processor. The local contending task limit of a cluster is the sum of the local contending task limits of the processors making up the cluster.

An attempt to redistribute work is not guaranteed to result in subclusters receiving work. There are several reasons for this. First, moving tasks may require a fame raise operation due to the parent task's fame region not including the cluster which is to receive the tasks. Thus, moving such tasks may increase the running time of the user program due to the high overhead of performing a fame raise operation. Second, the excess user work may only consist of started tasks and it may not be cost-effective to move the started tasks. Finally, the agent's information may be out of date and/or the tasks may complete execution before the request reaches the appropriate processors. The leveling subcomponent is designed to avoid any unnecessary redistribution of tasks.

## 2. Design of the Leveling Subcomponent

The leveling subcomponent performs the planner's main function which is the assignment of excess user work to the clusters which require user work, herein "load leveling." This section describes the design of the leveling subcomponent.

### a. Invoking Load Leveling

Load leveling is invoked in two distinct situations. First, load leveling may be invoked when new tasks are created by the execution of a PARDO. Second, during the normal execution of a user program the user work load may become unbalanced, i.e., one or more clusters may have insufficient user work while other clusters have an excess of user work.

The *report new tasks* transaction is responsible for informing the appropriate planner agent of the creation of new tasks, to thereby invoke load leveling. This transaction is sent up the planner tree to the appropriate ancestor agent where it invokes the load leveling operation. The exact conditions for determining the appropriate planner agent to coordinate the load leveling operation are discussed below.

Load leveling to balance the distribution of user work is done periodically. The disperse statistics transaction, used by the information component, performs this task. When a non-leaf unsource management agent broadcasts a disperse statistics transaction to its subclusters, the planner agent invokes load disperse if there is an unbalanced work load.

Attempting to perform load leveling each time a resource management agent broadcasts disperse statistics transactions to its subclusters would produce an excessive number of load leveling attempts. Our approach is to have the following Boolean fields in each planner agents record:

(1) *pmd_child_has_excess_work* - set if a subcluster's task count is greater than the subcluster's local contending task limit.
(2) *pmd_child_has_work* - set if a subcluster's task count equals the subcluster's local contending task limit.
(3) *pmd_child_can_use_work* - set if a subcluster's task count is greater than its tasks_needed count but less than the subcluster's pmd_lctl, where tasks_needed = min(number of processors in cluster, lctl of cluster).
(4) *pmd_child_need_work* - set if a subcluster's task count is less than its tasks_needed count.

These fields are updated by the collect statistics transaction which is used by the information component.
Load leveling is invoked if: (1 and (3 or 4)) because this means a subcluster has excess work and there is a subcluster which either can use the work or needs the work. Load leveling is also invoked if ((2 or 3) and 4) because this means there is a subcluster with more tasks than processors which can execute work and a subcluster which needs work. The first case is the usual situation in which work is redistributed, while the second situation involves the possible movement of started tasks. Once load leveling has been invoked, these four fields can be set to FALSE.

### b. Coordinating Load Leveling

The system must determine which planner agent is responsible for coordinating the load leveling operation. In the case of task redistribution, the planner agent coordinating the load leveling operation corresponds to the resource management agent broadcasting the disperse statistics transaction. In the case of new task distribution, it is more difficult to determine the planner agent coordinating the distribution of new work.
We use the following domain information to determine which planner agent should coordinate the distribution of new work:

*pmd_cluster_without_tasks* - the l'th entry of this array of bits is set if the ancestor planner agent at this level has a subcluster without tasks.
*pmd_cluster_needs_tasks* - the l'th entry of this array is 0 if the ancestor agent at this level has more tasks than:

tasks_needed = min(number of processors in cluster, lctl of cluster), otherwise, it is tasks_needed minus the number of tasks in the agent's cluster.

*pmd_cluster_can_use_tasks* - the l'th entry of this array is 0 if the ancestor agent at this level has more tasks than its lctl, otherwise, it is the cluster's lctl minus the number of tasks in the agent's cluster.

These three pieces of information are updated by the processing of the disperse statistics transaction. In addition, however, the parent task's fame must be taken into account. The restrictions introduced by fame apply to both tasks which do not create further work and tasks which do create further work.

First, consider the case in which the new tasks will possibly create further new work, i.e., either PARDO POSSIBLE or PARDO CERTAIN is set. We will consider five possible situations:

(1) There are ancestor agents with empty subclusters which can handle the new work. The phrase "handle the work" means tasks_needed - cluster task count >= number of new tasks. Essentially, there are enough "idle" processors that can execute a task so as to be able to assign a new task to each such processor.

(2) There are no ancestor agents having empty subclusters which can handle the new work, however, there are ancestor agents which need work and can handle the new work. The phrase "need work" means that tasks_needed -clusters task count >= 0. That is, there are "idle" processors that can execute tasks.

(3) There are no ancestor agents which need work and can handle the new work, however, there are ancestor agents which can use work and can make use of the new work. The phrase "use work" means there are fewer tasks in the agent's cluster than the cluster's lctl. The phrase "can make use of the work" means that lctl of the cluster - cluster's task count >= new task count. Thus, can make use of the work means that the new tasks can start execution once they have been distributed.

(4) There are ancestor agents which can use work, however none of these agents can make use of the new work.

(5) No ancestor agent can use work.

In situation (1) the report new tasks transaction is sent to the highest level agent which has empty subclusters and can handle the new work. This approach spreads the new tasks as far apart as possible, to make room for any possible decendent tasks. At the same time it does not distribute tasks across the whole domain each time new tasks are created. The prescription for determining which agent distributes the new work is conservative for situations (2) to (5). It assumes that sibling tasks will also create child tasks which must be distributed as close as possible to their parent tasks. In situation (2), the report new tasks transaction is sent to the lowest level planner agent which needs work and can handle the new work.

In situation (3), the report new tasks transaction is sent to the lowest level agent which can use work and can make use of the newly created work. In situation (4), the report new tasks transaction should stops at the lowest ancestor agent which can use the work. Finally, in situation (5) the report new tasks transaction is not sent to any ancestor planner agent, i.e., the new task interval is distributed to the parent task's processor. Examples of how our set of rules affects the distribution of tasks are given after the case in which the new tasks do not create any further work is considered.

Above it was assumed that the new tasks created further work. Now assume that the new tasks will not create any further work, i.e., PARDO IMPOSSIBLE is set. In situations (1) and (2), the report new tasks transaction is sent to the lowest level planner agent which can handle the new work. In situation (3) the report new tasks transaction is sent to the lowest planner agent which can make use of the new work. In situation (4) the report new tasks transaction is sent to the lowest planner agent which can use work. Finally in situation (5) the report new tasks transaction is not sent and thus the tasks are initially distributed to the processor which has the parent task.

The planner is also responsible for assigning a fame value to new tasks. Since the coordinating agent has the most accurate information concerning the new task interval and the state of the domain, this agent assigns a fame value to the new tasks. If the new tasks will not create further work then a fame of 0 is assigned to each new task. If, on the other hand, the tasks may create further new work then the assignment of fame by the coordinating agent is more difficult. Once the agent has assigned the new tasks to various child clusters, the agent's cluster can be in one of the following three states:

(1) task count of cluster < tasks_needed count of cluster.
(2) tasks_needed count of cluster <= task count of cluster <= lctl of cluster.
(3) lctl of cluster <= task count of cluster.

In the case of state (1) we first compute the "average number of processors per task" which is given by ceiling (tasks_needed count for cluster/task count for cluster). The level of the smallest cluster which contains at least this average number of processors per task is assigned to be the fame of the new tasks. In the case of state (2) we first compute the "average number of effective processors per task" which is given by ceiling (lctl for cluster/task count for cluster). The smallest cluster which contains the average number of effective processors per task is called the task's effective cluster of influence. Note, it is possible for the level of the effective cluster of influence to be larger than the leveling agent's level. Thus, we assign a fame value to the new tasks to be the minimum of (coordinating agent's level, level of the effective cluster of influence). In the case of state (3) we assign a fame value of 0 to the new tasks. We now consider the effect of fame on the choice of coordinating agent for a new task interval.

We require that the new work always be distributed within the fame region of the parent task. Thus, if the level of the coordinating agent, which is determined using the rules described previously, is greater than the parent task's fame then the coordinating agent for the distribution of the new tasks is chosen to be the ancestor agent at the parent task's fame level.

An agent's domain information must be up-to-date to correctly guide the report new tasks transaction up the planner tree. Thus, if an agent performs a load leveling operation which changes the status of the arrays: pmd_cluster_without_tasks; pmd_cluster_needs_tasks; and pmd_cluster_can_use_tasks, then this information must be made available throughout the agent's cluster as quickly as possible. To ensuring this, we require that each agent which finishes a load leveling operation broadcast an episodic disperse statistics transaction over its cluster. This guarantees that the agents within the cluster have domain information which is as up-to-date as possible. When a disperse statistics transaction is used for this purpose it should not invoke the load leveling subcomponent.

The report new tasks transaction contains the reason (RNT_CLUSTERS_EMPTY, RNT_NEEDS_TASKS, RNT_USE_TASKS, RNT_CAN_USE_TASKS, and RNT_CLUSTERS_FULL) for choosing the particular ancestor planner agent for coordinating the distribution of the new tasks. It may happen that the reason for choosing the ancestor agent is invalid, since the information used to choose the agent was not up-to-date. The planner agent chosen to coordinate the new task distribution checks the validity of the reason. If the reason is still valid, or if the agent can use work, but the child planner agent for the cluster with the new task interval cannot use work, then the agent coordinates the new task distribution. Otherwise, the report new tasks transaction is sent to the child planner agent in the cluster containing the new task interval. If the child agent can use the new work, it coordinates the distribution of the new task interval, otherwise, if it is not a leaf planner agent, it sends the report new tasks transaction to the child whose cluster contains the new task interval. This is repeated until a planner agent, possibly a leaf agent, is found to coordinate the distribution of the new tasks.

## c. Examples of Load Leveling

In the following, assume that the domain consists of two complete cages, with each cage containing 16 boards, and each board having 4 processing elements. Also assume, that the lctl of each processor is 3.

First, consider the situation in which the primal task creates n1 child tasks and each child task creates n2 child tasks and finally each grandchild task creates n3 child tasks. There are many possible cases depending on the values of n1, n2, and n3. Assume, however, that in case (A): n1 = 4, n2 = 16, and n3 = 8; and in case (B) that n1 = 64, n2 = 8, and n3 = 0. Consider case (A). The distribution of the generation 2 tasks corresponds to situation (1). It is coordinated by the top-level planner agent, and results in each cage receiving 2 tasks. A fame value of 2 is assigned to each task. The distribution of the generation 3 tasks corresponds to both situations (1) and (2), is coordinated by the level 2 planner agents, and should result in each board receiving 2 tasks. Each task will be assigned fame 1. The distribution of the generation 4 tasks corresponds to both situations (3) and (4), is coordinated by the level 1 planner agents, and should result in each processor receiving 4 tasks. Each task is assigned fame 0.

In case (B) the distribution of the generation 2 tasks corresponds to situation (1). It is coordinated by the top level planner agent, and should result in each board receiving 2 tasks. A fame of 1 is assigned to each task. The distribution of the generation 3 tasks corresponds to both situations (3) and (4), is coordinated by the level 1 planner agents, and results in each processor receiving 4 tasks. A fame of 0 is assigned to each task.

## d. Interaction of Load-Leveling Transactions

It is possible for the report new tasks transaction and the disperse statistics transaction to interact. Both transactions are responsible for invoking load leveling. It is undesirable for the new tasks to be distributed by a load leveling operation invoked by a disperse statistics transaction, before the load leveling operation initiated by the report new tasks transaction has distributed the new work. To avoid this situation, a newly created task interval is not counted in the parent task processor's work load until after they are distributed. Thus, knowledge of the new work is only available through the report new tasks transaction which is responsible for distributing the new work.

### e. Assigning Work to Clusters

Next, we discuss the aspects of our system by which excess work is assigned to the various child clusters which require work. There are two cases to be considered, depending on whether the load leveling operation involves the distribution of new tasks or the redistribution of tasks.

First, we consider a load leveling operation involving the distribution of new tasks. The agent, which is distributing the work, has cluster information, such as, the total work present in each child cluster and each child cluster's lctl. The leveling routine uses this information to determine how much of the new work must be allocated to each child cluster. The prescription used to distribute the new work depends on whether or not the new work can be accommodated by the child clusters which need work. We now consider each of these cases separately.

If the child clusters cannot accommodate the new work, the system determines the total_work by adding the work contained in each child cluster to the new work. Each child cluster's entitlement is calculated as:

(child cluster lctl)/(sum of the child cluster's lctl) * total_work

Those child clusters whose current task count is equal to or greater than their entitlement are ignored, and their tasks are removed from the total_work. Then, the above formula is used to recompute the entitlements for the remaining child clusters. The sum of the child cluster's lctl is computed using only the remaining child clusters. The new tasks are distributed by assigning each child cluster enough tasks so as to achieve its entitlement. The process starts from the child cluster which needs the most tasks.

Next, consider the case that the child clusters can accommodate the new work. In this case the system determines the total_work by adding the work contained in each child cluster that needs work to the new work. Then the following formula is used to compute each child cluster's entitlement:

(child cluster tasks_needed count)/(sum of child cluster's tasks_needed count) * total_work

Note that only child clusters that need work are included in the sum of the child cluster's tasks_needed count. Those child clusters are ignored whose current task count is equal to or greater than their entitlement and their tasks are removed from the total_work. Then the entitlements for the remaining child clusters are recalculated. The new tasks then are distributed by assigning each child cluster enough tasks so as to achieve its entitlement. The process starts from the child cluster which needs the most tasks.

This prescription for assigning new work to child clusters takes into account the work already present in the child clusters and the size of the child clusters. In general, this prescription does not distribute the tasks uniformly across the subclusters unless the local contending task limit is the same for each subcluster. Furthermore, this approach treats all tasks as equal and does not directly take into account how much work (measured in instructions) is contained in the tasks.

Next, consider the load leveling operation involving the redistribution of tasks. The agent which is redistributing the work has cluster information, such as the total work present in each child cluster classified by the parent task's fame, the length of the tasks, and whether it is started or unstarted. Thus, the agent can assign each task to one of the following categories:

T1: Unstarted tasks which can be moved without a fame raise operation.
T2: Unstarted tasks whose movement requires a fame raise operation.
T3: Started tasks whose movement may require a fame raise.

On average, each type of task will require a different amount of management work to move. A T1 task will require the least amount of management work to move. A T2 task will require more management work, due to the necessity of performing a fame raise operation. Finally, a started tasks requires the most management work to move.

A correct decision concerning the redistribution of a task depends, in part, on the type of task involved. Thus the classification of work as T1, T2, or T3 type work can be used as a guide in deciding which tasks should be moved. This further suggests that the leveling operation for the redistribution of tasks will be decomposed into three phases with each phase dealing with the redistribution of a particular type of work. A description of each phase of the leveling operation for the redistribution of tasks is given in the following.

Phase 1. This phase deals with the redistribution of type T1 tasks. First, the total number of type T1 tasks is determined. The redistribution of these tasks depends whether the the tasks can be accommodated by child clusters which need work. A child cluster "needs work" if its task count is less than its tasks_needed count.

Assume that the type T1 tasks cannot be accomodated by child clusters that need work. We use the following formula to compute the entitlement of each child cluster:

(child cluster lctl)/(cluster's lctl) * total_work

The T1 tasks should be redistributed by assigning each child cluster enough tasks so as to achieve its entitlement. The process should start from the child cluster which needs the most tasks and should take into account roundoff problems associated with the computation of the entitlements. Assume that the excess tasks can be accommodated by child clusters that need work. The redistribution should start with the child cluster that needs the most work and should end once all excess T1 tasks have been redistributed.

Phase 2. This phase deals with the redistribution of type T2 tasks. To enter this phase there still must be child clusters which need work after phase 1 has completed. First, the total_work is determined by taking the minimum of the number of type T2 tasks and the number of tasks needed by the child clusters which need work.

Since a fame raise is involved we only move tasks if there is an "adequate amount of excess work". The notion of an "adequate amount of excess work" is measured by the effective task count, which is defined in terms of a weight vector consisting of two parameters (m1, m2) where 0 <= m1, m2 <= 1. By choosing these parameters appropriately we can be as "liberal" or as "conservative" as we like in moving those tasks which result in fame raise operations. Likewise, we can distinguish between phase 2 and phase 3 by choosing different weight vectors for the computation of each phase's effective task count. For example, we might choose the weight vector (1/3, 1) for phase 2 and the more "conservative" weight vector (1/4, 1) for phase 3. It is also possible to allow the weight vectors to depend on the level of the planner agent. Thus, planner agents which are near the top of the planner tree can be more conservative in moving tasks than those planner agents which are near the bottom of the tree.

The weight vectors for the planner are initialized at domain startup. The weight vector for type 2 work is a collection of 2 fractions whose numerators are given by the planner record field pmd_unstarted_weights[2] and whose denominator is given by pmd_unstarted_denom. The weight vector for type 3 work is a collection of 2 fractions whose numerators are given by the planner record field pmd_started_weights[2] and whose denominator is given by pmd_started_denom.

For example, we can assign an effective task count to the different length tasks as follows: S = 1/4 T, L = 1 T. The effective task count's weight vector is given by the triple (1/4, 1). Thus, a cluster which has 4 Short tasks, and 2 Long tasks has an effective task count of 3.

The effective task count is used as follows to decide whether type T2 tasks should be moved. Start with the cluster which has the largest number of T2 tasks and compute that cluster's effective task count. If its effective task count is less than or equal to its tasks_needed count, then do not move any tasks from this cluster. Mark this child cluster as "leveled" and subtract its T2 tasks from the total_work. If the effective task count for the cluster is greater than the cluster's tasks_needed count then move as many of the T2 tasks from the cluster as possible and subtract the number of tasks moved from the total_work. Repeat this procedure with the child cluster having the largest number of T2 tasks which is not leveled until the total_work is less than or equal to 0.

Phase 3. This phase deals with the redistribution of T3 tasks. To enter this phase there still must be child clusters which need work after phase 2 has completed. The procedure for redistributing T3 tasks is essentially the same as that given in phase 2, except that child clusters which have been marked as "leveled" in phase 2 are not considered in phase 3.

## f. Summary of Leveling Subcomponent

When a new task interval is created it is partitioned into planner tasks which are further classified as Short, or Long tasks. Information concerning the status of the new tasks, the parent task's fame, and the domain is used to guide the report new tasks transaction up the planner tree to the appropriate planner agent which is responsible for coordinating the distribution of the new tasks. This agent invokes the load leveling operation, which results in the task interval being distributed over the agent's cluster. Furthermore, the agent uses the final status of its cluster together with the status of the new tasks to assign a fame value to each new task in the task interval.

When the work load within a cluster becomes unbalanced, the cluster agent is informed by the collect statistics transaction setting the appropriate bits in the agent's record. Each disperse statistics transaction examines these bits to determine whether it is worthwhile to invoke the load leveling operation for the redistribution of tasks.

The load leveling operation attempts to obtain a "uniform" distribute of tasks across the subclusters making up the agent's cluster. Tasks are distributed on the basis of the subcluster's ability to execute work. This is measured in two different ways. First, in terms of the number of processors in the subcluster without tasks to execute. Second, in terms of the subcluster's local contending task limit which is a measure of the subcluster's ability to concurrently execute tasks.

The load leveling operation for the redistribution of tasks is a three phase process. In the first phase those excess tasks which can be moved without a fame raise operation are leveled. The second phase is entered only if there are still processors which need tasks to execute. In this phase the excess tasks which require a fame raise operation are leveled. The third phase is entered only if there are still processors which need tasks to execute once the second phase has completed. In this phase excess started tasks are leveled. Note, in the second and third phase, tasks are moved from a cluster only if that cluster's effective task count is greater than its tasks_needed count. This guarantees that there is an adequate amount of excess work to justify the movement of the excess tasks. The formula used to calculate the effective task count can be varied from phase to phase so as to make the ease of moving tasks dependent on the type of tasks involved.

### C. Motion Subcomponent

### 1. Overview

The function of the motion subcomponent is to carry out the decisions made by the leveling subcomponent. Thus, once the leveling subcomponent requests that user work be moved from one cluster (the sending cluster), to another cluster (the receiving cluster), it is the responsibility of the motion subcomponent to move the appropriate number of tasks from processors in the sending cluster which have excess user work to processors in the receiving cluster which require user work.

The distribution of work from one cluster to another cluster involves the following sequence of steps. First, a request for the work is made to the sending cluster. Next, the work request must be translated into work requests to individual processors in the sending cluster which have excess tasks. Each processor receiving a work request must then select and send tasks to satisfy the request. Finally, the tasks sent to the receiving cluster must be distributed to those processors in the receiving cluster which need work.

The motion subcomponent of the planner is also responsible for the movement of information associated with tasks. Sending tasks involves the movement of information which is needed for tasks to execute on the receiving processors. Once the tasks have completed execution, this information, together with other information concerning the tasks execution, must be sent to the parent task so it may resume execution.

The motion subcomponent must translate the leveling subcomponent's request for work into the sending of excess tasks from processors within the sending cluster. A request for work may result in several processors sending tasks because it may not be possible to obtain the needed work from a single processor. Closely related tasks can be kept as close together as possible by sending as few task intervals as possible to satisfy the request. The process of obtaining the requested work from the sending cluster must also take into account fame. If possible, the requested work should be obtained from those clusters having the required excess work which can be sent without causing a fame raise operation. As a result, when work is to be obtained from a cluster, it involves the following considerations, listed in order of importance: (1) avoiding a fame raise operation, (2) sending as few task intervals as possible.

The motion subcomponent is also responsible for distributing the work which has been sent to the receiving cluster. It may be necessary to split the received task intervals into subintervals since there may be several processors in the receiving cluster which require work. To keep closely related tasks close together we avoid any unnecessary splitting of task intervals. Thus, when work is to be distributed within a cluster, we split the received task intervals into as few subintervals as possible.

The motion subcomponent of the planner is also responsible for determining which task intervals on a processor should be sent to fulfill a work request. The fame of the tasks should be taken into account. For example, if there are two task intervals and the parent task fame of one is larger than the receiving agent's level, while the parent task fame of the other is equal or smaller than the receiving agent's level, then the first interval should be given priority. The reason for this choice is that the fame raise operation is expensive and thus should be avoided if possible. The possibility that the tasks will perform a PARDO should be taken into account. For example, if there are two task intervals and one will create child tasks while the other will not, then the first interval should be given priority. The reason for this choice is that those tasks which will create child tasks should be started as quickly as possible in an effort to keep processors busy executing user work. The generation of the tasks should be taken into account. For example, if there are two task intervals and all tasks are going to create child tasks then the interval with the smallest generation should be given priority. The task interval with the smallest generation is more likely to create more work and thus should start execution as soon as possible. Thus, the choice of task intervals to satisfy a work request is based on the following considerations, listed in order of importance:

(1) the likelihood that sending the tasks will lead to a fame raise operation;
(2) the likelihood that the tasks will create child tasks;
(3) the generation of those tasks which will create child tasks; and
(4) the number of task intervals needed to satisfy the work request.

**2. Design of the Motion Subcomponent**

The function of the motion subcomponent is to carry out the distribution of work requested by the leveling subcomponent.

**a. Requesting Work**

In this section we describe the mechanism used to translate the request for work from the sending subcluster into requests for work from the individual processors making up the sending cluster. Also, we consider the subsidiary issue of how each planner agent's domain information is updated so as to reflect the movement of work within the domain. Again there will be two cases to consider, depending on whether the load leveling operation involves the distribution of new tasks or a redistribution of tasks.

First, consider the case where the load leveling involves the distribution of a new task interval. A request new work transaction is sent directly to the processor which has the new task interval. This transaction indicates which subagents of the coordinating agent are to receive work, together with the number of tasks each subagent is to receive. Thus, only a single request new work transaction is needed to request the distribution of new work. Furthermore, since the request is guaranteed to be satisfied there is no need for an acknowledgement to the request new work transaction.

Next, consider the case where the load leveling involves a redistribution of work. In this case the process of requesting work is an iterative process. The top agent for the sending cluster must determine which of its subclusters have an excess of work which can satisfy the request. (In general there will be more than one subcluster which needs to send work to fulfill the original request.) This process is repeated by the non-leaf agents of each subcluster from which work has been requested. Thus, the original request for work results in a number of requests to leaf agents in the sending cluster for work. The request for work contains the number of type T1, T2, and T3 tasks which should be sent. There are two general guidelines which a non-leaf agent follows in attempting to satisfy the work request. First, if it is possible to fulfill the request for T2 type tasks with T1 type tasks then do it. Likewise, if it is possible to fulfill the request for T3 type tasks with T2 type tasks, or better yet, with T1 type tasks then do it. Second, minimize the number of leaf agents needed to satisfy a single work request. This can be accomplished by each non-leaf agent satisfying its work request by requesting work from the subclusters having the largest amount of excess work. The request work distribution transaction is used to carry out this request for work.

Next, we discuss the problem of keeping cluster information as up-to-date as possible. When an agent moves work from a sending cluster to a receiving cluster it updates its work_motion record to record the fact that work is in the process of being moved. In general when an agent requests work from a subcluster or sends work to a subcluster the agent updates its work_motion record. The work_motion records are given by the chi_work_motion field of each subcluster's pmd_child_info record. There are two issues to consider. First, once the work is actually sent or received by a leaf planner agent, this information must be forwarded to the appropriate ancestor agents so that they can balance their work_motion record. Second, in the case of work which is being redistributed it may happen that the sending cluster really does not have the needed work. In this case we require some mechanism which will allow all the planner agents affected by this discrepancy to correctly balance their records.

The first problem is resolved by the pmd_sent_or_rec field contained in the planner agent record: pmd_sent_or_rec - the l'th entry in this array is the number of tasks which the l'th level ancestor agent moved and which has either been sent (negative) or received (positive) by a processor in the agent's cluster.

When a leaf planner agent receives (sends) a task interval at the request of a level l ancestor agent it either adds (subtracts) the number of tasks to (from) the l'th level entry in its sent_or_rec array. This array is sent to each ancestor agent via the collect statistics transaction. The j'th level ancestor agent uses the entries in this array starting from the j'th level up to the top level to correct its work_motion record.

The second problem is resolved by introducing the report distribution transaction. Whenever a request work distribution transaction is sent, a corresponding report distribution transaction must be received to acknowledge how much of the requested work has actually been sent. The processing of a request work distribution transaction by a nonleaf agent will result in one or more request work transactions being sent to its subagents. A cycle is created which contains the amount of work requested from each subagent together with the number of such agents. Each time a report distribution transaction is received from a subagent the number of tasks actually sent is compared with the number of tasks which were requested and the difference is used to correct the appropriate work_motion record entry. When all report distribution transactions have been received a report distribution transaction is sent to the agent which sent the request work distribution transaction.

**b. Choosing Intervals**

Once a request for work has been received by a leaf planner agent this agent must decide which intervals are to be used to satisfy this request. In the case of the distribution of new tasks there is no decision to be made. The new task interval which caused the load leveling operation is used to satisfy the request. In the case of the redistribution of tasks this decision is not so simple. There may be many task intervals on the processor and choosing a particular task interval to send has important performance consequences.

The request work distribution transaction contains the number of type T1, T2, and T3 tasks which should be sent. The general guidelines described above for the non-leaf agent's handling of a request work distribution transaction also apply to leaf agents. Thus, first in choosing task intervals to satisfy a request for work we consider only task intervals with unstarted tasks which do not require a fame raise operation to move, i.e., type T1 work. Second, we attempt to satisfy the request for tasks using the following task intervals: (1) those task intervals with tasks having the earliest generation and which will create further work; and (2) those task intervals which result in the least splitting of task intervals. If the request for type T2 and T3 tasks is still outstanding, then those task intervals with unstarted tasks which require a fame raise operation to move are considered, i.e., type T2 work. If the request for type T3 tasks is still outstanding, then we consider those task intervals with started tasks. We attempt to satisfy the request for type T3 tasks by using the following tasks: (1) those tasks which do not require a fame raise operation; and (2) those tasks which have the least number of archival pages. The started task which has the least number of archival pages is considered the least "established" and thus the best started task to move.

### c. Assigning Task Intervals to Clusters

Once the requested work has been sent, the planner agents making up the receiving cluster must distribute the work to those processors in the receiving cluster which require work. This is achieved by the top agent for the receiving cluster receiving the task intervals and appropriately distributing these task intervals to needy subclusters. This is, in general, an iterative process since the non-leaf agents for the needy subclusters must distribute the received task intervals to their needy subclusters.

The obvious approach to distributing task intervals involves distributing each received task interval, independent of the number of task intervals which will be received to fulfill the original work request to the sending cluster. This approach is not adequate since it will result in unnecessary splitting of task intervals. To avoid this problem the distribution is performed using the total amount of expected work rather than the work contained in the task interval which has been received. A brief description of the process follows.

The agent coordinating the load leveling operation knows the total work which is expected to be sent to the receiving cluster. This quantity is included in each request work distribution transaction resulting from a load leveling operation. The request work distribution transaction first visits the top agent of the receiving cluster and is then sent to the top agent for the sending cluster. This slight detour to the receiving cluster's agent allows the request work distribution to invoke a distribute work operation for the receiving cluster using the total expected work which is to be sent. A cycle record is created which contains the results of the distribute work operation and is used by the planner agent for the receiving cluster to distribute received task intervals. As the top agent for the receiving cluster receives task intervals it uses the information obtained from the work distribution operation to send each received task interval to the appropriate subclusters. At this time the agent knows how much each subcluster is expected to receive and includes this information with the task interval it sends. When a subagent receives the task interval it uses the expected amount of work to perform a distribute work operation. This process is continued until all the task intervals have been distributed. The top agent for the receiving cluster knows when all the task intervals have been received in response to a request work distribution transaction. This is a consequence of the top agent for the receiving cluster receiving a report distribution transaction from the top agent for the sending cluster once all the task intervals have been sent. This transaction contains the total number of tasks which have been sent. Once the report distribution transaction is received and all task intervals have been received, the top agent for the receiving cluster corrects its work_motion record, and sends a report distribution transaction to its parent planner agent.

A distribute work operation involves a planner agent deciding which subclusters should receive a portion of the expected work. The prescription used to perform this operation is the same as the prescription for the distribution of new tasks.

### d. Task Transfer

The task transfer component carries out the transfer of a given number of tasks contained in a specified task interval. The processor on which the task interval resides is called the sending processor. The cluster specified in the task distribution request is called the receiving cluster. This operation will generally result in several processors in the receiving cluster receiving subintervals of the original task interval. A processor which receives a task subinterval is called a receiving processor.

The transfer of a task nvolves sending information associated with the task interval interval. This information specifies the tasks making up the task interval and allows the tasks to be executed on the receiving processors. Once the tasks have completed execution, the task transfer component collects information concerning their execution and returns this information to the original sending processor. Thus, the task transfer component consists of two parts. First a part which sends the information associated with the tasks to the various processors. Second, a part which collects the information once the tasks have completed execution.

The transfer interval (TRI) transaction is used to move information concerning the tasks interval to the destination processors. The following information is contained in the TRI transaction:

```
        struct transfer_interval {
          int              tri_first_iter;
          int              tri_last_iter;
          int              tri_iden;
          address          tri_grts_stack;



          task_name        tri_taskname;
          bool             tri_new_tasks;
          int              tri_expected_work;
          int              tri_receiver_iden;
          /* other information which is omitted */
        };
```

where:

TRI_FIRST_ITER is the lowest iteration number of tasks in the interval;
TRI_LAST_ITER is the highest iteration number of tasks in the interval;
TRI_IDEN is the identifier of this transfer interval transaction;
TRI_GRTS_STACK is the virtual address at which the GRTS control stack for this task begins;
TRI_TASKNAME is the name of the interval's parent incarnation;
TRI_NEW_TASKS indicates whether the tasks are new;
TRI_EXPECTED_WORK is the total work in all transfer interval transactions being sent to the recipient agent in this load leveling operation.
TRI_RECEIVER_IDEN is the cycle identifier for the top-level agent for the receiving cluster in a task redistribution operation.

The report interval completion (RIC) transaction is used to move information concerning the completed tasks back to the processor which originally sent the tasks. The following information is contained in the RIC transaction:

```
        struct report_interval_completion {
          int              ric_tri_iden;
          task_name        ric_taskname;
          /* other information which is omitted */
        };
```

where:

RIC_TRI_IDEN is the cycle iden which is used to obtain the interval motion record.
RIC_TASKNAME is the name of the interval's parent incarnation.

Next, we describe how the information needed to move a task interval is sent to the receiving processors in the receiving cluster. The following sequence of steps carries out this operation:

(1) The information needed to move the tasks is used to form a transfer interval (TRI) transaction. An interval motion record is created and attached to the processor's leaf planner agent record. The TRI is sent to the top-level planner agent for the receiving cluster.
(2) Each non-leaf planner agent which receives the TRI transaction invokes a distribute task operation. For each subcluster which is to receive a portion of the task interval a TRI transaction is created and sent to the top-level planner agent for the subcluster. An interval motion record is created and attached to the non-leaf planner agent record.
(3) Each leaf planner agent which receives a TRI transaction creates a task interval record from the information contained in the TRI. It also creates an interval motion record, which is attached to the leaf planner agent record. The task interval is given to the task manager component. Steps 2 to 4 are described in more detail below.

The request for work is satisfied, or partially satisfied, by requesting that a fixed number of tasks contained in a particular task interval be sent to the processors contained in a receiving cluster. Note, this request does not specify which processors in the receiving cluster will actually receive tasks from the task subinterval to be moved.
We will refer to the task interval specified in the request as the initial task interval. This interval must have a corresponding interval motion record on the leaf planner agent's list of interval motion records. If the initial interval was created by a parent task on this processor the "imr_parent_task" field points to the parent task record. If the initial interval was moved to this processor the "imr_tri_source" field gives the name of the sending planner agent.
The task transfer component starts the transfer of the task interval by using the information contained in the initial task interval record to create a TRI transaction. This transaction is sent to the top-level planner agent for the receiving cluster.
When the TRI is sent the interval motion record corresponding to the initial task interval record is updated to reflect the fact that an additional task subinterval has been removed from the initial task interval. In order to keep track of the initial task interval a cycle record is created and inserted into the list of cycle records on the processor. This cycle record is given a unique (for the processor) identifier, which is also assigned to the TRI record field "tri_iden". The cycle points to the interval motion record for the initial task interval.
When a non-leaf planner agent receives a TRI transaction it first creates a interval motion record to keep track of the received task interval's motion. If the agent is the top-level agent for the receiving cluster, the tri_receiver_iden is used to locate the cycle record which contains the results of the distribution work operation performed during the request for work. Otherwise, it requests that a task distribution operation be performed. The result of this operation is the number of tasks which should be sent to each of the agent's subclusters.
For each TRI sent to a subagent, a cycle record is created and assigned a unique identifier. The cycle record points to the interval motion record which was created when the TRI was first processed and the identifier is sent in the TRI to the subagent.
When a leaf planner agent receives a TRI transaction it first creates a interval motion record to keep track of the task interval's motion. Then the information in the received TRI transaction is used to create a task interval record which represents the tasks which were received. The task interval is given to the task manager component.
Once the tasks complete, the information associated with their execution is sent to the initial task interval's processor. This is done using the information contained in the interval motion records which were created when the tasks were transferred. The following steps are carried out to complete the task transfer operation:

(1) When the last task in a task interval completes its execution, the task manager component informs the task transfer component that the interval is complete.
(2) Information concerning the task's execution is collected and used to create a report interval completion (RIC) transaction. The leaf planner agent's interval motion record is used to determine the planner agent which originally sent the task interval. The RIC is sent to this planner agent and the interval motion and task interval records are deleted.
(3) Each non-leaf planner agent which receives a RIC transaction updates its interval motion record corresponding to the task interval. If the task interval corresponding to this interval motion record has completed, then the information contained in the interval motion record is used to create a RIC transaction. This transaction sent to the planner agent which originally sent the task interval and the interval motion record is deleted.

(4) When a leaf planner agent receives a RIC it must reside on the original sending processor. The information contained in the RIC transaction is used to update the interval motion record for the original task interval.

Steps 2 to 4 will be described in more detail in the remainder of this section. The task manager component initiates the task interval completion process once all tasks in the task interval have completed their execution. All information concerning the completed tasks is stored in the task interval's interval motion record. This information is used to create a RIC transaction which is sent to the source agent specified in the interval motion record. The task interval and interval motion records are deleted.

When a non-leaf planner agent processes a received RIC transaction, it updates the information in the interval motion record which was originally created when the task interval was received. This interval motion record is located using the cycle record which points to it. The cycle record is uniquely determined by using the cycle identifier contained in the RIC transaction.

In particular, the "imr_dispensed" field is decremented. If this field is non-zero, then there are outstanding task intervals whose completion has not yet been reported. On the other hand, if this field is zero, then all tasks have completed and the information concerning their execution can be sent to the planner agent which originally sent the task interval. This agent is obtained from the interval motion record. In this case an RIC transaction is sent and the interval motion record is deleted.

The leaf agent receiving the RIC transaction must be the agent for the sending processor. The interval motion record for the initial task interval is located using the cycle record which was created when the tasks were first sent. The "imr_dispensed" field is decremented and the information contained in the RIC concerning the completed tasks is used to update the interval motion record information.

If there are still tasks which have not completed, then the task transfer operation for the initial task interval is complete. If all tasks in the task interval containing the initial interval have completed execution, then the completion of the task interval must be started. There are two cases depending on whether the task interval was created by a parent task or is a subinterval of a parent task's task interval. If the task interval was created by a parent task, then the parent task is informed by invoking the interval completion component. If the task interval was transferred to this processor from some other processor, then the information contained in the interval motion record is used to create a RIC transaction which is sent to the sending agent and the task interval and interval motion records are deleted.

### e. Started Task Motion

Before a started task is moved a destination processor must be determined. Also, it may be necessary to request a fame operation so that the started task's fame region contains the destination processor.

The locate destination processor transaction is responsible for determining a destination processor for the started task. It is sent from the started task's processor to the agent for the receiving cluster and travels down the planner tree attempting to find a processor without tasks to execute. Upon reaching a leaf planner agent it is sent back to the started task's processor. This transaction, also sets the appropriate work_motion records to indicate that a task is to be received. When processed by the started task's processor a deferred_task_move record may be created to keep track of the destination processor.

The move of the started task can be initiated by several kernel components. The processing of the locate destination processor can start the move, if all page creations have completed and no fame operations are required. If there are outstanding page creations, then it is the responsibility of the processing of the acknowledge page creations transaction to start the task move. If a fame operation is required, then the task is moved once the fame increase operation completes.

While the destination processor is being determined, and the outstanding page creations are being completed, the number of executable tasks on the processor may go to zero. If there are no executable tasks on the processor, then the move of the started task is canceled and the started task is restarted. This can be done by either the processing of the locate destination processor transaction or the acknowledge page creation transaction. The cancel task move transaction is responsible for correcting the information contained in the receiving cluster's planner agent records by adding 1 to the appropriate entry of the destination processor's leaf planner agent record's sent_or_rec array.

The movement of a started task from one processor to another is more involved than the movement of a task interval consisting of unstarted tasks. If there are several started tasks to be moved each started task is moved separately. This is due to the amount of information that must be transferred with each started task. The started task's task control block (tcb) must be moved to the destination processor. Furthermore, the started task's page creation and page equivalence tables must be moved. The movement of each started task uses two transactions. The transfer started interval transaction contains all the information not involving the task's tcb. The transfer started task transaction, contains the started task's tcb.

**f. Summary of Motion Subcomponent Design**

The request for work to satisfy a new work distribution is performed by the request new work transaction. This transaction is sent from the agent which is coordinating the new task distribution to the processor which has the new task interval. The processing of this transaction results in transfer interval transactions being sent to the appropriate agents for the subclusters which are to receive the new work. Each transfer interval transaction represents the movement of a subinterval of the new task interval. When an agent receives a subinterval it will in general subdivide the received subinterval into subintervals which are sent to needy subagents. In general this results in many leaf agents receiving subintervals of the original new task interval.

The request for work to satisfy a work redistribution is performed by the request work distribution transaction. In general a single request to a cluster will result in several leaf agents receiving request work distribution transactions. These leaf agents must choose appropriate task intervals to send to the receiving clusters in order to satisfy the work request. They also acknowledge the request work distribution transaction using the report distribution transaction which contains the amount of work sent. When an agent receives all the acknowledgments to the request work distribution transactions it sent, it sends a report distribution transaction to the agent which sent it the request for work. This continues until the coordinating planner agent for the work redistribution receives a report distribution transaction. The contents of this transaction allow each agent to "correct" its information concerning the movement of work within the domain.

When the receiving agent receives a task interval it distributes the task interval to those subclusters which require work. This is carried out by a distribute work operation. In the case of a redistribution of tasks the distribute work operation for the receiving clusters agent is initiated by the request work distribution transaction.

When a task interval is received via a transfer interval transaction an interval motion record is created for the task interval. The interval motion record keeps track of which agent sent the task interval and how many subintervals were created from the task interval. Thus, when a task interval on a particular processor completes its execution the information concerning the execution of the tasks making up the interval can be sent to the agent which originally sent the task interval. The report interval completion transaction is responsible for sending this information.

The move of a started task involves the planner, pager, and fame components of the kernel. The locate destination processor transaction determines a destination processor for the started task. Once a destination processor has been found and all page creations have completed, then any fame operation which is required is requested by the planner. If no fame operation is required the task is moved immediately. If a fame increase operation is required, the task is moved once the fame increase operation has completed. The move of a started task can be canceled, using the cancel move transaction.

**III. Pager**

**A. Overview**

The pager intercepts page faults from tasks, and determines which page is needed. A task may attempt to read from or write to any available address in its address space. If the task does not have the appropriate access to the page, this attempt will fail, causing a page fault. The framework signals the pager, which eventually gives the page (or access) to the task.

The pager also finds pages and delivers them to processors that need them. A page may be needed by a task, or by the pager itself for merging. The pager determines whether the requested page exists. If so, a copy of it is found, and sent to the requester's processor. If not, the pager either produces the page by merging, or finds a page from an ancestor task's address space. Finally, the page is sent to the requester. The page which is ultimately used to satisfy the page request is called the satisfying page.

The pager does merging, according to the memory model. The pager determines which pages can be or must be merged, and it does the actual (bit-wise) merging. Finally, the pager provides paging support for other components, such as the memory manager. It provides support for the page frame manager to delete or move pages, and it does paging for the channel support component.

As dictated by the memory model, each task runs in its own address space. The address spaces are large. Collectively, they are orders of magnitude greater than the amount of physical memory in the machine. It would be foolhardy to try to make complete copies of the address spaces when tasks start running.

Instead, the pager copies pages of the address space on demand. A page is not copied into a task's address space until the task stores into the page because before the store, the page is identical to the parent task's page (or possibly some further ancestor's page). Code pages and preinitialized data pages belong to the primal task, and are loaded before the program starts running.

To minimize "dead" time between the completion of the PARDO, and the beginning of the next PARDO, page merging is done then, provided that the pager knows which pages can be merged. This is achieved, when a task completes, by having the planner inform the pager. The pager notes that all of the task's pages, plus pages of its descendants, can be merged. This background page merging continues whenever some processors have no tasks ready to run.

The architecture allows a parent task to resume execution before its address space is fully merged. When a task needs a page which requires merging, that merging takes priority over other pager activities. We call this demand merging. Because a task may resume execution before its address space is merged, we distinguish pages in the old address space from pages in the new by incarnation numbers.

In addition to the usual concerns about efficiency, parallel computers have an additional one: scalability. The system must continue to behave well as the domain grows. This generally means that the frequency of each pager activity, times the effort expended performing it, should grow proportionately with the domain size, or slower. However, a growth rate of $P * \log(P)$ is considered acceptable.

To accomplish this, management trees and fame constrain activities inside small clusters whenever possible. We use a different management tree for each page number. The number of the page is the number of the tree.

The page search is perhaps the most common activity of the pager. Because of deferred merging and page copying, a page search must not only find the needed page, it must also determine whether merging has to be done and which ancestor task's page (if any) is to be used.

To determine whether merging is needed for a task's page, the pager checks for descendants of previous incarnations of the task; these descendants might have stored into the page. If no page was created by this task or any descendant task from any incarnation, then an ancestor task's page is used. The pager then must determine which ancestor (if any) most recently stored into the page.

These searches through previous incarnations and ancestors must be done with as little transaction traffic as possible. In our embodiment, pages with the same page number but for different tasks use the same *management tree*. As the search for a page progresses, the pager finds records of the various tasks' pages on the same processor where it deduces that they are needed.

The various pager activities can consume a lot of processor time. Often, other activities must wait for the pager to finish its work. It is therefore important that pager work be distributed evenly throughout the domain.

We divide pager work among a large number of management trees by using a different page management tree for each page number. Unfortunately, even this is not sufficient; certain page numbers (stack frames and code pages) tend to be used much more than others.

Fame is used to further distribute pager work. Records for a task's page are kept at or below the fame-level node for that task, so merging and page searches for a page do not happen outside of its fame cluster. Thus, tasks with different fame clusters use different sets of processors to do the pager work.

Figures 5a-5b illustrate the creation of pages and their subsequent merging. In Figure 5a, page P2 is created. The board node for the appropriate board, in this case the second board, is informed and head task page and merging page records are built. These records are built in a manner which is described in further detail below.

Figure 5b illustrates that since the page is created at a head node, a merging record for the page P is built and pointer to the head node is inserted as shown by step 3 in Figure 5b. Next, a page creation message (designated 4) is sent to the supernode, and in response the supernode builds a head merging record 5 at the cage node. A subnode pointer from the supernode to the message sender is inserted.

Figures 5c-5f illustrate the construction of a merging tree after the creation of pages P11 and P12. Assume that pages P11 and P12 are created at about the same time. Head node records for the task and merging pages are built at their respective head nodes, as shown in Figures 5c and 5d. Next, as shown in Figure 5e, merging records for head node P1 are built at leaf nodes and connected to the head node records for P11 and P12. This is illustrated by the step designated 3 in Figure 5e. A page creation message 4 for node P1 is sent to the supernode from each of the head nodes.

Assume that the message from the P11 head node arrives first. In this case, the supernode builds a head merging record 5 for node P1 at the left-hand board node. This merging records points to the first leaf node. A merging record for P is also built there and connected to the P1 record. The message continues upward extending the merging tree for node P.

Next, as also shown in Figure 5e, the second message 7 is processed. A pointer to the third node is inserted. Since P1's merging record is already present, processing for that message is now complete. Figure 5f illustrates that the first message 6 arrives at the head node for P. A pointer 8 is inserted to complete the process.

## B. Types of Pages

The pager has two kinds of pages: task pages and merging pages. Task pages are the normal type of page. They are read from and written to by tasks, and have a page name comprising a task name and a page number. The second type of page, termed merging pages, represent the merged result of one or more task pages. When a task completes, its task pages are changed to merging pages, are merged together, and are eventually changed to task pages of the parent task.

### 1. Task Pages

There are various kinds of task pages. The pager can determine the page type by examining the page number. Code pages contain the code of the program being run. These pages are loaded during program start-up, cannot be modified, and are never merged. Because these pages cannot change, they are associated with the first incarnation of the primal task. Code pages are in a separate address space from the rest of the task pages.

Pre-allocated task pages contain storage allocated at compile time. They are loaded during program start-up, and are associated with the primal task. Unlike code pages, they can be modified. One special type of pre-allocated page is the zeroed page, which is initialized to zero, but is not loaded. Rather, a list of all page numbers for zeroed pages is kept on each processor. These pages are constructed the first time they are referenced.

Function-local pages contain visible function-local data; that is, the function variables declared in the user's program. These data become undefined when the function returns. So, merging need not be done for a function-local page once all functions which have stack frames in that page have returned. Function-local pages are in the function-local storage partition.

Control store pages contain register variables (Gregs), plus hidden function-local data, such as return addresses and machine registers. As for function-local pages, a control store page need not be merged once all functions using the page have returned. Control store pages are in the control store partition.

Task pages may be available or unavailable to a task. The availability depends on the type of task page, and the address being referenced. A code page is "available" if the code page exists. A pre-allocated page is always available. A function-local page is available to a task if the referenced address is not less than the task's function stack pointer. A control store page is available to a task if the referenced address is not less than the task's control stack pointer.

For function-local and control store pages, the frame-work checks page availability, and passes the page fault to the kernel only if the page is available. Thus, the pager needs to check only program-global pages for availability. These are available just if the page exists, or is a zeroed page. Function-local and control store pages are handled the same for both merging and availability.

The pager frequently allows more that one copy of a task page to exist. This allows tasks on different processors to use data in the page simultaneously, and also helps simultaneous merging on different processors. Exactly one such copy has the archival attribute; this copy is called the archival page. In most cases this page may not be deleted. Other copies of the page are called ordinary; these pages may be deleted at will, for example, by the page frame manager.

Whenever a page's task is running, it is possible for a task to write into the task page. While a page is changeable, only one copy of the page may exist, the unique copy which is also archival. This guarantees that all copies of the page have identical contents.

At certain times, the pager requires that a task page remain on its processor, and that no other copies of the page are created. This page is said to be pinned.

### 2. Merging Pages

When a task page becomes mergeable, for example, after the completion of its task, one copy of the task page is changed to a merging page. The merging page is given the parent incarnation's name, and retains the same page number. Thus, there can be many versions of the same merging page, all with the same page name.

### C. Pager Data Structures

### 1. Distributed Data Structures

One of the most challenging aspects of a distributed operating system is maintenance of its distributed data structures. This is especially true for the pager, where activities that affect pager data structures may occur at any number of places at once. All of the kernel's synchronization capabilities are used to keep things under control: pager operations are made commutative, whenever possible; the pager relies heavily on transaction synchronization and transaction quiesce controls; and, transactions are often queued for later processing under a variety of circumstances.

The pager data structures themselves are continually changing. It is common for a records on one processor to be inconsistent with those on another; this happens whenever some event affects records on both, and one processor has yet to be informed.

### 2. Page Name Records

A page name is a combination of a task (incarnation) name and a page number. However, it is often more convenient to think of a page as being associated with a task, rather than just an incarnation of a task.

Attached to each iteration record (iterationT) is an AVL tree of page name records.

```
typedef struct pagenameTrec {
        struct pagenameTrec             *pnt_left;
        struct pagenameTrec             *pnt_right;
        struct iterationTrec            *pnt_itr;
        struct incarnationTrec          *pnt_inc;
        struct pager_agentTrec          *pnt_agents;
        struct taskpage_headerTrec      *pnt_taskpage;
        struct mergpage_headerTrec      *pnt_mergpage;
        card4T                           pnt_pagenum;
        int2T                            pnt_balance;
} pagenameT;
```

where:

"pnt_pagenum" is the page number, which is also the AVL key.
"pnt_left" and "pnt_right" are the left and right AVL pointers.
"pnt_balance" is the AVL balance indicator. Its values are "PNT_LEFT_HEAVY", "PNT_BALANCED", and "PNT_RIGHT_HEAVY".
"pnt_itr" points back to the iteration record.
"pnt_inc" points to one of the incarnation records for the iteration.
"pnt_agents" points to a list of pager agents (see the "Page trees" section).
"pnt_taskpage" points to a task page header for this page, if there is one.
"pnt_mergpage" points to a merging page header for this page, if there is one.

If there is a task page or merging page with this page name on the processor, the page name record points to the corresponding header(s), and "pnt_inc" points to the incarnation of the page(s). Otherwise, the incarnation is arbitrary.

### 3. Task and Merging Page Headers

For each task page on a processor, there is a task page header. This record is attached to a page name record, which specifies the name of the page.

All task page headers on a processor are linked onto a two-way list (the "task page list").

```
typedef struct taskpage_headerTrec (
        struct taskpage_headerTrec        *tkp_next;
        struct taskpage_headerTrec        *tkp_prev;
        struct pagenameTrec               *tkp_pagename;
        pageT                             *tkp_page;
        card4T                             tkp_time_stamp
        card4T                             tkp_motions;
        card2T                             tkp_iolock;
        int2T                              tkp_book_value;
        card2T                             tkp_use_count;
        bits16T                            tkp_flags; ) taskpage_headerT;
```

where:

"tkp_next" points to the next task page header on this processor, if any.
"tkp_prev" points to the previous task page header on hhis processor, if any.
"tkp_pagename" points to the page name record for this page.
"tkp_page" points to the task page copy itself.
"tkp_time_stamp" indicates when the page was last used. This is used by the page frame manager.
"tkp_motions" indicates how many times this page copy has moved from one processor to another.
"tkp_iolock" indicates how many channel support requests are using this header's page. The page must remain on its processor if this datum is non-zero.
"tkp_book_value" is a value assigned by the page frame manager.
"tkp_use_count" indicates how many times the page was used. This is used by the page frame manager.
"tkp_flags" indicates whether the page is archival, pinned, and G-pinned (pinned by the operating system), ("TKP_ARCHIVAL", "TKP_PINNED", "TKP_GPINNED").

For each set of merging pages with the same page name on a processor, there is a merging page header. This record is attached to a page name record, which specifies the name of the page. This header points to a list of merging page version records, which in turn point to the merging pages.

All merging page headers on a processor are linked onto a two-way list (the "merging page list").

```
typedef struct mergpage_headerTrec {
        struct mergpage_headerTrec      *mrp_next;
        struct mergpage_headerTrec      *mrp_prev;
        struct pagenameTrec             *mrp_pagename;
        struct mergpage_versionTrec     *mrp_versions;
        card2T                           mrp_version_quan;
} mergpage_headerT;


typedef struct mergpage_versionTrec {
        struct mergpage_versionTrec     *mrv_next;
        pageT                           *mrv_page;
} mergpage_versionT;
```

where:

"mrp_next" points to the next merging page header on his processor, if any.
"mrp_prev" points to the previous merging page header on this processor, if any.
"mrp_pagename" points to the page name record for this page.
"mrp-versions" points to a list of merging page version records.
"mrp_version_quan" indicates how many merging page version records are in the list.
"mrv_next" points to the next merging page version record, if any.
"mrv_page" points to a merging page.

### 4. Task-based Records

Part of the difficulty in finding a page is knowing which ancestor task's page to search for. To help decide this, the pager maintains a page generation table (PGT) for each task. There are two parts to the PGT. The first part, the page creation table (PCT), is an array of integers, indexed by page group, giving the generation of the last ancestor task to create a page in that group. The page group of a page is computed by masking off all but the last few bits. This table provides an upper bound for the actual generation number of the needed page. The second part, the page equivalence table (PET), contains the most recently used page numbers for which the page creation table contains inaccurate information.

```
typedef struct page_gener_tableTrec {
        struct page_create_tableTrec    pgt_create;
        struct page_equiv_tableTrec     pgt_equiv;
) page_gener_tableT;


typedef struct page_create_tableTrec {
        struct page_create_entryTrec    pct_entries[PAGE_CREATE_SIZE];
) page_create_tableT;


typedef struct page_create_entryTrec {



        card1T                          pce_gener;
        card1T                          pce_equiv_quan;
) page_create_entryT;


typedef struct page_equiv_tableTrec {
        struct page_equiv_entryTrec     pet_entries[PAGE_EQUIV_SIZE];
        card2T                          pet_next_seq;
) page_equiv_tableT;


typedef struct page_equiv_entryTrec {
        card4T                          pee_pagenum;
        card2T                          pee_gener;
        card2T                          pee_sequence;
) page_equiv_entryT;
```

where:

"pgt_create" is the PCT for this PGT.
"pgt_equiv" is the PET for this PGT.
"pct_entries" is an array of page creation entries, indexed by the low seven bits of the page number. Therefore, "PAGE_CREATE_SIZE" is 128.
"pce_gener" is the highest generation number of pages in this entry's page group.
"pce_equiv_quan" indicates how many page equivalence entries there are for this page group.
"pet_entries" is an array of page equivalence entries, in no particular order.
"pet_next_seq" is the next sequence number for this PET. It is copied to the "pee_sequence" field when a page equivalence entry is created or used.
"pee_pagenum" is the page number for this page equivalence entry.

"pee_gener" is the generation number for page number "pee_pagenum".

"pee_sequence" indicates how recently this page equivalence entry was used. When the PET is full and a new entry must be inserted, the least recently used entry is discarded.

## 5. Page Trees

The page tree, a type of management tree, is the fundamental data structure for the pager. There is one page tree for each page. As mentioned earlier, the agent mapping depends on the page number (and level and cluster), but on not the page's task name.

### a. Pager Agents

At each node of a page tree, there is a pager agent. These agents are the focal points for most pager activity in the machine. Such agents can be identified by the page number, an incarnation name, and a cluster name. At each node in a page tree, there may be a pager agent record.

These records contain information about the page, such as the locations of the task page copies, and how the page is to be merged with related pages. If there is a pager agent record at a node, the corresponding pager agent is said to be active. Otherwise, the agent is inactive.

Each page name record points to a non-empty list of pager agent records. The agent records are arranged in order, from lowest cluster level to highest, and within the same cluster level, from latest incarnation to earliest.

The agent list record is used to construct other lists of pager agents. The pager agent and agent list structures are given below.

### b. Head and Leaf Pager Agents

A pager agent for a level-zero cluster is called a leaf pager agent, or just a leaf agent. When a task completes, the pager eventually changes the task page into a merging page for the parent incarnation. If there is a merging page for the completed task, already converted and merged from further descendant task's pages and merged, this page is also converted to a parent incarnation's merging page.

The head pager agent records the existence of such pages. The head agent for a page is located at the page tree's fame level node. There is exactly one head agent for all "past, present, and future" incarnations of a page. When a fame operation happens to the page's task, the pager moves all head agents (for the various page numbers) to the new fame level nodes.

**c. Pager Agent and Agent List Structures**

```
typedef struct pager_agentTrec {
        struct  pager_agentTrec          *pga_next;
        struct  pager_agentTrec          *pga_prev;
        struct  node_nameTrec             pga_name;
        struct  incarnationTrec          *pga_inc;
        struct  pagenameTrec             *pga_pagename;
        struct  queued_actionTrec        *pga_queue;
        struct  page_requestTrec         *pga_current_requests;
        struct  page_requestTrec         *pga_later_requests;
        subnode_bitsT                     pga_subnodes;
        bits16T                           pga_status;
/* task page part */
        struct  agent_listTrec           *pga_child_task_page;
        card4T                            pga_location;
        card4T                            pga_motions;
        card4T                            pga_searchnum;
        subnode_bitsT                     pga_task_subnodes;
/* merging page part */
        struct  agent_listTrec           *pga_child_merg_page;
        subnode_bitsT                     pga_merg_subnodes;
} pager_agentT;
```

where:

"pga_next" is the next pager agent record for this page name record, if any.

"pga_prev" is the previous pager agent record for this page name record, if any.

"pga_name" contains the name of this agent's node.

"pga_inc" points to the incarnation record for the agent's incarnation. This contributes the incarnation name part of the agent name.

"pga_pagename" points back to the page name record for this agent.

"pga_queue" is a list of queued actions for this agent.

"pga_current_requests" is a list of page requests waiting at this agent for the agent's page.

"pga_later_requests is a list of page requests waiting at this agent for a later incarnation of the page.

"pga_subnodes" is a bit string indicating which subclusters are in the domain.

"pga_status" is set of bits indicating the status of the agent. Possible states are "PGA_HEAD", "PGA_NEW_HEAD", "PGA_TPAGE_EXISTS", "PGA_PARENT_PATH", "PGA_RENAMING", "PGA_LEAF_EXPECT", "PGA_HEAD_EXPECT", "PGA_DEMAND_MERGING", "PGA_MPAGE_TO_PARENT", "PGA_TPAGE_TO_PARENT", and "PGA_SEND_MPAGE". These are discussed throughout this document.

"pga_child_task_page" points to an list of pager agents records for child task pages which are equivalent to this agent's page. Such child task pages do not exist, but agent records for them are constructed during page searches.

"pga_location" contains the number of the processor which has the archival page, if one exists. This field is maintained and used only at the head agent.

"pga_motions" contains the number of times the archival page has moved from one processor to another. This datum is used to decide whether new location information is more current than "pga_location". This field is maintained and used only at the head agent.

"pga_searchnum" contains the agent's page search number, which is used to prevent deadlocks during page searches.

"pga_task_subnodes" indicates which subnodes have task-active agents.

"pga_child_merg_page" points to a list of pager agent records for child tasks' merging pages.

"pga_merg_subnodes" indicates which subnodes have merge-active agents.

```
typedef struct agent_listTrec {
        struct agent_listTrec   *agl_next;
        struct agent_listTrec   *agl_prev;
        struct pager_agentTrec  *agl_agent;
} agent_listT;
```

where:

"agl_next" points to the next agent list record in this list.
"agl_prev" points to the previous agent list record in this list.
"agl_agent" points to a pager agent record.

### d. Task-active and Merge-active Pager Agents

There are two parts to a pager agent record: the task page part, and the merging page part. These parts are nearly independent, and are combined mostly for convenience. If there is a record of the task page or a task page path, the agent is said to be task-active. This happens when any of the following conditions hold: (1) a task page copy is present on the processor (the page name record points to a task page header); (2) the agent has requested a copy of the task page (PGA_HEAD_EXPECT or PGA_LEAF_EXPECT is set); (3) there is a task-active agent at a subnode (pga_task_subnodes is not zero); (4) the agent is a head agent (PGA_HEAD is set) and the task page exists (PGA_TPAGE_EXISTS is set); (5) a child task page is found to be equivalent to this page (pga_child_task_page is not nil); or (6) this agent's page is equivalent to the parent page, and this agent is part of a page path (PGA_PARENT_PATH is set).

If there is a record of the merging page, the agent is merge-active. This happens when any of the following conditions hold: (1) some merging page versions are present on the processor (the page name record points to a merging page header); (2) the agent is a head agent (PGA_HEAD is set), which means that this agent will eventually deliver a merging page to this node's agent for the parent page; (3) there is a merge-active agent at a subnode which will deliver a merging page to this agent (pga_merg_subnodes is not zero); (4) there are some merge-active head agents for child pages at this node, which will deliver a merging page to this agent eventually (pga_child_merg_page is not nil); (5) merging is in process at this node in response to a page request (PGA_DEMAND_MERGING is set); or (6) the agent at the supernode expects to receive a merging page from this node (PGA_SEND_MPAGE is set).

If an agent is neither task-active nor merge-active, there is no need for the record to exist, so it is deleted. If the last pager agent attached to a page name record is deleted, the page name record is also deleted. A page name record is also created, if necessary, when a pager agent record is created. If a task page or a merging page is present on a processor, there must also be a pager agent record there.

### e. Page Paths

As mentioned above, active pager agent records are connected together in a variety of ways, with the "pga_child_task_page", "pga_task_subnodes", "pga_child_merg_page", and "pga_merg_subnodes" fields. These fields are collectively referred to as page pointers. There are task page pointers and merging page pointers. These page pointers form page paths from the head agent for a page to almost all copies of the task page, and to all head agents which will contribute merging pages.

Merging page paths are built when a task creates a page, and are removed when the created task page is changed to a merging page for the parent task. When a page is being merged, the pager can obtain all merging pages by following these paths, and it knows that merging is finished when all merging page paths are gone and there is only one merging page.

Because every ordinary task page copy is on a page path, one can perform operations on all such copies. These operations are often done by first bringing the archival copy to the head agent, then sending transactions from the head agent down all task page paths. To facilitate the first part, the head agent maintains a special page pointer, "pga_location", which contains the address of the processor where the archival page copy is currently located (see the "Task page motion" section).

Unfortunately, it is not the case that every ordinary task page is always on a page path, since it takes time to build these paths up to the head agent. It means that task page operations need full broadcasts, rather than just page path broadcasts. Deletion of all copies of a task page is an exception, since the pager can "re-delete" when the page path is built up to the fam-level node.

Task page paths are also used to find a nearby copy of a needed task page. Page searches generally go up the page tree until a task-active agent is found. This agent often has a page path which the search can follow, which will usually lead to a copy of the page. So, if there is a page copy in a cluster, the search need not go outside that cluster.

As with merging page paths, task page paths are also built when a page is created, either by a task, or when pages are loaded at the start of a run. The pager also builds task page paths when a pager search starts from a leaf agent. The path is complete when a task-active agent is found, and nothing needs to be done after the page arrives. This method immediately provides a path for other page searches to follow.

## D. Merging

There are four activities involved in merging. The pager takes note of which pages will contribute to merging when the pages are created. The pager recognizes when merging must be done to construct a needed page. The pager does the actual merging of pages, and cleans up the merging agent records. The pager also deletes old task pages that are not needed.

To do the actual merging, three pages must be present, two of which must be merging pages, and one, the reference page, can be either the task page or a merging page. The first merging page is compared bit by bit with the reference page; wherever the bits differ, the bit in the first merging page is copied into the second merging page. Finally, the first merging page is discarded. The second merging page is the result.

As long as there is more than one version of a merging page, such versions are called partially merged pages. This is also the case if there are still some descendant task pages, or tasks which can create those pages. Once all versions have been merged into one, it is called a fully merged page. Thus, a task page must be present when the last two merging page versions are merged. Once merging is done for a page, all copies of the task page are deleted, and the merging page can become a task page of a later incarnation, or an ancestor task's merging page.

If the task page does not exist, then that portion of the task's address space is identical to the parent task's address space. The parent task's page (or some further ancestor's page) is used to complete merging. In this case, the fully merged page does not replace any task page.

Multi-generation merging occurs when a task and some ancestor tasks complete before the first task's pages are merged. In this case, a fully merged page need not be changed to a task page of a later incarnation, but instead becomes a parent task's merging page. The task pages which it would have replaced are deleted as usual.

Further shortcuts are possible if multi-generation merging goes through a generation where the task page does not exist. A fully merged page can be changed as the parent task's merging page, as before. But, since the merging is done with respect to the same task page, and since such merging is an associative operation, even partially merged pages can be changed to parent task merging pages.

## 1. Pager Agent Record Fields Used for Merging

The following pager agent record fields and status bits are used for merging:

- "pga_pagename" points to the page name record for the page, which in turn points to the task page and merging page headers, if those pages are present on this processor.
- "pga_child_merg_page" points to an agent list of all agents for child merging pages at this node. Each such agent will eventually change a page into a merging page for this agent.

- "pga_merg_subnodes" indicates which subnodes have merge-active agents. Each such agent will eventually send a merging page to this agent.
- "PGA_HEAD" indicates that this is a head agent.

This agent recognizes when merging for its page completes, and can destroy obsolete task pages.

- "PGA_NEW_HEAD" indicates that this agent is a new head agent, which had requested its task page for merging, then moved to this node (during a fame operation).
- "PGA_TPAGE_EXISTS" indicates whether the task page exists (otherwise it is equivalent to an ancestor task's page).
- "PGA_RENAMING" indicates that pages for a prior incarnation are being renamed to this agent's incarnation.
- "PGA_HEAD_EXPECT" indicates that this (possibly former) head agent has requested its task page for merging.
- "PGA_DEMAND_MERGING" indicates that demand merging is in progress for this agent's page.
- "PGA_MPAGE_TO_PARENT" indicates that this head agent should change its fully merged page to a merging page for the parent task. If PGA_TPAGE_EXISTS is not set, partially merged pages may also be so changed.
- "PGA_TPAGE_TO_PARENT" indicates that this head agent should change its task page to a merging page for the parent task.
- "PGA_SEND_MPAGE" indicates that the agent at the supernode expects a merging page from this agent.

The head agent can tell that a page is fully merged when all child tasks have completed, "pga_child_merg_page" is nil, "pga_merg_subnodes" is zero, and there is exactly one merging page on this processor. Merging is not considered finished if the head agent has the PGA_NEW_HEAD or PGA_HEAD_EXPECT states. In either of these cases, the head agent has requested the task page for merging. The last activity for merging is to delete the page tree; if there is an outstanding page request, it might never find the page. So, merging does not finish until the requested page arrives. Thus, an agent expects merging pages if "pga_child_merg_page" is not nil or if "pga_merg_subnodes" is not zero.

### 2. Page Creation

When a task first writes into a page, whether through a store instruction or by some other means, the pager takes note that the task page exists, and that it will eventually be merged to form an ancestor task's page. So, when task page P is created, all ancestor merging pages are implicitly created.

Until all paths are built, the pager cannot correctly merge ancestor pages, nor can it successfully search for the page. To keep this from becoming a problem, the task which creates the page is prevented from completing, moving, or doing a PARDO until the page paths are built. Also, the page is pinned. Since the task cannot complete, merging need not be done for its page. Since the task and page cannot move, any reference to the page must come from "this" processor, and a local page search will find the page. And, since no PARDO is possible, no child task can reference the page from elsewhere.

When the paths are built, an acknowledgment is sent to the leaf agent for the created page. Therefore, page creation is a cycle. Started task records contain a page creation counter which is incremented for each page creation, and decremented for each acknowledgment. The task may PARDO, move, or complete when this counter is zero.

Page creations also occur during program load. For each loaded page, the domain management component calls a pager routine to build the page tree for a primal page. All such calls are made before the primal task starts running, so there is no danger of letting the task complete or PARDO too soon. Page creation begins on the processor where the page is initially stored. This is usually not the processor which has the started task record; instead, an "init_dataT" record (a domain management structure) counts the page creations. When this value goes to zero, the pager calls a domain management routine.

### a. The Note-page-creation Transaction

The note-page-creation (NPC) transaction is used to build the page paths for a page creation. The NPC builds a task page path, starting from the page's processor, up to the page's fame level node. Task-active agent's are built at each node along this path, each with a subnode pointer to the cluster below. The agent at the fame node is given the head agent status, and the page location is stored there.

From this point, the merging paths for ancestor pages are created. A pager agent for the page is made merge-active (if not already so), and a child merging page pointer to the head agent for P is inserted. The NPC continues up the page tree, building a merging page path for the parent page. The parent page's fame node agent also gets the head agent status, and a path for the grandparent page is built from there. Path building continues until a merge-active pager agent is found, or until the primal page's head agent is built; then the acknowledgment is sent.

A non-head merge-active agent is given the PGA_SEND_MPAGE status to indicate that the supernode agent expects merging pages from that agent.

The NPC transaction is sequenced with upward page path transactions, and can be quiesced for fame operations.

**(i) NPC Structure**

```
        typedef struct note_page_creationTrec {
            card4T          npc_iden;
            bits16T         npc_flags;
                #define NPC_ANCESTOR 0x0001


                #define NPC_PAGELOAD 0x0002
            node_nameT      npc_generator;
        } note_page_creationT;
```

where:

"npc_iden" is the cycle identifier for this page creation.
"NPC_ANCESTOR" indicates whether a task page path or an ancestor page's merging page path is being built.
"NPC_PAGELOAD" indicates that this page creation is for a loaded page.
"npc_generator" is the node name of the leaf agent which started this page creation cycle.

The NPC transaction also has a page name part, contained in the transaction header's task and node name fields

**(ii) NPC Processing**

```
To create a page (task T, page P):
        remove the ancestor page from the tasks MMU (if present)
increment page creations for task T
            build leaf agent record for page P
            build cycle record
            pin the task page
            build NPC transaction:
                npc_iden := the cycle number
                npc_flags := 0
                npc_generator := the leaf node's name
                tra_inc -> the page's incarnation record
                tra_sender := the leaf node's name
                tra_receiver := the leaf node's name
            process NPC at leaf node


    To load a page (page P):
            increment page creations in "init_dataT" record
            build leaf agent record for page P
            build cycle record
            pin the task page
```

```
build NPC transaction:
        npc_iden :- the cycle number
        npc_flags :- NPC_PAGELOAD
        npc_generator :- the leaf node's name
        tra_inc -> the page's incarnation record
        tra_sender :- the leaf node's name
        tra_receiver :- the leaf node's name
process NPC at leaf node


Process NPC(page P, node N):
        note processing isn't done
        build (or find) pager agent record at node N (agent A) if
not at level zero
                if agent A has PGA_SEND_MPAGE or PGA_HEAD states
        note processing is done
                endif
                if building ancestor page's merging path
                        insert subnode merging page pointer to NPC sender
                else
                        insert subnode task page pointer to NPC sender
                endif
        endif
        while at fame level of P and processing isn't done
                set PGA_HEAD status for agent A
                if building task page path
                        store page location in agent record
                        set the page motions to zero
                        set the PGA_TPAGE_EXISTS status bit
                endif
                if page P is primal
                        note processing is done
                else
                        build (or find) node N agent record for P/ (agent B)
                        if agent B is merge-active
                                insert child merging page pointer to agent A
                                note processing is done
                        else
```

```
                    insert child merging page pointer to agent A
                    set NPC_ANCESTOR bit in NPC
                    set NPC page name to P/
                    agent A :- agent B
                endif
            endif
        endwhile
        if processing is done
                -- send acknowledgment to npc_generator
                build APC transaction
                send to npc_generator
                discard NPC transaction
        else
                if NPC_ANCESTOR bit is set
                        set PGA_SEND_MPAGE status in agent A
                endif
                send NPC to supernode
        endif
```

If a fame operation occurs while a page is being created, some of the agents created by the NPC may have moved, and paths may have been adjusted. The NPC transaction is also used to adjust merging page paths during fame operations. The NPC_MERGPAGE bit is used only by these fame operations.

**b. The Acknowledge-page-creation Transaction**

The acknowledge-page-creation (APC) transaction signals the completion of a page creation. When NPC processing is finished, an APC transaction is built and sent to the NPC generator. There, the page is unpinned, and the task's page creation count is decremented. If the counter is zero, the task is allowed to PARDO, move, or complete.

**(i) APC Structure**

```
typedef struct ack_page_creationTrec {
        card4T apc_npc_iden;
        bits16T apc_flags;
                #define APC_PAGELOAD 0x0001
} ack_page_creationT;
```

where:

"apc_npc_iden" is the identifier for this page creation cycle.
"APC_PAGELOAD" indicates that this page creation is for a loaded page.

**(ii) APC Processing**

```
ProcessAPC:
        find the cycle record
        unpin the page
        if this is a page load
                decrement page creation count in "init_dataT" record
                if the page creation count is zero
                        call domain management routine
                endif
        else
                decrement page creation count in started task record
                if the page creation count is zero
                        allow the task to finish, or
                        allow the task to do a eureka jump, or
                        allow the task to do a PARDO, or
                        allow the task to move
                endif
        endif
        delete the cycle record
        discard the APC transaction
```

### 3. Starting Merging

There are two situations when merging may begin permit-merging and demand-merging. First, once a page's task has completed, and merging for all descendant pages is done, the task page can be changed to a merging page. The permit-merging transaction is used to start background merging. Second, when a task resumes execution and references a page which some child tasks have modified, that page must be merged. The force-merging operation is used to start demand merging.

#### a. The Permit-merging Transaction

The permit-merging (PEM) transaction is used to signal the completion of a task. When a task completes, the PEM is broadcast throughout the task's fame region to ensure that the PEM will reach every head agent for the task's pages. The management tree used for the broadcast is arbitrary. So, a random tree number is chosen for each PEM broadcast. This helps to distribute the kernel work. When a PEM transaction reaches a leaf node, the pager looks for all head agents for the task's pages on that node's processor, and merging is started at each such agent.

#### (i) PEM Structure

The PEM transaction has only a task name part, contained in the transaction header.

#### (ii) PEM Structure

```
On task completion:
        build PEM transaction
        pick random management tree number
        fill in sender field of transaction:
                agn_pagenum: random tree number
                agn_type: pager
                agn_level: 0
                agn_cluster: this processor
        send transaction to fame level of task


        ProcessPEM(task T, node N):
                if N is not a leaf node
```

```
        send transaction to subnodes
    else
        build list of head agents on this processor for task T's
pages
        discard PEM transaction
        for each such agent A
            if there are merging pages
                if A's merging is finished
                    change the merging page to a parent merging
                        page
                    delete the page tree for A's page
                else
                    set the PGA_MPAGE_TO_PARENT status bit
                    (change merging page to parent merging
                        page)
                endif
            else if the agent has requested the task page
                -- the agent is already merging; do nothing
            else if the task page is on this processor
                change the task page to a parent merging page
                delete the page tree for A's page
            else
                -- the task page exists, but is not here
                request the task page
                set the PGA_TPAGE_TO_PARENT status bit
                    (change task page to parent merging page)
            endif
        endfor
    endif
```

## b. The Force-merging Operation

When the pager finds that a requested page must be merged, the force-merging operation is started from the page's head agent. This involves four steps:

(1) The pager sends request-merging (RQM) transactions to each merge-active subnode (pga_merg_subnodes).
(2) The pager does a force-merging operation recursively on each child merging page's agent (pga_child_merge_page).
(3) The pager merges all present merging page versions.
(4) Finally, if a task page copy is not present, the pager determines whether it will be needed to finish merging, and if so, requests it.

When force-merging is performed for the first time, the "PGA_DEMAND_MERGING" bit of "pga_status" is set. This prevents subsequent invocations.

The recursion mentioned above might be too deep to fit on the stack, so the "stack frames" are placed in heap-allocated records. Two stacks are used. The first stack stores pointers to agent records for which force-merging will be done. These are pushed onto this stack in step two, above. Once force-merging has finished processing an agent record, it is pushed onto the second stack. This allows the agent records to be processed in reverse order for steps three and four.

**(i) Force-merging Processing**

```
Force-merging (agent A):
        if force-merging has already been performed for agent A and
                the agent expects post-images
            return, indicating merging has not completed for agent A
            quit
        endif


        initialize recursion stacks
        push agent A onto stack one
        while stack one isn't empty
            pop stack one -> agent B
            set PGA_DEMAND_MERGING status for B
            if there are merge-active agents at subnodes
                send request-merge transactions to these subnodes
            endif
```

```
            for each child merging page's agent C
                if there are merging pages for C
                    set PGA_MPAGE_TO_PARENT status for C
                    push C onto stack one
                else if C has requested a task page, or is a "new head" agent
                    set PGA_DEMAND_MERGING status for C
                else if C's task page is present
                    change the task page to a parent task's merging page
                    delete the page tree for C's page
                else
                    set PGA_DEMAND_MERGING and PGA_RENAME_PRE states for C
                    request the task page for merging
                endif
            endfor
            push agent B onto stack two
    endwhile

    assume merging will finish for agent A
    while stack two isn't empty
            pop stack two -> agent D
            merge all possible merging page versions together
            if there are merging pages at subnodes
                    note merging will not finish for agent A
                    if the task page is needed to finish merging
                    request the task page for merging
            endif
    else
            if the PGA_MPAGE_TO_PARENT status is set
                    if there is exactly one merging page, or if the
                        task page does not exist
                    change the merging page versions to merging
                        pages for the parent task
                    delete the page tree for D's page
            else
                    note merging will not finish for agent A
                    if the task page is needed to finish merging
                        request the task page for merging
```

```
                    endif
                endif
        else
            if agent D is a head agent
            if there is more than one merging page version
                    note merging will not finish for agent A
                    if the task page is needed to finish merging
                        request the task page for merging
                    endif
                else if agent D has requested the task page
                    note merging will not finish for agent A
                endif
            else if there are merging pages at subnodes
                    note merging will not finish for agent A
            else
                    send the merging page versions to the supernode
                    make agent D not merge-active
            endif
            endif
        endif
    endwhile
    return, indicating whether merging has finished for agent A
```

**(ii) RQM Structure**

The RQM transaction has only a page name part, contained in the transaction header's task and node name fields

**(iii) RQM Processing**

```
ProcessRQM(page P, node N):
        if P's pager agent at node N is merge-active
            if there are merge-active agents at subnodes, or there are
                child merging page agents at this node
                do force-merging for this agent
            else
                do perform-merging for this agent
        endif
```

**(iv) Force-merging/Fame Interactions**

When a fame increase is in progress, head pager agents may be moved from a node to a higher node. If an RQM transaction is being sent toward the lower node to effect demand merging, it will miss the head agent. To resolve this, when the head agent arrives at the higher node, the pager checks whether the parent page's agent at that node is demand merging, and if so, force-merging is invoked for the head agent.

**4. Continuing Merging**

During merging, the pages are merged together and moved from node to supernode, and the merging page paths are deleted. The perform-merging operation does the merging and cleans up the paths, while the merge-page (MPI) transaction moves the pages.

**a. The Perform-merging Operation**

When the pager finds that there is merging work to do at a node, the perform-merging operation is invoked. This can happen:

(1) when merging is started,
(2) when a requested task page arrives, to be changed to the parent task's merging page,
(3) when a requested task page arrives at a head agent, to be used as a reference page for merging,
(4) when a merging page arrives, to be merged with other pages, and
(5) when the page frame manager does merging to free space.

The perform-merging operation involves five outcomes.

(1) The pager may merge pages.
(2) The pager may change a task page to the parent task's merging page, and invoke perform-merging for the parent task's page.
(3) The pager may send merging pages to the supernode (MPI transaction), if the agent has finished merging and is not a head node.
(4) The pager may change merging pages to the parent task's merging pages and invoke perform-merging for the parent task's page, if the agent is a head agent and has finished merging, or if the agent is a head agent and the task page does not exist. This recursion is a tail recursion, so it is done iteratively.
(5) The pager may resume page searches which require the fully merged page, if there are any and merging is done. The page request activity will the fully merged page into a later incarnation's task page.

After perform-merging is done for an agent, if the agent is not active, the record is deleted. Perform-merging returns a boolean, indicating whether the "original" agent record (the parameter) has been deleted.

**(i) Perform-merging Processing**

```
Perform-merging (agent A):
        agent B := agent A
        deleted-flag := FALSE
        repeat
                recursing := FALSE
                if there are three or more pages for agent B
                        do merging
                endif
                if agent B does not expect merging pages
                        if agent B is non-head
                                send merging page(s) to supernode (MPI transaction)
                                make agent B not merge-active
                                if agent B is not active
```

```
                delete agent B's record
                if agent B is agent A
                        deleted-flag := TRUE
                endif
        endif
    else if PGA_MPAGE_TO_PARENT status is set for agent B
            if the page is fully merged or the task page
                does not exist
            change B's merging pages to the parent task's
                merging pages
            if demand merging or storage is low
                    find parent page's agent
                    recursing := TRUE
            endif
            delete the page tree for B's page
            if agent B is agent A
                    deleted-flag := TRUE
            endif
            agent B := parent page's agent (for recursion)
        else
                if the task page is needed to finish merging
                    request the task page for merging
                endif
        endif
    else if PGA_TPAGE_TO_PARENT status is set for agent B
        change B's task page to the parent task's
                merging page (the page must be present now)
        if demand merging or storage is low
                find parent page's agent
                recursing := TRUE
        endif
        delete the page tree for B's page
        if agent B is agent A
                deleted-flag := TRUE
        endif
        agent B := parent page's agent (for recursion)
    else if B's page is fully merged
```

```
                        resume page searches for later incarnations
                    else if B's task page is needed to finish merging
                            request the task page for merging
                    endif
                endif
            until recursing is FALSE
            if the reference page is an ancestor page and merging did not
                complete
                copy the reference page to make agent A's task page
                store page location in A's agent record
            endif
            return deleted-flag
```

**b. The Merge-page Transaction**

When the pager moves merging pages from a node to a supernode, it uses the merge-page (MPI) transaction. When the pages arrive, the perform-merging operation is used to continue merging.

**(i) MPI Structure**

```
    typedef struct merge_pageTrec {
        bits16T mpi_flags;
            #define MPI_NIL_IMAGE   0x0001
            #define MPI_LAST_IMAGE 0x0002
    } merge_pageT;


        -    "MPI_NIL_IMAGE" indicates that no merging page is included in
             this transaction.  This is used only in conjunction with fame
             operations.  See the "MPI/fame interactions" section.
        -    "MPI_LAST_IMAGE" indicates that this transaction contains the
             last merging page to be sent from a node to the supernode.


        The MPI transaction also has a page name part,
    contained in the transaction header's task and node name
    fields.
```

The MPI transaction also has a page name part, contained in the transaction header's task and node name fields.

## (ii) MPI Processing

```
SendMPI (agent A):
        if agent A has PGA_SEND_MPAGE status
                build an MPI transaction
                if there are merging pages
                        attach the merging pages to the MPI
                        delete the merging page records
                        if the pager agent is no longer merge-active
                                set the MPI_LAST_IMAGE flag
                                clear PGA_SEND_MPAGE status
                        endif
                        send the MPI to the supernode
                else
                        set MPI_NIL_IMAGE and MPI_LAST_IMAGE flags
                        send the MPI to the supernode
                endif
        else
                -- do nothing
        endif


ProcessMPI(page P, node N):
        find the pager agent for P at N
        if MPI_LAST_IMAGE is set
                delete the subnode merging pointer to the sender
                        (pga_merg_subnode)
        endif
        if MPI_NIL_IMAGE is not set
                insert the merging page versions
        endif
        if there are merging pages
                if the agent is demand merging
                        do perform-merging for the agent
                endif
        else if the agent isn't head and does not expect more merging
                pages
```

```
           send an MPI from the agent
           clear PGA_DEMAND_MERGING status
                   endif
```

### 5. Finishing Merging

As mentioned earlier, a head agent can determine when merging for a page completes. This is the case if all child tasks have completed, there are no merging page pointers to child page agents, there are no merging page pointers to agents at subnodes, there is only one merging page present, and the task page is not being requested. The first condition can be determined by seeing whether there is a record of a later incarnation of the page's task. If so, the page's task must have resumed execution, and therefore all arrives with a page request for the later incarnation's page.

When demand merging for a page finishes, the page is changed to a task page of the later incarnation. This is done by servicing the page requests that started demand merging. It may happen, however, that merging completes before the page is requested. In this case, the fully merged page is left as it is. Later, the page might by requested and changed to a later incarnation task page, or its task might complete, and the page will be changed to a parent task's merging page.

### a. Page Destruction and the Delete-pages Transaction

When merging for a page finishes, all copies of the task page are deleted. This is done by deleting the local page copy, and sending the delete-pages transaction down all task page subnode pointers to delete other copies.

This method may miss the archival copy, if the task page path is still being built. It may miss ordinary copies which were recently the archival copy, and for which the path is still being built. And finally, it may miss ordinary copies for which the paths were joined to other paths which are still being built.

The DPS transaction follows only the task page subnode pointers. When an agent with child task page pointers is encountered, the DPS waits there until those paths are changed to subnode pointers. (The NEQ transaction changes the pointers and dequeues the DPS.) If an agent has the "PGA_RENAMING" status, the DPS transaction is queued there, as well.

Page destruction activity starts from the head agent. When the transaction reaches (or starts from) an agent with child task page pointers, it is queued there until all child task page pointers are changed to subnode pointers. When the transaction reaches (or starts from, or is dequeued at) a non-leaf agent without child task page pointers, it is sent down all task page subnode pointers. The page copy is deleted, if present. The agent is made not task-active, and the agent record is deleted. When the transaction reaches (or starts from, or is dequeued at) a leaf agent without child task page pointers, the page copy is deleted, if present. The agent is made not task-active, and the agent record is deleted. The tranaction is discarded. Finally, when the transaction reaches a node without an active agent, nothing needs to be done. Task page paths can also be deleted from the bottom. The transaction is discarded.

The DPS broadcast may be repeated if some page copies are missed. This happens after a built-task-page-path (BPA) transaction is processed at a fame-level node where there is no active agent.

### (i) DPS Structure

The DPS transaction has only a page name part, contained in the transaction header's task and node name fields.

**(ii) DPS Processing**

To delete a page tree (from head agent A):
        clear PGA_HEAD status in A
        if A has no task page pointers (of either type) and does not

```
            have PGA_RENAMING status
        if a page copy is present
            delete it
        endif
        delete the agent record
    else
        build DPS transaction
        if agent A has child task page pointers or PGA_RENAMING
                status
            queue DPS at A (wait for NEQ)
        else
            send DPS to all task-active subnodes
            remove all task page subnode pointers
            delete the agent record
        endif
    endif
ProcessDPS(node N, page P):
    look for pager agent A for P at N
    if not found
        discard DPS transaction
    else
        if a page copy is present
            delete it
        endif
        if agent A has child task page pointers or PGA_RENAMING
                status
            queue DPS at A (wait for NEQ)
        else
            send DPS to all task-active subnodes
            remove all task page subnode pointers
            delete the agent record
        endif
    endif
```

### b. Page Renaming and the Rename-pages Transaction

Often, a page search will find a page for an old incarnation of a task, and no descendant of the page's task will have modified the page. In this case, the memory model states that the new incarnation's page is identical to that of the prior incarnation. To build the new incarnation's page, the pager takes one of the task page copies, and renames it to the new incarnation. Then, the other copies are deleted as usual.

But if the new incarnation's page is not unique, all of the page copies could be renamed, and page searches would find these pages sooner than if only one copy were produced. The rename-pages (RPS) transaction is used to do this renaming. It starts from the head agent, and follows all task page subnode pointers. When a page is found, it is renamed to the new incarnation, and retains its archival/ordinary status.

As with DPS, the RPS transaction can miss some of the page copies. This is not a problem, since a missed ordinary page will be deleted when the path reaches the head node (the pager assumes that a DPS transaction missed, and does "another" deletion). But, the pager must ensure that the archival page is renamed. So, the archival page is brought to the head agent, and is renamed on the spot before rename-pages transactions are sent out.

The RPS follows only the task page subnode pointers. When an agent with child task page pointers is encountered, the RPS waits there until those paths are changed to subnode pointers. Because it is possible for another page-rename or page-destruction operation to begin, when an RPS is queued, the new agent record is given the "PGA_RENAMING" status to indicates that new RPS or DPS transactions should wait at the new agent until the first RPS is finished. Page renaming activity starts from the head agent, once the archival copy is present. A rename-pages transaction is built and processed there.

When the transaction reaches (or starts from) an active agent, an agent record for the new incarnation is built (or found), and the old page is renamed, if present. If the old agent is a head agent, the new agent is given the "PGA_HEAD" status, and that status is removed from the old agent. The child merging page pointer from the parent page's agent is adjusted to point to the new agent record, and the location and existence of the archival page are stored in the new agent record. If the old agent has child task page pointers, the RPS is queued there until the child task page pointer is changed to a subnode pointer, and the new agent is given the "PGA_RENAMING" status. But if the old agent has no child task page pointers, its task page subnode pointers are "or'ed" into the new agent record, the RPS transaction is sent down all task page subnode pointers for the old agent, and the old agent record is deleted.

When the transaction is dequeued (at the old agent), the new agent record is found. The old agent's task page subnode pointers are "or'ed" into the new agent record, the RPS transaction is sent down all task page subnode pointers for the old agent, and the old agent record is deleted. The "PGA_RENAMING" status is removed from the new agent, and the pending DPS or RPS transactions is dequeued.

When the transaction reaches a node without an agent, it means that the old task page path is being deleted from the bottom. A delete-page-copy (DPR) transaction for the old page path has just gone through this node, and cannot clear the task page subnode pointer for the supernode's agent, because the rename happens first up there. So, the pager sends up a DPR for the new name. The RPS transaction is discarded.

### (i) RPS Structure

```
typedef struct rename_pagesTrec {
        card4T  rps_new_inc_num;
) rename_pagesT;


        -       "rps_new_inc_num" is the incarnation number of the last germ of
                the new page name.
```

The RPS transaction also has a page name part, contained in the transaction header's task and node name fields. This specifies the old page name.

**(ii) RPS Processing**

```
To rename all task page copies (from head agent A):
    if A has no task page pointers (of either type) and does not
        have PGA_RENAMING status
        build the new incarnation's agent record (agent B)
        set PGA_HEAD status for B
        if the page is not primal
            change the parent agent's child merging page pointer
                for A to point to B
        endif
        store the page location in B's record
        rename the archival page
        delete agent A's record
    else
        build RPS transaction
        process RPS at A's node
    endif


ProcessRPS(node N, pages P and P≫):
    look for agent record for P at N (agent A)
    if A's record is not found
        send DPR transaction for P≫ to supernode
        discard RPS transaction
    else
        find or build agent record for P≫ at N (agent B)
        if A is a head agent
            set PGA_HEAD status for B
            clear PGA_HEAD status for A
            if the page is not primal
                change the parent agent's child merging page pointer
                    for A to point to B
            endif
            store the archival page's location in B's record
```

```
        endif
        if a task page P is present
            rename P to P>>
        endif
        if agent A has child task page pointers or PGA_RENAMING status
            queue the RPS at A (wait for NEQ)
            set PGA_RENAMING status for B
        else
            "or" A's task page subnode pointers into B's record
            send the RPS to all of A's task page subnode pointers
            delete agent A's record
        endif
    endif


ProcessRPS after dequeuing(agent A, new page P>> )
        find agent record for P>> at A's node (agent B)
        "or" A's task page subnode pointers into B's record
        send the RPS to all of A's task page subnode pointers
        delete agent A's record
        clear PGA_RENAMING status for B
        dequeue DPS or RPS transaction (if any) at B
```

**E. Task Page Motion and Deletion**

There are two situations when the pager moves a task page copy from one processor to another. First, a processor may need to free space, so the page frame manager chooses to do so by sending an archival task page copy away. Second, the page may be needed at a processor, by a task or to do merging or renaming.

When space is being freed, the page frame manager never moves ordinary task pages, but instead just deletes them. Thus, an ordinary page copy can move only to a processor which has requested the page.

When a task page (P) arrives at a processor, another page copy may already be present. This page may be for the same incarnation of the page's task, for a prior incarnation, or a later incarnation. Also, there may be merging pages for the same incarnation or a later incarnation. The pages that are already present control what is to be done with the page. The action taken by the processor will be as follows:

(1) If there are task or merging pages for a later incarnation, page P is discarded. In this case, page P must be either an archival page that was missed by a DPS broadcast, or an ordinary page that was missed by DPS or RPS broadcasts. Either way, page P cannot have been requested.

(2) If there is a task page copy for the same incarnation, page P is discarded. If page P was archival, the other page copy becomes archival.

(3) If there is only a merging page copy for the same incarnation, page P is inserted into the pager records on that processor: a task page header is built, and the page name record is made to point to the header.

(4) If there is a task page copy for a prior incarnation, that copy is discarded (and its path deleted), and page P is inserted into the pager records on the processor: the page name record is made to point to page P's incarnation, and the old page header is made to point to page P.

(5) If no page of any incarnation is present, page P is inserted into the pager records on that processor: task page header and page name records are built, and the page name record is made to point to page P's incarnation.

Also, when the task page arrives at a node, the agent is made task-active, and a task page path to that node is built.

When an archival page moves, its new location is reported to the page's head agent, with the locate-archival-page (LAP) transaction. Each archival page has a "page motion" count which is incremented every time the page moves. When the page moves around quickly, this datum allows the pager to determine whether new LAP information is more current than the previous LAP.

The LAP is always sent from the destination node, even though the source node "knows" where the page is going. This guarantees that the page arrives at its destination before the LAP arrives at the head agent. Therefore, page searches can assume that either the location information at the head agent is current, or a LAP transaction will arrive later with new information.

When a page copy is removed from a processor, the task page path leading to that copy is also deleted, with the delete-page-copy (DPR) transaction. This transaction goes up the page tree, deleting task page pointers, until a pager agent is found which remains task-active.

When a page copy is moved by the page frame manager, the transfer-archival-page (TAP) transaction is used. On arrival, if there is no task-active pager agent at the destination node, a task page path is built with the build-task-page-path (BPA) transaction. This transaction goes up the page tree, inserting task page pointers, until a pager agent is found which is already task-active.

When a page copy is moved to a requesting node, the transfer-requested-page (TPR) transaction is used.

## 1. The Delete-path Transaction

The delete-path (DPR) transaction is used to delete a task page path. When the DPR is processed at an agent, the task page pointer which points toward the sending subnode is removed. If the agent remains task-active, DPR processing is completed; otherwise it continues at the supernode.

### a. DPR Structure

The DPR transaction has only a page name part, contained in the transaction header's task and node name fields.

**b. DPR Processing**

```
To delete a task page copy (P):
        find the lowest task-active pager agent (A) for P
        free the page and task page header record
        set the page name record's task page header pointer to nil
        if agent A is no longer task-active
            build DPR transaction
            send DPR from A to A's supernode
            if A is not merge-active
                delete the agent record for A
            endif
        endif


ProcessDPR(node N, page P):
        find the pager agent record for page P at node N (agent A)
        if found
            remove the task page subnode pointer to the sender
            if agent A is still task-active
                discard the DPR transaction
            else
                send the DPR to the supernode
                if agent A is not merge-active
                    delete agent record A
                endif
            endif
        else
            discard the DPR transaction
        endif
```

**2. The Transfer-archival-page Transaction**

The transfer-archival-page (TAP) transaction is used to send an unrequested archival page copy from one processor to another. The page is deleted from the source processor, and the delete-path transaction may be sent from the source. At the destination processor, the page may be inserted, and more path-updating transactions may be generated.

**a. TAP Structure**

```
typedef struct transfer_archival_pageTrec {
        card4T  tap_motions;
} transfer_archival_pageT;
```

-       "tap_motions" is number of times that this archival page has moved, including this motion.

The TAP transaction also has a page name part, contained in the transaction header's task and node name fields.

**b. TAP Processing**

```
To insert a task page copy P:
        if there is a task page copy for a prior incarnation
            delete the old task page copy
        else if there is a task page copy for a later incarnation
            discard page copy P
        else
            if there is no page name record for P
                build one
            endif
            make the page name record point to page P's incarnation
            if there is no task page header for P
                build one, attach it to the page name record
            endif
            if page copy P is archival
                set the archival bit in the task page header
                store the page motions count
        endif
        if another copy of page P is present
                discard page copy P
```

```
        else
                attach page copy P to the task page header
                endif
        endif


To send an unrequested archival page (P) from processor S
                                        to processor D:
        increment the page's motion count
        build TAP transaction, attach page to TAP
        send TAP from leaf pager node on processor S
                to leaf pager node on processor D
        delete the local page copy


ProcessTAP(page P):
        find or build page name record for P
        if there is no page of either type for a later incarnation
                find the lowest task-active pager agent (A) for P
                if there is no such agent
                        build a leaf agent record for page P (agent A)
                endif
                note whether agent A is task-active
                insert page copy P (as above)
                if agent A wasn't task-active
                        send BPA transaction for P from A
                endif
                send page location information to the head agent
                if A is leaf-expecting
                        resume page searches for agent A's incarnation
                else if A is head-expecting and demand merging
                        do perform-merging for A
                endif
        endif
        discard TAP transaction
```

### 3. The Build-taskpage-path Transaction

The build-taskpage-path (BPA) transaction is used to construct a page path to a transferred archival page copy. The transaction is passed from subnode to supernode, building agent records and inserting task page subnode pointers until an agent is found which is already task-active.

If the transaction reaches the fame-level node, and finds no head agent for the page there, a DPS transaction is sent out to delete the page copies. This can only happen when a prior DPS or RPS broadcast missed the transferred page. See the "Page destruction" and "Page renaming" sections.

The BPA transaction is sequenced with upward page path operations, and can be quiesced for fame operations.

#### a. BPA Structure

The BPA transaction has only a page name part, contained in the transaction header's task and node name fields.

#### b. BPA Processing

```
find or build the pager agent record for P at node N (agent A)
note whether agent A is task-active
insert the sender's task page subnode pointer
if agent A was task-active
        discard the BPA transaction
else if this is the fame level of P
        discard the BPA transaction
        delete all task page copies
else
        send the BPA to the supernode
endif
```

### 4. The Locate-archival-page Transaction

The locate-archival-page (LAP) transaction is used to send page location information to the page's head agent.

#### a. LAP Structure

```
typedef struct locate_archival_pageTrec {
```

```
        card4T  lap_location;
        card4T  lap_motions;
    } locate_archival_pageT;
```

- "lap_location" contains the location (processor number) of the page.
- "lap_motions" indicates how many times the archival copy has moved.

The LAP transaction also has a page name part, contained in the transaction header's task and node name fields.

### b. LAP Processing

```
To send page location information to the head agent:
        if the head agent is on this processor
                find the head agent record
            .   if the page motions is greater than the head agent's
                        motions datum
                    store the page motions and location information
                endif
        else
                build LAP transaction
                send to head agent
        endif


ProcessLAP(node N, page P)
        if this is the fame level of page P
                find the head agent record
                if the page motions is greater than the head agent's
                        motions datum
                    store the page motions and location information
                endif
                discard LAP transaction
        else
                send the LAP to the head agent
        endif
```

### F. Page Searches

A page search is begun whenever a processor needs a task page. This can be because a task needs the page for reading or writing, or because the pager needs a page to finish merging.

### 1. Page Search Names

A page search involves several page names. First, the task's page name is the faulting task's name plus a page number. (If the page search is not due to a page fault, there is no task's page name.) Second, the requested page name is the page name associated with the pager agent which does the page request. This is either the task's page name, or some ancestor page name (found by a local page name search), or the name of the merging agent's page. Third, the satisfying page name is the name of the page which will ultimately be delivered to the requester. This is either the requested page name, or some ancestor page's name.

The page name is determined as follows: (1) if the last store into the page was from a parent task, then the satisfying page name is in the same generation. This page exists, but no page for any longer name exists; (2) if the last store was from a child task, then the satisfying page name is the parent, and merging must be done to construct the page. There is a record of the child task, unless some task has already caused merging to complete, in which case the page exists; (3) if no task has stored into the page, then there may have been a primal page which was loaded before the program started running; this is the satisfying page. If no such page was loaded, then there is no satisfying page; the satisfying name is the primal page's name. If such a page is requested and available to the task, a new page is built, belonging to the primal task. The page is filled with zeroes, if it is a zeroed page; otherwise its contents are arbitrary. If the page is not available, the task gets an addressing exception.

It is not generally possible to determine the satisfying page name from the information at the requesting processor. Thus, the searching page name is the name of the page for which the pager is currently searching. Initially, this name is identical to the requested page name, and changes as the page search encounters page equivalence information. Eventually, the searching page name matches the satisfying page name, but this generally is not known until the page itself is found or merging is begun.

## 2. Fame-level Page Searches

A fame-level search refers to a search at a page's fame level node for a record of a head agent for a prior incarnation of the page. When a page is created, the existence of that page is noted at the fame level node of the page. By examining the records at that node, the pager can determine whether the page exists, and if so, whether merging needs to be done. More specifically: (1) if there is a head pager agent for the page in question with the "PGA_TPAGE_EXISTS" status, then that page exists, and is the satisfying page; (2) if there is a merge-active head agent for a prior incarnation of the page, demand merging for the page is begun. If merging completes immediately, the pager changes the fully-merged page to a task page for the searching name's incarnation. This page is the satisfying page. If merging does not complete immediately, the page search continues when merging does complete; (3) if there is a task-active agent for a prior incarnation, the task page is renamed to the present incarnation. If the archival page copy is present, the renaming is done immediately, and the renamed page is sent to the requesting agent. Otherwise, the archival page copy is brought to the head agent, using another page search. When the archival page arrives, the original page search continues; (4) and, if there is no head agent for any prior incarnation at the fame-level node, the searching page is equivalent to the parent task's page; (5) if there is no head agent and the searching page is primal, then there is no page at all.

The pseudo-code for fame level page searches is set forth below:

```
To do a fame-level search (node N, page P):
    for each pager agent record (A) at node N for any page P<<
        -- These records are on a pagenameT's agent list;
        -- only one can be head.  If there are other, non-head
        -- agents, they are "being deleted".
        if the agent is a head agent (PGA_HEAD status)
            return agent A
        endif
    endfor
    return, indicating no fame-level agent is found


To do fame-level processing at agent A for page P<< :
    -- P is the searching page name
    if agent A knows of merging pages
        do force-merging for agent A
        if merging completes
            build head pager agent for P -> agent B
            if P is not primal
                change the parent agent's child merging page
                    pointer for A to point to B
            endif
            change the fully-merged page into a task page for P
            resume later page searches
            delete the page tree for P<<
            store page location information in P's agent
            return, indicating page is merged
        else
            return, indicating merging in progress
        endif
    else if agent A is HEAD_EXPECTING
        -- can't let merging complete yet
        return, indicating merging in progress
    else
        if the requested page is unique
```

```
          if a task page copy is present (P<<)
              build head pager agent for P -> agent B
              if P is not primal
                  change the parent agent's child merging page
                      pointer for A to point to B
                  endif
                  rename the task page to the archival page P
                  delete the page tree for P<<
                  return, indicating page is merged
              else
                  request the archival page P<<
                  return, indicating merging in progress
              endif
          else
              if the archival page is present
                  rename all page copies to P
                  return, indicating page is merged
              else
                  request the archival page P<<
                  return, indicating merging in progress
              endif
          endif
      endif
```

### 3. Pager Agent Record Fields Used for Page Searches

The following pager agent record fields and status bits are used for page searches:

- "pga_queue" points to a list of queued action records. These include queued request-task-page transactions, plus a few other kinds.
- "pga_requests" points to a list of page request records for the agent's page or for later incarnations of the page.
- "pga_child_task_page" points to an agent list of agents for equivalent child task pages at this node.
- "pga_task_subnodes" indicates which subnodes have task-active agents.
- "PGA_NEW_HEAD" indicates that this agent is a new head agent, which had requested its task page for merging, then moved to this node (during a fame operation).
- "PGA_TPAGE_EXISTS" indicates that the task page exists (otherwise it is equivalent to an ancestor task's page). This flag is valid only for head agents.
- "PGA_PARENT_PATH" indicates that this agent's page is equivalent to the parent task's page. As a page search encounters equivalence information, this status bit and the "pga_child_task_page" field are used to connect page paths for equivalent task pages.
- "PGA_LEAF_EXPECT" indicates that this agent has requested its task page on behalf of a task.

- "PGA_HEAD_EXPECT" indicates that this (possibly former) head agent has requested a task page for merging.

When a page is requested, and the request is not serviced immediately, a page request record is built and attached to the requesting leaf pager agent record's "pga_requests" field. The page request record contains the incarnation pointer for the requesting page name. There is also a started task record pointer which identifies the task which has page faulted, or is doing I/O. And specifically for I/O page requests, the callback procedure pointer and parameter are stored here. Finally, the page request flags indicate whether this is a write or read request, and whether a page fault or a I/O request. Faults for code pages are read requests.

Page request records are also used for global page searches, when the search waits at an agent which expects the task page or will merge it. These records have a nil started task pointer, and have a pointer to the RPR transaction.

There are two ways for a task to access a page: with page faults, and with I/O. Therefore, it is possible to do two stores into a page asynchronously; however, there must not be two page creations for the same page. To prevent this, the pager keeps a list of all outstanding write requests, attached to the task's started task record. When a write request is received, it is checked against this list; if there is already another write request for the same page number, the new request is deferred until the first store occurs.

```
typedef page_requestTrec {

        struct page_requestTrec  *pgr_next;

        card4T                    pgr_pagenum;

        incarnationT             *pgr_inc;

        transactionT             *pgr_rprtrans;

        started_taskT            *pgr_stt;

        card4T                   (*pgr_callback)();

        card4T                    pgr_callparm;

        bits16T                   pgr_flags;

                #define PGR_WRITE_REQ     0x0001

                #define PGR_IO_REQ        0x0002

) page_requestT;
```

where:

"pgr_next" points to the next page request record for this pager agent.
"pgr_pagenum" is the page number for this page request.
"pgr_inc" points to the incarnation record for this page request.
"pgr_rprtrans" points to the RPR transaction, if this is a global page request.
"pgr_stt" points to the started task record, if this request record is for a page fault or an I/O request, and is nil otherwise.
"pgr_callback" points to the I/O callback routine, for I/O requests.
"pgr_callparm" is the callback parameter, for I/O requests.
"pgr_flags" indicates the source and access type, for local page requests. "PGR_WRITE_REQ" indicates a write request if set, and read otherwise; "PGR_IO_REQ" indicates an I/O request if set, and page fault otherwise.

**4. Beginning a Page Search**

To begin a page search, the pager needs a guarantee that the satisfying page, if it exists, will continue to exist while the search progresses, and will continue to be the satisfying page.

If the task page is needed for merging, the head agent record is given the "PGA_HEAD_EXPECT" status, indicating that a page search is in progress. Merging does not complete, and the page is not deleted until the page search completes and delivers the satisfying page.

If a task needs the page, the task is prevented from continuing or moving until the page search completes and delivers the page. The task cannot complete, either, so merging cannot complete for any future incarnation of an ancestor task (after which the page might have been deleted), nor can the satisfying task page be changed to a merging page.

### a. Page Faults and Local Page Searches

There are two kinds of page faults. First, a task may read from or write to a page when that page is not given to the task. Secondly, in the case of an ancestor's page a task may write to a page when it has read access only. These faults are intercepted by the framework, which calls a pager routine, passing the task's TCB, the page number, and the access type.

When a task requests a code page, the name of the primal task (and the page number) compose the requested page name. When a task requests a data page, the requested page name is initially the task's page name. Then, the pager checks the task's page generation table and other local records.

The requested page name is shortened to the generation in the PCT, which gives an upper bound to the satisfying page name's generation. Then, if there are entries in the PET for this page group, the pager looks for a matching page number, and if found, uses the corresponding generation number.

After checking the page generation table, a local search is done. The pager looks at agent records to determine whether the requested page name can be shortened further, and looks for the page itself. There are a number of situations where the pager can deduce that the requested page is equivalent to the parent page. These are: (1) if an agent for the page with the "PGA_PARENT_PATH" status is found; (2) if a leaf head agent for the page without the "PGA_TPAGE_EXISTS" status is found; or (3) if the requested page name has processor fame, and there is no agent for any incarnation of the page.

If any of these conditions hold for a non-primal page, the requested page name is shortened by one germ, and the conditions are tested again. If the name is primal, then no page with that page number exists, while if the page is available to the task, new page is created.

The local search ends whenever: (1) a new page is created, (2) the satisfying page is found, (3) fame-level processing indicates that the page is merged, (4) fame-level processing indicates that merging is in progress, (5) an agent with the "PGA_LEAF_EXPECT" status is found, or (6) the pager cannot deduce that the requested page is equivalent to the parent page, and none of the above conditions applies.

In the first case, a head agent record for the primal task's page is built, the page is zero-filled and given to the task. In the second and third cases, the page is given to the task. In the fourth case, the merging fails to complete only because the reference page, equivalent to an ancestor page, is not present. After the reference page arrives and merging completes, the page is given to the task. But, if the page's fame is increased first, merging will not complete when the reference page arrives; instead, the local page search is repeated, and will cause a global search to be begun. In the fifth case, a page request record is built and attached to the expecting agent record ("PGA_REQUESTS"). The task continues when the page arrives at the conclusion of the other, global, page search. In the sixth case, a global page search is begun.

If a page is found, and the requested (also satisfying) page name is not of the same generation as the requesting task, the task may only read from the page. If the page request is for writing, the page is copied for the task, and a page creation is done.

**b. Page Request Processing**

```
To process a task's page request (task T, page number N):
        -- this is for both page faults and I/O requests
    if this is a write request
        if there is another write request for page N
            build write request record
            attach to started task record for T
            return, indicating page not present
        endif
    endif
    P := task's page name (T + N)
    get generation number from PCT
    shorten P to that generation
    if there are PET entries for P's page group
        search through the PET, shorten P if found
    endif
    do a local search for P -> agent A
        -- this routine may change the requested page name P
        -- P is now the requested page name
    if the page is present
        finish the page request
        return, indicating page is present
    else if the page is unavailable
        %%% page is unavailable
    else
        build page request record
        attach the page request record to A's PGA_REQUESTS list
```

```
        -- "repeat page request" is called, with the page
        -- request record, when a page arrives
    if this is a write request
            build write request record,
                attach to started task record for T
    endif
    return, indicating page not present
endif


To repeat a task's page request:
    -- the page request's incarnation is I
    -- the called may supply a task page header, PH
if PH is nil
    do a local search for page [I] -> agent A, page header PH
endif
if PH is non-nil
    if the request is a read
            finish the page request
    else -- write request
            for each write request for the page number (on started
                task record)
                finish the page request
                delete write request record
            endif
    endif
    delete page request record
else if the page is unavailable
    %%% page is unavailable
else
    attach page request record to A's PGA_REQUESTS list
            -- this routine is called again when a page arrives
endif
```

74

**c. Local Page Search Processing**

```
To do a local search (page name P):
    AGAIN := TRUE
    while P is non-primal and AGAIN is TRUE
```

```
AGAIN :- FALSE
if page P is present
        return page P
endif
look for task-active leaf pager agent for P
if an agent is found
        if the agent has PGA_PARENT_PATH status
                P :- P/
                AGAIN :- TRUE
        else if the agent is head and does not have
                        PGA_TPAGE_EXISTS status
                P :- P/
                AGAIN :- TRUE
        endif
else if P has processor fame
        do fame-level search for an agent
        if no agent is found
                P :- P/
                AGAIN :- TRUE
        endif
    endif
endwhile
if AGAIN is TRUE
        if page P is present
                return page P
        endif
        -- P is primal, and we haven't searched for its agent
        look for task-active leaf pager agent for P
        if no agent is found and P has processor fame
                -- uniprocessor domain
                do a fame-level search for an agent P<<
        endif
endif
if page P is present
        return agent for P, indicating page is present
else if P is primal, has processor fame, and no agent was found
        if the page is available to the task
```

```
                build new page records for P
                return agent for P, indicating page is present
        else
                return no agent, indicating unavailable page
        endif
    else if the agent is for P<<
        do fame-level processing
        if the page is merged
                return agent for P, indicating page is present
        else -- merging is in progress
                return merging agent, indicating merging in progress
        endif
    else if the agent (for P) is leaf-expecting
        return expecting agent, indicating global search in progress
    else
        start a global page search for P (2)
        return expecting agent, indicating global search in progress
    endif
```

**5. Global Page Searches and the Request-task-page Transaction**

When a task page is needed, and is not present on the processor, a global page search is begun. The request-task-page (RPR) transaction is used to do the search. It is sequenced with upward page path operations, and can be quiesced for fame operations.

**a. RPR Structure**

```
typedef struct request_task_pageTrec (
        card2T          rpr_search_gener;
        node_nameT      rpr_requester;
        card4T          rpr_iden;
        card4T          rpr_searchnum;
        card4T          rpr_archival_location;
        card4T          rpr_motions;
        pager_agentT    *rpr_sender;
        card2T          rpr_retry_level;



        card1T          rpr_search_type;
        card1T          rpr_sender_type;
        bits16T         rpr_flags;
            #define RPR_UNIQUE          0x0001
            #define RPR_LOCATION_KNOWN  0x0002
            #define RPR_ARCHIVAL_NEEDED 0x0004
    ) request_task_pageT;
```

where:

"rpr_search_gener" specifies the generation number of the searching page name, and is an upper bound on the generation of the satisfying page.

"rpr_requester" is the name of the requesting agent.

"rpr_iden" is the identifier for this RPR cycle.

"rpr_searchnum" is the requesting agent's page search number, explained later.

"rpr_archival_location" is a possible location of the archival page.

"RPR_LOCATION_KNOWN" (below) indicates whether this datum is valid.

"rpr_motions" is taken from the "pga_motions" field of the head agent record. It determines whether page location information has recently arrived at the head agent. "RPR_LOCATION_KNOWN" (below) indicates whether this datum is valid.

"rpr_sender" points to the sending pager agent's record, if the sender type is RPR_CHILD_PAGE_SENDER".

"rpr_retry_level" indicates which node level to go to if a path follow search fails.

"rpr_search_type" indicates which type of page search is happening. Possible values are "RPR_PATH_BUILD", "RPR_PATH_FIND", "RPR_PATH_FOLLOW", "RPR_PATH_FAIL", "RPR_ARCHIVAL", and "RPR_ARCHIVAL_FAIL".

"rpr_sender_type" indicates something about the pager agent which last sent the transaction. Possible values are "RPR_CHILD_PAGE_SENDER", "RPR_SUBNODE_SENDER", and "RPR_OTHER_SENDER".

"RPR_UNIQUE" indicates that the requested page is unique, if it exists.

"RPR_LOCATION_KNOWN" indicates that the "rpr_archival_location" and "rpr_motions" data are valid.

"RPR_ARCHIVAL_NEEDED" indicates that the archival page copy is to be found and delivered.

The RPR transaction also has a page name part, contained in the transaction header's task and node name fields. This page name, when shortened to the generation in "rpr_search_gener", is the searching page name.

During a page search, the pager may discover that the searching page is equivalent to a child task's page. When this happens, the pager sometimes lengthens the name in the RPR transaction tail to that of the child task, and continues the search. This does not affect the searching page name, however, since if the child page really is equivalent, the page doesnt exist. The "RPR_MIN_GENER" field indicates the generation of the searching page name. (This name-lengthening is done in hope of finding a suitable expecting agent for the child page. See "Ending a global page search".)

**b. Ending a Global Page Search**

A global page search ends whenever: (1) a new page is created, (2) a copy of the satisfying page is found, (3) fame-level processing indicates that the page is merged, (4) the page is determined to be unavailable, (5) fame-level processing indicates that merging is in progress, (6) an agent is found which expects the task page, at which the page search can wait.

In the first three cases, the page is delivered to the requester. In case four, a transaction indicating the unavailability is sent to the requester. In case five, the page search waits at the fame-level agent, which is the head agent for a prior incarnation of the page. The RPR is reprocessed when merging completes. In case six, the global page search waits, provided that no deadlock can occur. A page request record containing the RPR transaction is built and attached to the expecting agent ("PGA_REQUESTS").

To prevent deadlock, a page search number is stored in the pager agent's "pga_searchnum" field and the RPR's "rpr_searchnum" fields. When a global search is begun for a pager agent, an integer is generated, and stored in the agent record and the RPR. A global page search can wait at an expecting agent just if the RPR's page search number is greater than the agent's page search number. If the search cannot wait, it continues elsewhere.

Page search numbers are generated by taking thirty-two bits from the middle of the processor's clock. This seems to make the scheme efficient, since later searches often encounter expecting agents for earlier searches, and can wait here. When the archival page copy is needed, and an ordinary page is found, the search continues as though no page were found.

**c. Starting a Global Page Search**

The pager may start a global page search for these reasons: (1) a task page is needed at the head agent to be changed to the parent task's merging page; (2) a reference page is needed at the head agent to complete merging; (3) the archival page copy is needed at the head agent to begin page renaming; and (4) a task requests a page (either page fault or I/O) and the local search finds neither a page nor an expecting agent.

When a global search begins, the requesting agent is given either the "PGA_HEAD_EXPECT" status (in cases 1 to 3), or the "PGA_LEAF_EXPECT" status (in case 4). A cycle record is built, which points to the requesting agent. This is used to find the agent record when the page arrives. A request-task-page transaction is built, and the fields are set as follows:

- "rpr_search_gener" is the generation of the requested page name (which is the initial searching page name). For page faults and I/O requests, this is determined by the local page name search; for other page requests, it is the generation of the requesting agent's page.
- "rpr_requester" is the name of the requesting agent.
- "rpr_iden" is the identifier for the RPR cycle.
- "rpr_searchnum" is set by extracting thirty-two bits from the middle of the current clock. The same value is stored in the pager agent's "pga_searchnum" field. This field is used during the path follow part of the search.
- "rpr_archival_location" is set only if the search begins at the head agent, and the task page exists. The datum is taken from the head agent record, and the "RPR_LOCATION_KNOWN" flag is set. Otherwise, the flag is cleared.
- "rpr_motions" is set only if the search begins at the head agent, and the task page exists. The datum is taken from the head agent record, and the "RPR_LOCATION_KNOWN" flag is set.
- "rpr_sender" points to the requesting agent record.
- "rpr_retry_level" is set to zero.
- "rpr_search_type" is set to the initial search state, as discussed in the "Global page search states" section. For page faults, this is "RPR_PATH_BUILD"; if the archival page is needed, it is "RPR_ARCHIVAL_SEARCH". And for merging, if the page exists, it is "RPR_ARCHIVAL_SEARCH"; if the page doesn't exist, it is "RPR_PATH_BUILD".
- "RPR_UNIQUE" is set just if the requested page can be changed by the task. This can be the case only for page faults and I/O requests, when the requested page name is the task's page name.

For page faults and I/O requests, the task name in the transaction header is derived from the requested page name produced by the local page search. For other requests, the task name is derived from the requesting agent's page name.

Once the transaction is built, it is sent somewhere or processed. For page faults, the sender type is set to "RPR_SUBNODE_SENDER", and the RPR is sent to the supernode. (If the agent had processor fame, the local search would have done something different.) For other path-build requests, the searching page name is shortened by one germ (as below), the sender type is set to "RPR_CHILD_PAGE_SENDER", and the RPR is processed at the same node. And for archival searches, the sender type is set to "RPR_OTHER_SENDER", and the RPR is sent to the leaf node on the "rpr_archival_location" processor.

#### d. Global Page Search States

A global page search can be in any one of six states: path build, path find, path follow, path fail, archival, and archival fail.

#### (i) Path Build

When a global search begins from an agent which is not task-active, the pager immediately builds a page path from that node. During the path-build state, the RPR goes from node to supernode, building pager agent records and inserting task page pointers, until the pager finds a task-active agent record, or the fame level is reached. The "RPR_SENDER_TYPE" field indicates which type of pointer to insert; "RPR_SENDER" points to the "sending" agent, for child task page pointers.

When a task-active agent is found, the last task page pointer is inserted, and the path is complete. The search changes to the path find state. Hereafter, the "RPR_SENDER_TYPE" and "RPR_SENDER" fields are no longer needed.

When the fame level is reached, and there is no task-active agent for the searching page, the pager does a fame-level search. The result determines what to do next: (1) if the fame-level search indicates no agent found, the pager agent record is built, and a task page pointer to the RPR sender is inserted. Then, if the searching page name is primal, no page with that page number exists. If the page is available to the task, a head agent record for the primal page is built, and a new page is delivered to the requesting agent. If the primal page is unavailable, a "page unavailable" indication is sent to the requesting agent. But if the searching page name is not primal, the page name in the RPR is changed to the parent page's name ("rpr_search_gener" is decremented). Also, the new searching page isn't unique, its location is not known and the archival page copy isn't needed, so those bits are cleared. The RPR is given the child page sender type, and is reprocessed at the same node; (2) if fame-level processing indicates that the page is merged, a pager agent record for the page will have been built. The pager inserts a task page pointer to the sender, and delivers the page to the requesting agent; (3) if fame-level processing indicates merging is in progress, the page search waits at the merging agent. A page request record is built, and attached to the agent's "PGA_REQUESTS" list. The page search resumes, in the path build state, when merging completes or when a fame operation occurs.

#### (ii) After Path-build

If the search is not in path-build state, the pager first looks for the searching name's task page. If found, it is the satisfying page; it is delivered to the requester, and the search ends. But if the page is ordinary, and the archival page is needed, the search continues as though no page had been found.

#### (iii) Path Find and Path Follow

During the path find state, the pager looks for a suitable task-page-expecting agent, or a subnode pointer to follow. A "suitable" task-page-expecting agent is one where the "rpr_searchnum" is greater than the "pga_searchnum").

First, the pager checks whether the RPR page name's agent expects the task page. If not, the pager tries to find a child page's agent which is expecting. Failing that, if any of the child page agents themselves have child page pointers, the pager looks for an expecting grandchild page's agent. When a suitable task-page-expecting agent is found, the search waits at that agent for the page to arrive.

If no suitable expecting agent is found, the pager looks for a subnode pointer to follow. Again, it checks the RPR page name's agent, the child pages' agents, and the grandchild pages'agents, in that order. If there is more that one subnode pointer from a particular agent, the pager selects one randomly, giving equal probability to each.

If there is no task-active agent at the current node, the pager either does fame-level processing, or continues the page search at the supernode. At the fame level, processing is as for path build, but no agent records or path pointers are built. If the fame-level search finds no agent, the searching page name is shortened, and the pager looks again (the page name can't be primal).

The path follow state is similar to path find. Here, the search follows a task page path down to a page or an expecting leaf agent. Again, the pager "looks ahead" when there are child page pointers. (The only difference between path find and path follow is that for path follow, the "sender" is either a supernode or a parent page's agent, so no page path can lead to the sender.)

During the path follow state, a node can be reached which has no task-active agent, or which has an expecting agent at which the page search cannot wait. (The first situation can happen, for example, if a page copy is sent away or deleted. The supernode is told about it eventually; see the "Task page motion and deletion" section.) When this happens, the page search is retried: the state changes to path find, the RPR's retry level is increased, and the transaction is sent to the node at that level. If necessary, the task name in the header is changed to the least ancestral task whose fame cluster includes the retry node.

But if the retry level is greater than the searching page's fame level, the path search has failed: the search changes to the path fail state, the name is changed to the searching page's task, and the transaction is sent to that fame-level node.

The retry level feature is implemented to help distribute kernel work. Without it, failing searches would immediately change to the path fail state, and proceed to the fame-level node. If there are a lot of requests for the page, there may be many such failures, and the fame-level node would become overloaded with kernel work. This can still happen, even with the retry level, but not as often, and not so seriously.

### (iv) Path Fail

The path fail state is used when a path search (find and follow states) fails to find the page. It is needed to keep the search from cycling forever through a group of nodes. During this state, the page search goes to the searching page's fame level, and checks whether the page exists. If not, the search changes to the path find state, and continues as above. If the page does exist, the search changes to the archival search state.

### (v) Archival Search and Archival Fail

The archival search uses the page location information in the head agent record to find a copy of the page. It is used only when the search has determined that the searching page exists and is the satisfying page.

The RPR transaction is sent to the searching page's fame level node (unless already there). The page location and motion count data are copied from the head agent record into the RPR, and the "RPR_LOCATION_KNOWN" flag is set. Then, the transaction is sent to the archival copy's processor. Usually, a page copy is there; if not, the page search changes to the archival fail state, and goes back to the fame-level node.

In archival fail state, pager compares the RPR's motion count with the agent's motion count. If they differ, new location information has arrived; it is copied into the RPR, and the transaction is sent to the page again, in archival search state. If they are the same, no new information has arrived; the RPR is queued there until the information arrives. (See the "Task page motion and deletion, locate-archival-page" section).

**e. RPR Processing**

```
To process an RPR at the fame level (searching page P):
        do fame-level search for P
        if an agent for P<< is found
                do fame-level processing
                if page P is merged
                        if path-build mode
                                insert page pointer from P's agent to sender (as
                                below)
                        endif
                        deliver page P to requester
                        discard RPR transaction
                else -- merging is in progress
                        build page request record with RPR
                        attach to merging agent, PGA_REQUESTS list
                endif
                return, indicating processing is done (for now)
        else if P is primal
                if P is available
                        build a page name record and a head pager agent for P
                        if path-build mode
                                insert page pointer to sender (as below)
                        endif
                        send a new page to the requester
                else
                        send an unavailable indication to the requester
                endif
                discard RPR transaction
                return, indicating processing is done
        else
                return, indicating P is equivalent to P/
```

```
                    -- the RPR is processed again, immediately
            endif


To begin a global page search for searching page P at leaf node N:
        build leaf pager agent record for P
        give pager agent PGA_LEAF_EXPECT status
        build cycle record
        build RPR transaction
                search type := path build
                sender type := subnode
                send RPR to supernod
To begin a global page search for searching page P at fame-level agent A:
        give agent A PGA_HEAD_EXPECT status
        build cycle record
        build RPR transaction
        if the task page exists (PGA_TPAGE_EXISTS is set)
                search type := archival
                sender type := other
                send RPR to page location
        else
                shorten RPR page name (as below)
                if agent A has PGA_PARENT_PATH status
                        search type := path-find
                else
                        search type := path-build
                endif
                sender type := child page
                sender -> agent A
                process RPR at agent A's node
        endif


To insert page pointer to sender:
        if sender type is subnode
                "or" subnode bit into PGA_TASK_SUBNODES
        else -- sender type is child page
                -- PGA_PARENT_PATH must be clear in the sender
                insert a child task page pointer to the sender
```

```
                set PGA_PARENT_PATH in sender
        endif


To search for an expecting agent or a subnode pointer (page P, agent A):
        SUB-AGENT := "no agent"
        if agent A is expecting the task page, and its searchnum is less
                    than the RPR's searchnum
            return agent A, wait here indicator
        endif
        if agent A has subnode pointers not leading to the sender node
                SUB_AGENT := agent A
        endif
        for each child page agent C of agent A
                if agent C is expecting the task page, and its searchnum is
                            less than the RPR's searchnum
                    return agent C, wait here indicator
                endif
                if SUB-AGENT is "no agent" and agent C has subnode pointers
                            not leading to the sender node
                    SUB-AGENT := agent C
                endif
        endfor
        for each child page agent C of agent A
                for each child page agent GC of agent C
                        if agent C is expecting the task page, and its searchnum
                            is less than the RPR's searchnum
                          return agent GC, wait here indicator
                        endif
                        if SUB-AGENT is "no agent" and agent GC has subnode
                            pointers not leading to the sender node
                          SUB-AGENT := agent GC
                        endif
                endfor
        endfor
        if SUB-AGENT is "no agent"
            return no agent indicator
        else
```

```
                return agent SUB-AGENT, subnode indicator
            endif


To shorten the RPR page name (P):
        if the P's generation is equal to RPR_MIN_GENER
            decrement RPR_MIN_GENER
            NEW-NAME := TRUE
            clear RPR_UNIQUE, RPR_LOCATION_KNOWN, and
                RPR_ARCHIVAL_NEEEDED flags
        endif
        P := P/


To retry the path search (at node N):
        retry level := max(retry level + 1, node N level + 1)
        if the retry level is less or equal to the searching page's fame
        level
            search type := path-find
            while the retry level is greater than the RPR page name's fame
                P := P/
            endif
            send RPR to the retry level node
        else
            P := the searching page name
            search type := path-fail
            send RPR to the searching page's fame level node
        endif


ProcessRPR (RPR page name P, node N):
        find the searching page incarnation SI
          repeat
                if SI has changed and not in path-build state
                    look for the searching page
                    if found, and it is archival or the archival copy isn't
                    needed
                    deliver page to requester
                    discard RPR transaction
                    return
```

```
        endif
endif
REPROCESS :- FALSE


search for task-active pager agent for P at N -> agent A
if an agent is found
        if path-build state
                insert page pointer to sender (as above)
                search type :- path-find
                sender type :- other
        endif
        if path-find or path-follow state
                search for a suitable expecting agent or a subnode
                        pointer --> agent B   (as above)
                if a suitable expecting agent is found
                        build page request record with RPR
                        attach to agent B's PGA_REQUESTS list
                        return
                else if an agent with subnode pointers is found
                        search type :- path-follow
                        select one of B's task-active subnodes
                        send the RPR to the subnode
                        return
                endif
        endif
        -- there's no path to follow
        if path-find state
                if agent A has PGA_PARENT_PATH status
                        shorten RPR page name (as above)
                        REPROCESS :- TRUE
                        continue
                else if not at P's fame-level
                        send RPR to supernode
                        return
                else if P is the searching page name and that page
                                exists (PGA_TPAGE_EXISTS is set in A)
                        search type :- archival-search
```

```
        else if page P exists
                P := the searching page name
                continue
        else
                shorten RPR page name (as above)
                REPROCESS := TRUE
                continue
        endif
else if path-follow state
        retry the path search
        return
endif


if path-fail state
        if at fame level
                if the page exists (PGA_TPAGE_EXISTS is set)
                        search type := archival
                else
                        search type := path find
                        shorten the RPR page name
                        continue (2)
                endif
        else
                send RPR to fame level
                return
        endif
endif
if at fame level
        if archival-fail state, RPR_ARCHIVAL_KNOWN is set,
                and RPR_MOTIONS equals PGA_MOTIONS
            queue RPR on agent until a LAP transaction
                arrives or a fame increase occurs
            return
        endif
        copy motions and location data into RPR
        set RPR_ARCHIVAL_KNOWN flag
        if the page should be here (according to
```

```
                  RPR_ARCHIVAL_LOCATION)
               queue RPR on agent A until a LAP transaction
                  arrives or a fame increase occurs
            else
               search type := archival
               send RPR to page location
         endif
      else
         if RPR_ARCHIVAL_KNOWN is set and
                  the page should be here
            search type := archival-fail
         endif
         send RPR to fame-level
      endif
   else if node N is P's fame-level node
      process RPR at the fame level (as above)
      if P is equivalent to P/
         if path-build state
               build pager agent record for P -> agent A
               insert page pointer to sender (as above)
               sender type := child page
               sender := agent A
         endif
         shorten RPR page name (as above)
         REPROCESS := TRUE
      endif
   else
      if path-build state
            build pager agent record for P
            insert page pointer to sender (as above)
            sender type := subnode
            send RPR to supernode
      else if path-find state
            send RPR to supernode
      else if path-follow state
            retry the path search
      else
```

```
          if the page should be here
                  search type := archival-fail
          endif
          send RPR to fame level
        endif
     endif
   until REPROCESS is FALSE
```

**f. RPR/fame Interactions**

An page search may wait at the fame level node because merging is in progress. The search normally continues when merging completes. If a fame increase operation occurs, merging will complete at a different node.

An RPR transaction may be queued at the fame level node, waiting for information concerning the location of the archival page. The RPR is normally dequeued when a LAP transaction arrives. If a fame increase operation occurs, the LAP may be sent to the new fame-level node.

In either case, the event which causes the page search to resume occurs at the new fame-level node. Therefore, when a fame increase operation occurs, the page search resumes immediately; it will reach the new fame node eventually.

**6. Page Delivery**

When the satisfying page is found, it is sent to the processor which needs it. There are a few cases to consider: (1) if the page is unique, the found page copy must be archival. The sent page copy gets the archival status, and the local copy is deleted; (2) if the page is not unique, and the found page copy is ordinary, the sent page copy is also ordinary, and the local copy is kept; (3) if the page is not unique, and the found page copy is archival, the pager has a choice: either the sent copy or the kept copy may be archival. This implementation sends the archival status with the sent page, unless the found copy is on the same processor as the page's head agent.

To determine whether a task page is unique, the pager must know whether the page's task is running. This will be the case just if the satisfying page name's generation number is equal to the generation number of the task. If a page is needed for merging, it is not unique; because, if it is being changed into a merging page, the task has ended, and if it is needed as a reference page, the task has either ended, or resumed execution in a new incarnation. The RPR transaction has an "RPR_UNIQUE" bit which indicates uniqueness.

**a. The Transfer-requested-page Transaction**

Requested pages are sent to the requesting agent with the transfer-requested-page (TPR) transaction. The TPR transaction is also used to indicate that no satisfying page exists, and the requester should either create a new primal page, or signal unavailability to the requesting task.

**(i) TPR Structure**

```
typedef transfer_requested_pageTrec {
        card4T  tpr_rpr_iden;
        card4T  tpr_motions;
        bits16T tpr_flags;
} transfer_requested_pageT;
```

where:

"tpr_rpr_iden" is the identifier for the page search cycle which this TPR completes, taken from the RPR transaction.
"tpr_motions" contains the number of times this page has moved, if the page is archival (as with the TAP transaction).
"tpr_flags" indicates whether the satisfying page is an ancestor task's page (relative to the requested page's task). It also indicates whether the page copy is to be created at the destination (for new pages), whether the new page should be zero-filled, whether the page is archival, and whether the page is unavailable. The field values are "TPR_ANCESTOR", "TPR_NEW_PAGE", "TPR_ZFILL", "TPR_ARCHIVAL", and "TPR_UNAVAILABLE".

The TPR transaction also has a page name part, contained in the transaction header's task and node name fields. And, unless a new page or unavailability is indicated, there is a data page part.

**(ii) Page Delivery Processing**

```
To send page P to the requester:
        build TPR transaction
        attach page copy to TPR
        if page P is unique
                sent page is archival
                increment page motions
                delete local page copy
        else if page P is archival
                if P's head agent maps onto this processor
                        local copy remains archival
                        sent copy is ordinary
                else
                        local copy becomes ordinary
                        sent copy is archival
                        increment page motions
                endif
        else
                both copies are ordinary
        endif
        send TPR to requesting agent


To send a new page P to the requester:
        build TPR transaction
        set page motions to one
        set TPR_NEW_PAGE bit
        if page P is a zeroed page
                set TPR_ZFILL page
        endif
```

```
        send TPR to requesting agent


    To send unavailable indication to the requester:
        build TPR transaction
        set TPR_UNAVAILABLE bit
        send TPR to requesting agent
```

### (iii) TPR/fame Interactions

If a head agent requests a page for merging, and a fame increase operation occurs before the page arrives, the agent will have moved to the new fame level node, and the page will be delivered to the old fame level node. The move-page-to-head transaction is used to get move the page where it is needed.

### 7. Page Arrival

When a TPR transaction brings a page to an agent, the pager must decide what to do with the page. This depends on why the page was requested, and what has happened since. (1) The page is inserted into the local pager records unless another copy got there first. (2) Then the cycle record is found. This record points to the expecting agent for the requested page. If that page differs from the satisfying page, the task page path is re-built using the note-page-equivalence transaction. (3) If the page is archival, its new location is sent to the head agent. (4) If the satisfying page is not the requested page, the pager may resume current page searches for the satisfying page's agent. But if there are local page requests, at least one must be left, so that that agent's page search can complete before a task ends or stores into the page. (5) If there are page requests for the requesting agent's incarnation, they are resumed. (6) If the requesting agent has the "PGA_HEAD_EXPECT" status and is merge-active, merging is continued. If the agent is not a head agent any more, a fame increase must have happened, so the page is sent to the new head agent, using the move-page-to-head transaction.

When resuming page requests, there are a few situations to watch for: (1) It is possible for a page search to follow a child task page path, and arrive at an expecting agent after the equivalence has been broken by a page creation. In this case, the delivered page is not the satisfying page, and the page search must continue: the RPR is processed again. (2) When a TPR transaction delivers a page and completes a page search cycle, all waiting page searches for the current incarnation are resumed. But when a TAP transaction delivers a page, one local page fault is not. This prevents all tasks from completing while a page search is in progress. (3) The task page might be unique. The page request record indicates the generation number of the faulting task, either through the "pgr_stt" pointer, or the "rpr_search_gener" field of the RPR transaction. Only if that generation number is equal to the page's generation number, is the page unique.

**a. TPR Processing**

```
ProcessTPR(page P, node N):
        find the page search cycle record and requesting agent R
        if the requested page is not the satisfying page
                note page equivalence
        endif
        if new page
                create page copy P
                if zero-filled (TPR_ZFILL)
                        zero fill P
                endif
        endif
        insert page copy P
        if the page copy is archival
                send page location information to the head agent
        endif
        if the requested page is not the satisfying page
                resume current page searches for agent A
        endif
```

```
resume current page searches for agent R
if agent R is head-expecting
        if agent R is not a head agent (fame increase happened)
                send page P to the new head agent
                if agent R has PGA_SEND_MPAGE status
                        do perform-merging for R
                endif
        else if agent R knows of merging pages or is changing its
                        task page to a merging page of the parent task
                do perform-merging for R
        else
incarnation
                resume later page searches for agent R
        endif
    endif
    clear PGA_HEAD_EXPECT, PGA_LEAF_EXPECT states in agent R
    if agent R is no longer active
        delete the agent record
    endif
    delete the RPR cycle
    discard the TPR transaction


To resume current page searches for an agent (page P, agent R, KEEPONE):
        for each page request on agent R
        if the page request's incarnation differs from agent R's
                        incarnation
                put the page request back on the agent's list
        else if the request is a page fault or I/O request
                if there is a page and KEEPONE is FALSE
                        repeat the page request
                        delete the page request record
                else
                        put the page request back on the agent's list
                        KEEPONE := FALSE
                endif
        else
                if the RPR's MIN_GENER field is less than the page's
```

```
                       generation number
            detach the RPR from the page request record
            RPR page name :- the searching page name
                    (RPR_MIN_GENER)
            reprocess the RPR transaction
        else
            if the searching page is unique and the generations
                differ
                clear the "RPR_UNIQUE" flag
            endif
            deliver page P to the requester
            discard the RPR transaction
        endif
        delete the page request record
      endif
    endfor


To resume page searches for later incarnations (agent R):
    for each page request on agent R
        if the request is a local page request
            repeat the page request
        else
            delete the page request record, but keep the RPR
            reprocess the RPR
        endif
      endfor


To finish a page request (page P, for task T):
    if [T] isn't P (different names) and the page request is for
            writing
        copy P, producing [T]
        do page creation
        if task T is using page P
            task page P away from task T
        endif
    endif
    if the request is a page fault
```

```
        if [T] is P or the page was copied
                give task T write permission for the page
        else
                give task T read permission for the page
        endif
    else
        call-back channel support
    endif
```

### b. The Note-page-equivalence Transaction

When a satisfying page differs from the requested page, the task page path, which leads to an agent for the requested page, is changed to lead to the satisfying page. This is done with the note-page-equivalence (NEQ) transaction.

Before NEQ processing begins, the path leading to the requested page comprises both subnode pointers and child page pointers. The path starts from a task-active agent for the satisfying page, and leads to the requesting page's agent. The pager removes the old path (much like a DPR transaction), and builds the new (like a BPA).

The pager stops removing the old path when the child page pointer from a satisfying page's agent is deleted, or when after removing a task page pointer (either type) from a descendant page's agent, the agent is still task-active. (This happens when more than one task asks for the same page, and the requests build a page path for equivalent pages; the last NEQ transaction finishes deleting the old paths.)

When the pager removes the last child task page pointer from the satisfying page's agent, it dequeues pending DPS or RPS transactions.

The pager stops building the new path when it finds an agent for the satisfying page which is already task-active.

### (i) NEQ Structure

```
        struct note_page_equivalenceTrec {
            card2T neq_short_gener;
            bits16T neq_flags;
                    #define NEQ_NEW_PATH_DONE 0x0001
                    #define NEQ_OLD_PATH_GONE 0x0002
        } note_page_equivalenceT;
```

where:

"neq_short_gener" is the generation number of the satisfying page.
"NEQ_NEW_PATH_DONE" indicates that the new page path is constructed.
"NEQ_OLD_PATH_GONE" indicates that the old path is deleted, or that a later NEQ transaction will delete it.

The NEQ transaction also has a page name part, contained in the transaction header's task and agent name fields. This page name is the equivalent page.

**(ii) NEQ Processing**

```
To note page equivalence (equivalent agent E,
                          satisfying page P):
        look for a task-active agent for page P (agent B)
        if found
                note new path is already built
        else
                build an agent record for the page P
        endif
        agent A := agent E
        while deleting the old path and agent A has "PGA_PARENT_PATH"
        status
                find parent page's agent PA
                delete child task page pointer from PA to A
                if agent PA is agent B, and there are no more child task
                        page pointers from B
                    dequeue DPS/RPS transactions at agent B
                endif
                clear "PGA_PARENT_PATH" status in A
```

```
            if agent A isn't agent E and agent A isn't active
                 delete agent A's record
            endif
            agent A := agent PA
        endwhile
        if agent A isn't task-active
            if new path is already built
                 build NEQ transaction to delete old path to agent A
            else
                 build NEQ transaction to delete old path to agent A and
                      make new path
            endif
            send NEQ to supernode
        else
            .
            if new path isn't already built
                 build NEQ transaction to make new path to agent B
                 send NEQ to supernode
            endif
        endif


    ProcessNEQ (node N, equivalent page PE, satisfying page P):
        if a new path is being built
            look for a task-active agent for page P at node N (agent B)
            if found
                 note new path is already built (set "NEQ_NEW_PATH_DONE")
            else
                 build an agent record for the page P
            endif
            insert subnode task page pointer to NEQ sender
        endif
        if the old path is being removed
            find the agent for page PE at node N (agent  A)
            while agent A has no task page pointers and has the
                 "PGA_PARENT_PATH" status
               find parent page's agent PA
               shorten task name in transaction header
               delete child task page pointer from PA to A
```

```
            if agent PA is agent B, and there are no more child task
                page pointers from B
                dequeue DPS/RPS transactions at agent B
            endif
            clear "PGA_PARENT_PATH" status in A
            if agent A isn't active
                delete agent A's record
            endif
            agent A := agent PA
        endwhile
        if agent A is task-active
                set "PGA_OLD_PATH_GONE"
        endif
    endif
    if either the new path is being built or the old path is being
                deleted
        send NEQ to supernode
    else
        discard NEQ transaction
    endif
```

## G. Pager Fame Operations

A fame increase operation changes the fame cluster of a task, and all ancestor tasks with that same fame cluster, to a larger super-cluster. For every page of each task affected by the fame operation, there is a head agent at the fame level node. During a fame operation, the pager moves each such head agent to the new fame level node, and alters page paths accordingly. Because it would be impossible to rebuild the records if they were changing at the same time, before the pager begins its work, the fame manager does a transaction quiesce on the old fame region. No pager transaction which contains an affected task name (or a descendant's task name) is processed or sent out during the fame operation. Pager transactions used to perform the fame operation are excepted.

At the beginning of a fame operation, the fame manager calls a pager routine, indicating the kind of fame operation and the affected tasks. The call is made on every processor in the old fame cluster. On each such processor, the pager searches for head agents for affected pages, and moves each agent found. Page paths are updated as agents are being moved. After all agents are so moved, the pager calls the fame manager to signal that the pager part of the fame operation is done for that processor.

### 1. Fame Increase Operations

When the fame manager starts a pager fame increase on a processor, the pager finds every head pager agent for the affected task's pages on that processor. Those at the old fame level nodes are moved to the new fame level nodes. The agents are moved up the page tree, one level at a time, so that the page paths can be rebuilt.

When a fame increase affects more than one task, the agents for a particular page number are moved in increasing generation number sequence. That is, an agent for a page is moved before any agent for a descendant page.

A set of moving agents with a particular page number is called an moving agent group. Agents in different agent groups can be moved independently of each other.

When a head agent A moves from an node O (the old fame node) to a higher node N (the new fame node), merging records at node N, node O, and intermediate nodes (if any) are affected. If the head agent at node O has merging page pointers or merging page versions are present on the processor, the node remains merge-active, and a merging page path is built up to the node N. The agent at O gets the "PGA_SEND_MPAGE" status. If the agent has none of the above, the agent is made not merge-active, and the merging path is not built. Similarity, if the agent at node O is task-active, a task page path is built from node O to node N.

Merging records for the parent page may also be affected when a head agent moves. The parent page's agent has a child merging page pointer to the head agent, which gets deleted. Then, if the parent pager's agent is merge-active only because of the "PGA_SEND_MPAGE" status, the merging page path to the parent page is deleted.

Fame increase operations are likely to move a large number of agents. Rather than use one transaction for each agent, the pager tries to move multiple agents with a single ransaction. Whenever the receiving nodes for some agents map onto the same processor, the same transaction can be used to move those agents, provided that one transaction can contain all of the information. Agents in the same moving agent group can share one transaction all the way to the new fame node; agents in different groups will sometimes share a transaction, then split up at a higher level.

When a head agent reaches its destination, an acknowledgement is sent to the old fame node's processor. The pager keeps track of how many agents are being raised; when the count goes to zero, the pager fame operation is complete, for that processor. When a fame increase happens to a head pager agent, the pager must resume page searches and dequeue RPR's which are queued there.

### a. The Raise-pager-agent Transaction

The raise-pager-agent (RPA) transaction is used to move some head pager agents from a node to the supernode. The pager builds and deletes page paths and agent records, as necessary. At the new fame node, the pager builds head agent records, and acknowledgments are sent to the old fame node.

### (i) RPA Structure

```
        typedef struct rising_agentTrec {
            bits16T rpp_bits;
                    #define RPP_BUILD_TPATH     0x0001
                    #define RPP_BUILD_MPATH     0x0002
                    #define RPP_DELETE_MPATH    0x0004
                    #define RPP_LAST_RPA        0x0008
            bits16T rpp_agent_status;
```

```
            card4T   rpp_archival_location;
            card4T   rpp_archival_motions;
            card4T   rpp_pagenum;
            card4T   rpp_inc_number;
            card2T   rpp_generation;
    ) rising_agentT;


    #define RPPS_PER_PAGE (PAGE_SIZE / sizeof(rising_agentT))
    typedef rising_agentT      rpa_arrayT[RPPS_PER_PAGE];
            /* The rising_agentT array is separate from the RPA tail.
            On Wapiti, the data page part of the transaction is used. */
    typedef struct raise_pager_agentTrec {
            card4T            rpa_cycle_iden;
            node_nameT        rpa_originator;
            card2T            rpa_agent_quan;
            card1T            rpa_new_fame;
    ) raise_pager_agentT;
```

where:

"RPP_BUILD_TPATH" indicates that a task page path for the agent's page is being built.
"RPP_BUILD_MPATH" indicates that a merging page path for the agent's page is being built.
"RPP_DELETE_MPATH" indicates that the merging page path for the parent page is being deleted.
"RPP_LAST_RPA" indicates that this is the last RPA transaction for this page number, and that this transaction should be acknowledged.
"rpp_agent_status" is the head agent's status.
"rpp_archival_location" is the location of the archival page, taken from the head agent record.
"rpp_archival_motions" is the number of times the archival page moved, taken from the head agent record.
"rpp_pagenum" is the page number.
"rpp_inc_number" is the last incarnation number of the page name.
"rpp_generation" is the generation number of this agent's page.
"rpa_cycle_iden" is the cycle identifier for this RPA cycle.
"rpa_originator" is the name of the old fame node, to where acknowledgments are sent.
"rpa_agent_quan" indicates how many pager agents are being raised with this transaction.
"rpa_new_fame" is the new fame level.

The RPA transaction also has a task name part, contained in the transaction header. This is always the name of the least ancestral task affected by the fame operation. The name of an agent's page is obtained by shortening the task name to "rpp_generation" germs, replacing the incarnation number of the last germ with "rpp_inc_number", and using "rpp_pagenum" as the page number.

**(ii) RPA Processing**

```
To begin a pager fame increase operation, tasks T to T&-, on processor P:
        build a list of head agents for T&-
        build RPA cycle record; acknowledgments := 0
        clear the outgoing RPA transaction list
        for each agent A in the list
                if agent A has the old fame level
                        raise agent A's group for tasks T to T&-
                endif
                free the agent list record
        endfor
        if there were no agent groups raised
                delete the cycle record
                return, indicating pager fame increase is done
        else
                send out all RPA transactions on the list
                return, indicating the pager fame increase is not done
        endif

To raise an agent group (agent A, tasks T to T&-):
        for each task S, from T to T&-
                if there is a head agent for any incarnation of task S at
                        the old fame level
```

```
                    determine whether this is the last agent in the group (2)
                    raise the head agent
                    if this is the last agent
                            break the for loop
                    endif
            endif
        endfor
        increment the acknowledgment count


To raise an agent (agent B, task S):
        look for an RPA transaction destined for the supernode's
                processor
        if not found
                build an RPA transaction, add it to the RPA transaction list
        endif
        increment the agent count in the RPA tail
        store data from agent B in the rising_agentT array
        clear all head status bits in agent B, expect for
                PGA_HEAD_EXPECT
        delete the parent agent's child merging page pointer to this
                agent
        if the parent agent does not know of merging pages
                clear the parent agent's PGA_SEND_MPAGE status
        endif
        if the parent agent is not merge-active
                set the RPP_DELETE_MPATH bit in the rising_agent entry
                if the parent agent is not task-active
                        delete the parent agent record
                endif
        endif
        if agent B would be task-active without PGA_PARENT_PATH status
                set the RPP_BUILD_TPATH bit in the rising_agent entry
        endif
        if agent B is merge-active
                set the RPP_BUILD_MPATH bit in the rising_agent entry
                set the PGA_SEND_MPAGE status in agent B
        endif
```

```
if agent B is not active
        delete agent B's record
else
        resume later page searches
        dequeue actions waiting for a fame increase
endif
if the rising agent array is full
        remove the RPA transaction from the list
        send it to the supernode
endif


ProcessRPA (node N):
        clear the outgoing RPA transaction list
        acknowledgments := 0
        for each agent in the incoming RPA
                process the rising agent
        endfor
        if acknowledgments != 0
                send an APM transaction to the RPA originator
        endif
        send out all RPA transactions on the list
        discard the incoming RPA


To process a rising agent (agent A, node N):
        if the rpp_generation is equal to the generation of the
                    transaction header's task name
                create or find the incarnation record for the rpp_inc_number
        else
                find the incarnation record for the right generation
        endif
        if node N is the fame level node, or we are building either kind
                    of path
                create (or find) a pager agent for the incarnation (agent B)
                if building a task page path
                        insert a task page subnode pointer to the sender
                endif
                if building a merging page path
```

```
                insert a merging page subnode pointer to the sender
        endif
endif
if node N is the fame level node
        store the head agent and PGA_DEMAND_MERGING bits from
                rpp_agent_status in the agent B's record
        if the old agent status (rpp_agent_status) included
                PGA_HEAD_EXPECT or PGA_NEW_HEAD
            set PGA_NEW_HEAD status in the agent B's record
        endif
        store the archival page location and motions
        find the parent page's agent record
        insert a child page merging pointer from the parent page's
                agent to agent B
        if the parent page's agent is demand merging
                do force-merging for agent B
        endif
endif
if we are deleting the parent page's merging path
        find the parent page's agent record (agent P)
        remove agent P's subnode merging page pointer to the sender
        note whether agent P has PGA_SEND_MPI status
        clear PGA_SEND_MPI status in agent P (temporarily)
        if agent P is merge-active
                set PGA_SEND_MPI status in agent P, if it was set before
                clear RPP_DELETE_MPATH in rpp_bits
        else if agent P is not task-active
                delete agent P's record
        endif
endif
if node N is the fame level node
        if this is the last rising agent for the group
                acknowledgments += 1
        endif
else
        if we are build a merging page path
                set PGA_SEND_MPI status in agent B
```

```
        endif
        find or build an RPA transaction headed for the supernode
        increment the agent count in the RPA tail
        copy over the rising_agentT entry from the incoming RPA
    endif
```

**b. The Acknowledge-pager-agent-motion Transaction**

The acknowledge-pager-agent-motion (APM) transaction is used to signal that some moving agent groups have been moved. The transaction is sent from the new fame node to the old, where the pager is keeping track of the number of groups to be moved for the fame operation.

**(i) APM Structure**

```
        typedef struct ack_pager_motionTrec {
            card4T  apm_cycle_iden;
            card2T  apm_ack_quan;
        } ack_pager_motionT;
```

where:

"apm_cycle_iden" is the cycle identifier for this pager fame operation cycle.
"apm_ack_quan" is the number of moving agent groups acknowledged by this transaction.

**(ii) APM Processing**

```
    ProcessAPM (node N):
        find the fame operation cycle record
        subtract apm_ack_quan from the number of acknowledgments in
            the cycle record
        if the cycle acknowledgments is zero
            call-back the fame manager, indicating that the pager
                fame operation is complete for this processor
            delete the cycle record
        endif
        discard the APM transaction
```

### c. The Move-page-to-head Transaction

When a head agent (at the fame level of the agent's page) requests a task page for merging, the page is eventually delivered to that fame level node. If a fame increase operation occurs, the page is needed at the new fame level node, not the old fame level. The move-page-to-head (MPH) transaction is used to move the page after it arrives at the old fame node.

The MPH transaction is unsequenced, and can be quiesced for fame operations.

### (i) MPH Structure

```
typedef struct move_page_to_headTrec {
        card2T mph_page_gener;
        bits16T mph_flags;
                #define MPH_ARCHIVAL 0x0001
        card4T mph_motions;
) move_page_to_headT;
```

where:

"mph_page_gener" is the generation number of the page.
"mph_flags" indicates whether the page is the archival copy.
"mph_motions" indicates how many times the page has moved, including this motion.

The MPH transaction also has a page name part, contained in the transaction header's task and node name fields. This page name is the name of the (formerly) requesting agent's page; when shortened to the "mph_page_gener" generation, it is the page's name.

### (ii) MPH Processing

```
ProcessMPH (node N, agent's pagename P, page P/=):
        if this is P's fame level
                send the MPH to the fame level
        else
                find the pager agent record


                reset the PGA_NEW_HEAD status
                insert page copy P/
                perform merging for the agent
                discard the MPH transaction
        endif
```

**H. Pager Interfaces**

**1. Domain Initialization**

When a program is loaded, the domain manager gives primal pages to the pager. The domain manager decides on which processor each page initially resides, and sends the page there. When it arrives, a pager routine is called to signal the existence of the page.

```
public voidT
LoadPage(card4T pagenumber, pageT *page)
```

The pager uses the page creation count field in the init_dataT record, which is pointed to by a global variable:

```
public init_dataT *init_data;

typedef struct init_dataTrec {

    ...

    card4T  ind_page_creations;

    ...

} init_dataT;
```

When the "ind_page_creations" field goes to zero (after the last NPC cycle completes), the pager calls the domain manager back to indicate that page loading is done for this processor.

```
public voidT
PagerLoadingDone(void)
```

The domain manager may call "LoadPage()" for more pages, if required, and can expect another reply through "PagerLoadingDone()".

**2. Planner Interfaces**

When a task completes, the planner informs the pager, so that background merging may be done for the task's pages.

**a. Task Records**

The pager stores a page generation table (PGT) in the planner's started task records. (See the "Pager data structures, task-based records" section.) While a task is running, the pager keeps the PGT up to date. The planner, however, is responsible for initializing the PGT, and for merging them when a task completes.

When a task does a PARDO, the planner creates a task interval record which represents those child tasks which have not begun execution. The task interval record contains a copy of the parent task's page creation table (PCT). (The page equivalence table is not inherited.) When a child task is "split off" from the interval, the interval's PCT is copied into the child task's started task record, and the PET is cleared.

The planner also maintains a interval motion record, used to accumulate the results of the child tasks' page creations (among other things). When a task ends, its PCT is merged into the interval motion record's PCT, entry by entry.

```
To merge task A's PCT into interval B's PCT:
        for each PCT entry
                if A's entry is greater than B's entry
                        if A's entry is equal to the generation of task A
                                store that generation number, minus one, in B's
                                entry
                        else



                                store A's entry into B's entry
                        endif
                endif
        endfor
```

A similar algorithm is used to merge PCT's from completed portions of intervals, and to merge the entire interval's PCT into the parent task's PCT. The parent task's PET is cleared before the task resumes execution.

```
To merge interval A's PCT into interval B's PCT or parent task B's PCT:
        for each PCT entry
                if A's entry is greater than B's entry
                        store A's entry into B's entry
                endif
        endfor
```

The pager also keeps a list of page write records attached to the started task record.

```
        typedef struct started_taskTrec {
                ...
                struct page_create_tableTrec    stt_create;
                struct page_equiv_tableTrec     stt_equiv;
                struct page_writeTrec           *stt_pagewrites;
                ...
        } started_taskT;
```

## b. Tasks and Page Creations

The pager requires that, when a page creation is being done for a task, the task does not move, complete, nor PARDO. When a task issues a PARDO or end trap, or when the planner decides to move a task, the event is deferred until the page creations have completed. If any event is deferred, the planner sets a flag in the started task record; if set, the pager calls a planner routine when the page creations have completed.

```
typedef started_taskTrec {

        ...

        card4T  stt_page_creations;

        bits16T stt_status;

                #define STT_EVENT_DEFERRED 0x8000 /* or whatever */

        ...

} started_taskT;


public voidT

DoDeferredEvent(started_taskT *stt)
```

## 3. Framework Interfaces

When a task does page fault, execution is deferred until the requested page arrives or is copied. The framework intercepts each page fault, and calls a pager routine to handle it. When the page arrives, the pager calls the MMU handler to insert the page, and calls the task manager to continue the task. If the page is unavailable to the task, the pager calls the addressing exception handler, passing the task's TCB and current PC.

If a page fault occurred because the task needed write access to a page for which it had only read access, the pager will take away the read-only page from the task before supplying the new.

```
public boolT PageFault(tcbT *tcb, card4T pagenum, boolT writeaccess)


public voidT InsertPage(tcbT *tcb, card4T pagenum, pageT *page)

public voidT RemovePage(tcbT *tcb, card4T pagenum)

public boolT TaskHasPage(tcbT *tcb, card4T pagenum)


public voidT AddressingException(tcbT *tcb, virtual_addressT pc);
```

Because the framework can easily access a task's control-stack and function-stack pointers, it checks for unavailable pages in the control-store and function-local store regions. If it receives an access to unavailable storage in one of these regions, the page fault is not passed on to the pager. The pager must check for unavailable pages in the program-global store.

```
public voidT
UnlockIOPage(taskpage_headerT *taskpage);
```

Page requests from the channel support component are handled in the same way as page faults, except for the call-back mechanism. If channel support causes a page to be created, and an ancestor page is being used by the task (for reading, of course), the pager must take away the old page, and supply the new. A framework routine is called to determine whether the old page is in use.

**4. Task Manager Interfaces**

When a task is waiting for a page to be delivered, the pager informs the task manager that the task cannot run (TMEventStart). When the page arrives and the task can continue, the task manager is again informed (TMEventEnd).

```
        public TMEventStart(started_taskT *stt, bits16T eventbit)
        public TMEventEnd(started_taskT *stt, bits16T eventbit)
   0x0010                                            #define STT_PAGEFAULT
```

**5. Page Frame Manager Interfaces**

The page frame manager frequently needs to reclaim space by deleting ordinary task page copies, or moving archival copies to another processor. The pager provides two routines for these.

```
   public void DeleteTPageCopy(taskpage_headerT *tkp)
   public void MoveTPageCopy(taskpage_headerT *tkp, card4T destproc)
```

The page frame manager also keeps track of the book value of pages. Two fields in the task page header are manipulated by the page frame manager:

```
        typedef struct taskpage_headerTrec {

           ...

           int2T   tkp_book_value;

           card2T  tkp_use_count;

           ...

        } taskpage_headerT;
```

When a page is moved to another processor, the book value is sent with it. If there is another copy of the page on the destination processor, the book values are summed.
When a page is requested, the "cost" of the page search is accumulated in the RPR transaction's "rpr_cost" field. This field contributes to the book value of the satisfying page.

**6. Fame Manager Interfaces**

The fame manager interfaces are discussed in the "Pager fame operations" section. They are summarized here.

```
public boolT

PagerFameIncrease(card4T replyarg, incarnationT *inc,

                  card2T generation, card1T newfame)


public voidT

FameIncreaseReply(card4T replyarg)
```

where:

PagerFameIncrease() is called when the fame manager does a fame increase. It is called, once the task transaction quiesce is in effect, on each processor in the old fame region. It returns FALSE just if the pager fame increase completes immediately; if TRUE is returned, the fame manager must wait for a FameIncreaseReply() call. See the "Pager fame operations, RPA processing" section.

FameIncreaseReply() is called when the pager completes a pager fame increase. The "replyarg" is the same value as was passed in PagerFameIncrease().

## IV. Fame

### A. Introduction

Fame is a method of confining certain objects and information within a cluster of a domain. A non-negative integer is associated with each task in the user's program. This integer is called the fame level of the task, or more simply, the fame of the task.

A task's fame indicates which cluster may contain objects associated with the task. These objects include the task itself, its pages, its name, records of the task or its pages, and transactions which were caused by the task. In general, any object from which the existence of the task can be deduced is confined. Such objects are called famed objects. They are also said to have fame, equal to the fame of the associated task.

The cluster to which task objects are so confined is called the fame cluster or fame region of the task. It is identified by the fame level, which is the cluster level of the fame cluster, and any record of the task, which may exist in only one cluster of that level. A fame level of zero indicates that the task is confined to one processor (processor fame); a fame of one indicates board fame; and so on. The maximum fame level is the cluster level of the domain (domain fame). A parent task's fame cluster must contain the child task's fame cluster.

A task's fame is a dynamic property, subject to change by the fame increase operation. This changes the fame cluster of a task to a higher cluster.

Fame enhances scalability by reducing communication, management work, and latencies. For example: when a task creates a page, the domain must be notified of this, so that merging can be done. With fame, fewer processors become involved. And generally, when a page fault occurs, the region that must be searched, the distance between the task and the page, and the time needed to find the page are smaller. In general, tasks with low fame enjoy all the advantages of running on a small domain.

Fame introduces a number of complications. Since fame confines distributed task and page information, this information tends to collect at the fame level node, rather than the domain level node. This is an advantage when using the information, but when a fame operation is applied, the information may need to be redistributed. Thus, fame operations may affect any kernel component which distinguishes fame-level nodes.

Fame also confines pages. This can lead to problems if some tasks create more pages than will fit in their fame clusters. The kernel must detect and correct such situations, either by restarting tasks, or by raising or transferring fame.

Fame confines tasks. When a cluster exhausts its user work, the kernel would like to supply more. If no runnable task's fame cluster includes the exhausted cluster, a fame operation would be required to send tasks there. On the other hand, such task confinement tends to help exploit locality of reference; tasks do not become scattered across the domain.

Since task-associated objects can be moved throughout the domain, the kernel must be able to locally determine whether a proposed action is allowed. This can be done by ensuring that each processor has a fame record for every such object.

## B. Recording Fame

Each germ of a task name is associated with a fame level. Fame records are created locally when a task starts execution or when a transaction containing the task name arrives. They are deleted when the last task-associated object is deleted or sent away.

Each germ in a task name contains a small integer, which specifies the fame level of a task. This task is the one whose name consists of all germs in the task name up to and including the germ. Here is an example:

```
1st germ: iteration 29 fame level 4 incarnation 2
2nd germ: iteration 4 fame level 3 incarnation 20
3nd germ: iteration 17 fame level 0 incarnation 0
```

This indicates that task {29} has fame level 4, task {29/2;4} has fame level 3, and task {29/2;4/20;17} has fame level 0.

When a fame increase occurs, each transaction which contains the name of an affected task must be found and corrected to contain the new fame level(s). To avoid looking through endless kernel structures to find all of them, the following method is used:

When a transaction containing a task name arrives at a processor, the name is replaced with a pointer to a record of the name. When generating transactions which refer to tasks, each kernel component need only store the task record pointer; before sending the transaction, the pointer is replaced with the task name. After receiving a transaction, the task name is replaced by a pointer to the task record. This limits task names to only a few possible locations, inside transactions which are being or have just been transmitted; so all transactions with task names can be found easily.

## C. Fame Increases

A fame increase operation changes the fame of a set of tasks. This set is identified by a task name T, plus a generation number. The set includes task T and all ancestor tasks up to that generation.

A fame operation also involves fame clusters. These are identified by a cluster level and a processor name. To simplify things, the set of tasks being affected by the fame increase operation will share a single source fame cluster, and end up with a single destination fame cluster.

There are rules that restrict fame increase operations: (1) a fame increase operation must not extend a task's fame cluster outside of the parent task's fame cluster, and (2) a task may not be affected by two fame increase operations at once.

Fame increase operations are coordinated at the fame manager nodes for the old and new fame clusters. The former node is the old fame node, the latter is the new fame node.

The fame increase operation expands the fame region of a set of tasks. Each task in the set must have the same old fame cluster, and the same new fame cluster. To begin a fame increase operation for a set of tasks, the fame manager broadcasts a fame operation start 1 (FOS1) and a task quiesce start 1 (TQS1) transaction throughout the old fame node's cluster. The quiesce allows the various components to update their records for the fame change, without worrying about other actions which can affect the records simultaneously. The new fame cluster does not need the quiesce, since there can be no such activities out there until the fame operation is complete.

Each processor in the old fame region updates its fame records for the tasks, noting the old and new fame regions, the fact that fame is changing, and stops other transaction activity for those tasks. The processors then begin a broadcast response with task quiesce start 2 and fame operation start 2 (FOS2) transactions, up to the new fame node.

When the FOS2 broadcast response has finished, the fame manager broadcasts a fame operation increase 1 (FOI1) transaction throughout the old fame node's cluster. On receipt of the FOI1 transaction, each processor in the old fame region signals to each kernel component that the fame increase is in progress, and notes which ones will respond later. Throughout the fame operation, the processors will keep track of these responses.

When all kernel components have indicated that they have finished the fame operation, each processor updates its fame records to indicate the new fame level of the tasks, and starts a broadcast response with a fame operation increase 2 (FOI2) transaction, up to the old fame node.

When the FOI2 broadcast response has finished, the fame manager broadcasts a task quiesce finish (TQF) transaction throughout the old fame node's cluster, which cancels the transaction quiesce for those tasks. Processors in the old fame region may receive famed transactions before the TQF; these may be processed as usual.

The fame operation is considered done when the FOI2 broadcast response completes at the old fame node. The old fame node signals completion to the fame command coordinator here.

Pseudo-code for increasing fame follows:

```
To do fame increase (from old fame node):
        determine task set
        if old fame node is non-leaf:
                send TQS1/FOS1 to sub-nodes
                note that no FOS2 broadcast responses have been
                received
        else
                update fame records to show changing fame
                create transaction quiesce record
                do leaf node fame increase
        endif


To process TQS1/FOS1:
        if non-leaf node:
                send TQS1/FOS1 to sub-nodes
                note that no FOS2 broadcast responses have
                been received
        else
                update fame records to show changing fame
                create transaction quiesce record
```

```
                send TQS2/FOS2 to super-node
        endif


To process TQS2/FOS2:
        note which sub-node has responded
        if this was the last one:
                if this isn't the old fame node
                        send TQS2/FOS2 to super-node
                else
                        send FOI1 to old fame node
                endif
        endif


To process FOI1:
        if non-leaf node:
                send FOI1 to sub-nodes
                note that no FOI2 broadcast responses
                have been received
        else
                do leaf node fame increase
        endif
To do leaf node fame increase:
        for each kernel component:
                indicate fame increase in progress
                note which ones will respond later
        endfor
        if all components have finished immediately
                End leaf node fame increase
        endif


To process kernel component response:
        note that this component has finished fame increase
        if this is the last one:
                End leaf node fame increase
        endif
To end leaf node fame increase:
update fame records to show new fame
```

```
        if old fame node is leaf:

        cancel task transaction quiesce

        signal "fame operation complete" to fame

        command coordinator

   else

        send FOI2 to super-node

   endif


   To process FOI2:

        note which sub-node has responded

        if this is the last one:

                if this is the old fame node:

                        signal "fame operation complete" to fame command

                        coordinator send TQF to sub-nodes

                else

                        send FOI2 to super-node

                endif

        endif


   To process TQF:

        if non-leaf node

                send TQF/FOF to sub-nodes

        else

                cancel task transaction quiesce

        endif
```

## D. Fame Commands

The fame manager is invoked when the resource manager orders that the fame of a task is to be altered. Such an order is called a fame command. A fame command may cause fame operations for ancestors of the refamed task.

Each fame command provides: the fame command originator, which is identified by a processor number, the address of a routine to be called when the fame command completes, and possibly a parameter to be passed to the routine. The processor will be the one which orders the fame command. It also provides the name of the refamed task and, the new fame level of the refamed task.

Each task's fame cluster must be a subcluster of the parent task's fame cluster. For each command, the fame manager determines which tasks require fame operations. Ancestor tasks whose fame level is lower than the new fame level require fame increases.

Recall that a fame increase operation involves exactly one source fame cluster, and exactly one destination fame cluster. So, if a fame command involves more than one source fame cluster, or more than one destination fame cluster, it will require multiple fame operations. When multiple fame operations are to be performed, they are done in

116

decreasing source fame level order. This guarantees that fame regions nest, even between operations of a fame command.

## 1. Fame Command Coordination

Fame commands are coordinated through the fame management tree. Two kinds of coordination are needed, between distinct fame commands, and between fame operations within a fame command.

When two distinct fame commands are issued, both commands might involve the same task. To prevent two fame operations from occurring at once, each fame operation is coordinated at the old fame node for each affected task. Permission to execute the fame command is granted at each such node, in order, from the lowest node to the highest. When permission is given at the highest node, the fame command begins execution.

When synchronizing at a node, the fame manager notes that a fame operation is in effect for each affected task at that fame level. Subsequent fame commands are delayed until the fame operation completes, and then are sent to the new fame node for the tasks.

A fame command begins execution with a fame operation at the highest old fame node for the affected tasks. Once this operation completes, the fame manager releases any delayed fame commands at this old fame node, and then proceeds to the next highest old fame node, and so on. Finally, after the last (lowest) fame operation completes, the fame manager notifies the originator that the command has completed.

During its execution, a fame command passes through a number of states. It may need permission to perform a fame operation, it may be executing a fame operation, or it may have completed all fame operations, and needs only to signal the fame command originator.

A record is associated with each fame command, which records the state of the command. In addition to the information provided in the fame command, the record contains this information:

(1) The fame permission datum is the highest generation number of the tasks on which the fame command needs permission to perform a fame operation. This datum goes to zero once all permissions are granted.

(2) The low generation datum is the lowest generation number of the tasks for which a fame operation could be needed. This datum is meaningful only if the fame permission datum is zero.

(3) The high generation datum is the highest generation number of the tasks for which a fame operation is in progress. This datum is meaningful only while a fame operation is in progress and shortly thereafter.

(4) The operation level datum is the cluster level of the old fame cluster at which a fame operation is in progress. This datum is meaningful only during the operation and shortly thereafter.

## 2. Fame Command Pseudo-code

```
Fame command:

      accept originator, task, new fame level
```

```
-- do assertions here
if no tasks need a fame operation
        Finish fame command
else
        set initial fame permission datum to the refamed task's
            generation
        Synchronize fame command
endif


Synchronize fame command:
Process FCS:
        get fame permission datum G
        for each generation number, from G upward:
            let task T be the G'th generation ancestor of the refamed
            task if task T doesn't need a fame operation:
                break for
            endif
            if T's old fame node is on this processor:
                if a fame operation is in progress for task T:
                    queue command at task T until fame operation
                    completes return
                else
                    note that a fame operation is in progress for
                        this task
                    increment fame permission datum G
                endif
            else
                send FCS (fame command synchronize) transaction to
                    old fame node
                return
            endif
        endfor
        -- Here, all permissions have been given.
        set low generation datum equal to fame permission datum
        set fame permission datum to zero
        Continue fame command
```

```
Continue fame command:
Process FCC:
        get low generation datum G
        for each generation H from G to the refamed task's generation
                let task T be the H'th generation ancestor of the refamed
                task if T's old fame node isn't on this processor:
                        send FCC (fame command continue) to old fame node
                        return
                else
                        if task T needs a fame operation
                                Compute high generation datum for task T
                                set operation level datum to the old fame
                                        node's cluster level
                                Start fame operation at old fame node
                                queue fame command at task T until this fame
                                        operation completes
                                        -- "Fame operation complete" will be
                                                called on
                                        -- completion
                                return
                        else
                                note no fame operation in progress for task T
                                assert: there are no queued fame operations for
                                task T increment low generation datum
                                --equal to H+1 if the low generation datum is
                                greater than the refamed task's generation
                                        Finish fame command
                                        return
                        endif
                endif
        endif
        endfor
        -- If you fall off the end of this loop, something is wrong.


Compute high generation datum for task T:
        set high generation datum to the generation number of the furthest
        descendant of T with this fame level
```

```
Fame operation complete:
        get fame operation level L, low generation datum G,
                high generation datum H
        for each ancestor task T of the refamed task,
                from generations G to H
                note no fame operation in progress for task T
                dequeue all fame operations for task T
                        -- they continue execution at
                        -- "Synchronize fame command"
        endfor
        set low generation datum equal to high generation datum plus one if
the low generation datum is greater than the refamed task's generation
                Finish fame command
        else
                Continue fame command
        endif


Finish fame command:
        if originator is on this processor
                signal originator
        else
                send FCF (fame command finish) to originator
        endif


Process FCF:
        signal originator
```

## V. Kernel Transactions

### A. Introduction

In our multiprocessing system, the processors must communicate with each other. We employ communication which is message-based, and refer to the messages as transactions. The communications network used to support messages allows any processor to send a transaction to any other processor. The transmission may be affected by the distance between the two processors.

The distance between two processors is the cluster level of the smallest cluster which contains both of them. Thus, a processor is distance zero from itself; two processors on the same board have distance one; two processors on different boards in the same cage have distance two; and so on. As distance increases, the bandwidths of the communication links increase more slowly than the number of processors that might use those links. Consequently, long distance transmissions are more likely to be delayed than short distance transmissions, and the delay is expected to be longer. Therefore, our system uses long distance transmissions infrequently.

## B. Format

The transaction format is independent of the underlying hardware and is portable to different architectures. Furthermore, the format is optimized for most common operations, while being flexible enough to support existing and future kernel components.

The transaction format consists of a common header, zero to TRA_MAX_TAIL transaction tails, and an optional short tail. Data pages are considered "tails" of length PAGE_SIZE. The first part of transaction must match the common header format.

Free-on-send semantics are used when sending transactions. Thus, the transaction is "used up" once it has been sent. The format is shown below:

```
#define TRA_MAX_TAIL
#define TRA_SHORT_SIZE (256-OFFSETOF(transT, tra_short))


typedef struct transTrec
{
        struct transTrec              *tra_next;
        bits32T                        tra_source;



        bits32T                    tra_destination;
        bits16T                    tra_flags;
        card2T                     tra_type;
        card4T                     tra_domain;
        struct  agent_nameTrec     tra_sender;
        struct  agent_nameTrec     tra_receiver;
        struct  incarnationTrec   *tra_inc;
        struct  addr_lenTrec       tra_tail[TRA_MAX_TAIL+1];
        int1T                      tra_priority;
        card1T                     tra_size;
        card2T                     tra_pad;
        charT                      tra_short[TRA_SHORT_SIZE]
} transT;
```

The transaction header fields are defined as follows:

tra_next is used to link transactions into lists and queues.
tra_source and tra_destination specify the source and destination PE addresses respectively.
tra_flags is used by the Kernel to store various flags.
tra_type is the transaction type.
tra_domain is the domain number for supervisor transactions.
tra_sender and tra_receiver indicate the Kernel sending and receiving agents respectively.
tra_inc points to an incarnation record for named transactions. When a transaction contains an incarnation, at least one tail must be left available to store the array form of the task name for transmission.

tra_tail is a set of address-length pairs for transaction tails.

tra_priority indicates the transaction priority.

tra_size is the size of the short tail in bytes. It is required to be non-zero for transactions containing a task name so that the array form of the task name can be packed into the short tail if possible.

tad_pad forces long word alignment of the short tail.

tra_short is used for simple transactions consisting of a fixed short tail. Since many transactions are of this form, the short tail can be stored inside the header and sent as a single block.

## C. Transaction Cycles

If a processor sends a transaction which requires a response, then that transaction, its response, and intermediate transactions (if any) form a transaction cycle. The first transaction is called the cycle generator, the last is called the cycle completer. There are various kinds of cycles.

Some cycles are expected to complete within a certain period of time, for example, a page request cycle. The operation or task which needs the page cannot continue until it arrives; furthermore, a small amount of searching should be able to locate the page. Cycles which are expected to complete quickly are timed. When the cycle is generated, a record of it is placed on a special queue; the processor periodically checks this queue for expired cycles and takes appropriate action when one is found.

Other cycles are used to ensure that certain things are done in the correct sequence. For example, a famed object may not be sent outside of its fame region. When a component wishes to do this, it first uses a transaction cycle to expand the fame region; when the cycle completes, the object may be sent to its destination.

## D. Transaction Patterns

The processing of a transaction may involve a number of processors. Some transactions are transmitted once, processed, and dispensed with. Some transactions are sent from processor to processor a number of times. Some transactions are sent in bunches to a group of processors. Such transmission sequences are categorized by the transaction pattern, of which there are a number of kinds.

When a processor needs to communicate with a specific single processor, a single transaction can be sent directly. For example, the transaction which moves a permanent node is sent directly from the old fame node's processor to the new, since the latter location is known.

When a processor needs to communicate with a single processor, but does not know which one, a transaction is sent which searches for the other processor. The page request transaction has this transaction pattern.

When a processor needs to communicate with a small set of processors, a transaction is sent which visits each processor in turn. It is not necessary that the originator knows the entire set, but each processor which receives the transaction must know whether to continue sending the transaction, and to where. Transactions which affect page paths have this transaction pattern.

When a processor needs to communicate with a large number of processors in a cluster, a transaction is sent to the head node in the cluster. That node sends the transaction to each subnode, and the subnodes send it to each of their subnodes, and so on. Eventually, all leaf nodes in the cluster will receive the transaction. Fame operations often use transactions with this pattern. Transaction broadcasts may be selective; that is, each node may choose to send the transaction to a subset of its subnodes.

When many processors in a cluster need to communicate with a single processor, each leaf node sends an inverted broadcast transaction to its supernode. The supernodes, in turn, send a transaction to their supernodes when all subnodes have reported, and so on, until the head node for the cluster has received all transactions.

Any of the above patterns may be combined with transaction cycles. Generally, single transaction, searching transaction, and multiple transaction cycles are completed by single transactions; broadcast and inverted broadcast cycles complete each other.

Nodes which originate cycles or broadcast transmissions generally have a property from which it can be deduced that the transmission should originate there. For example, the leaf node on the processor which runs a faulting task originates page request cycles. The fame level node does the PEM broadcast.

For cycles, the simplest method is to ensure that the node property does not move while the cycle is in progress. For broadcasts, the originating node must note that the broadcast has been done, and repeat it after the property has moved. This can be done with a selective broadcast if the operation is not strictly repeatable at the leaf nodes.

### E. Transaction Control

#### 1. Overview

One of the difficult aspects of controlling a message-based multiprocessing machine is prevention of race conditions. These occur when two or more asynchronous transactions are destined for the same processor, and correct operation of the machine depends on the order in which they are processed.

We use two methods to synchronize transactions. Transaction sequencing controls groups of transactions, all of which have the same source and destination nodes. Transaction quiesce controls groups of transactions throughout a set of processors in a cluster.

##### a. Transaction Sequencing

Transaction sequencing is a control method which ensures that a transaction which must follow behind another transaction does not overtake it. Sequencing is especially useful for multiple transaction patterns and page path operations, although other patterns also use it.

A sequence group is a set of transaction types which are sequenced with respect to each other, but not with any other transactions. There are currently five groups: unsequenced, fame lock/unlock, pager path up, pager path down, and other sequenced. Every transaction type belongs to exactly one of these sequence groups.

Transactions which are sequenced remain so, even when they are queued or quiesced. Higher priority transactions may be sequenced behind lower priority transactions. Transaction sequencing is node-based. That is, two transactions are sequenced if they are in the same sequence group and have the same source and destination nodes.

##### b. Transaction Quiesce

Transaction quiesce is a control method which stops a certain type of activity while another activity is going on. Again, transactions retain sequencing even when one or more is quiesced. There are two kinds of transaction quiesce. The cluster transaction quiesce prepares a cluster or the domain for a checkpoint, resize, or other special control operation. Task transaction quiesce prepares a cluster for a fame operation.

There are three parts to a transaction quiesce: the initial broadcast, the duration when transactions are held, and the final transaction release. A cluster transaction quiesce suspends transaction activity for one or more classes of transactions within a cluster.

The purpose of task transaction quiesce is to prevent race conditions during a fame operation. A task transaction quiesce suspends transaction activity associated with a set of tasks. This set is identified by a task name and additional information indicating the relationship of the tasks to other tasks being executed.

The quiesce operation also involves a cluster, identified by a cluster level and a processor name; this is the highest fame cluster of the most ancestral specified task.

#### 2. Functional Description

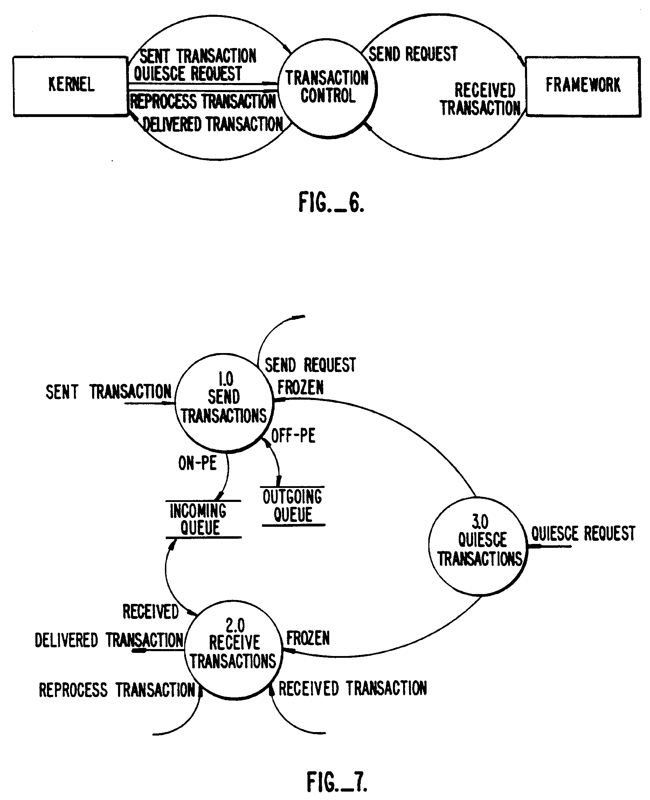

Transaction control is a component which separates the kernel proper and Framework. This section describes the logical behavior of the component. The external event list for Transaction Control (shown in Figure 6) is:

- Transaction sent by kernel.
- Reprocess kernel transaction.
- Transaction delivered to kernel.
- Kernel quiesce request.
- Send request.
- Transaction received.

Transaction Control accepts transactions sent by the kernel as well as transactions for reprocessing and delivers all transactions to the kernel. The kernel also initiates transaction quiesce requests. Transaction Control requests the Framework send a transaction and routes received transactions.

The Data Flow Diagram (DFD) for Transaction Control is shown in Figure 7. There are three transforms in the Transaction Control DFD:

　　(1) Send transactions. The Send transactions transform accepts transactions sent by the kernel. These transactions are either placed in the incoming queue or given to the Framework depending on whether the destination is on-PE or off-PE respectively. Framework send requests are generated to send transactions.

(2) Receive transactions. All received and reprocessed transactions are passed to the Receive transactions transform. Transactions are held until delivered to the kernel.

(3) Quiesce transactions. The final transform in Figure 2 handles transaction quiesce requests from the kernel. Transactions being sent or delivered are placed in a queue data store if affected by a freeze operation. When the quiesce completes, thawed transactions are sent or delivered as required.

Figure 7 shows the two data stores where transactions are held: the incoming queue, for received transactions, and the outgoing queue, for transactions to send. All transforms in Figure 7 are one-shot transforms invoked by either the kernel or Framework

### a. Receive Logical Model

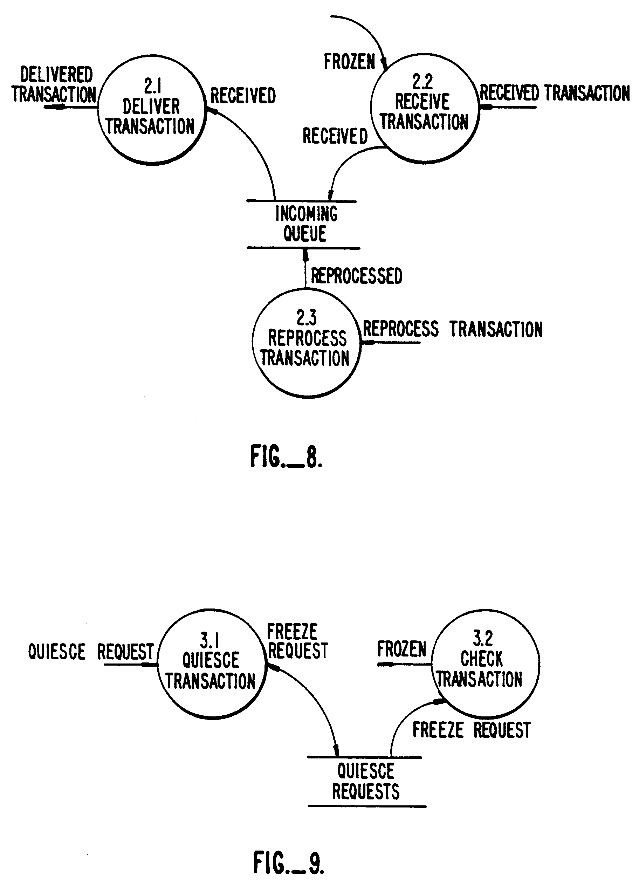

The Receive transactions transform in Figure 7 is further partitioned as shown in Figure 8. The transforms in Figure 8 perform the following functions:

(1) Deliver transaction. The first transform delivers received and reprocessed transactions from the incoming queue data store to the kernel.

(2) Receive transaction. The second transform receives off-PE transactions from the Framework and places these in the incoming queue. Transactions affected by a freeze operation are held.

(3) Reprocess transaction. Transactions may be queued for later reprocessing by the kernel. The Reprocess transaction transform is invoked by the kernel to add such transactions to the incoming queue.

### b. Quiesce Logical Model

The quiesce transactions transform in Figure 7 is further partitioned as shown in Figure 9. The transforms in Figure 9 perform the following functions:

(1) Quiesce transaction. The first transform accepts transaction quiesce requests from the kernel. Requests to freeze transactions are maintained in the quiesce requests data store.

(2) Check transaction. The second transform checks transactions on send and receive to determine whether a transaction quiesce applies.

### 3. Interfaces

This section describes the interfaces provided by Transaction Control to the Kernel and Framework.

### a. Transaction Service

The transaction service is used to send and receive transactions.

(1) TransSend sends a transaction to the destination specified in the header.

```
public voidT
TransSend( trans )
transT *trans;
```

(2) TransReceive is called by the Framework to pass a newly received transaction to Transaction Control.

```
public voidT
TransReceive( trans )
transT *trans;
```

(3) TransDeliver is called by the Framework to allow Transaction Control to deliver a transaction to the kernel.

```
public voidT
TransDeliver( )
trans_queueT *trq;
```

(4) TransReprocess allows transactions to be reprocessed by the kernel. Since it is always called as an action routine for queued transactions, TransReprocess always returns FALSE and uses only the transaction parameter.

```
public boolT
TransReprocess (agent, trans, flags )
addressT        *agent;
transactionT    *trans;
bits16T           flags;
```

### b. Quiesce Service

The quiesce service is used to freeze and thaw transactions. All quiesce operations are based on transaction classes; operations and classes may overlap. To date, the following classes have been identified:

(1) Famed transactions (task transaction quiesce).
(2) Eureka jump transactions (task transaction quiesce).
(3) Supervisor transactions (cluster transaction quiesce - supervisor).
(4) Kernel noncontrol transactions (cluster transaction quiesce - non-control).

Transaction quiesce occurs in one of two ways:

(1) A Transaction Control leaf quiesce function is called by a kernel component on that component's leaf agent. It is the responsibility of the component to ensure Transaction Control is invoked on all processors in the affected cluster. Famed transactions (and probably eureka jump transactions) use this method.
(2) Transaction control is called to quiesce a cluster. In this case, Transaction Control broadcasts the quiesce operation throughout the cluster. Supervisor and non-control transactions use this method.

Leaf quiesce functions are applied to transactions on a single processor.

(1) FreezeTaskTrans freezes the specified class of transactions for the given task and all its descendants.

```
public voidT
FreezeTaskTrans (class, inc)
bits16T        class;
incarnationT *inc;
```

(2) ThawTaskTrans thaws the specified class of transactions for the given task and all its descendants.

```
public voidT
ThawTaskTrans (class, inc)
bits16T        class;
incarnationT *inc;
```

Since Transaction Control always maintains named transaction task names in linked list form is not necessary to provide a function to alter task names.

Cluster quiesce functions are applied to transactions on all processors in a cluster.

(1) SendTQU applies the specified operation to the class of transactions in the cluster having the given head agent. An acknowledgement may be requested to indicate the operation is complete.

```
public voidT
SendTQU (oper, class, agent_name, ack)
      bits16T        oper;
      bits16T        class;
      agent_nameT *agent_name;
      boolT          ack;
```

**c. TQU Structure**

A single transaction type is used by Transaction Control. The transaction tail is shown below; there is no data page.

```
typedef struct trans_quiesceTrec
{
      bits16T                  tqu_operation;
#define TQU_FREEZE 0x0001
#define TQU_THAW    0x0002



#define TQU_ACK      0x0004
      struct agent_nameTrec   tqu_agent;
      bits16T                  tqu_class;
      boolT                    tqu_ack;
} trans_quiesceT;
```

The operation field tqu_operation indicates the quiesce operation: freeze, thaw, or acknowledge. An agent name tqu_agent and class tqu_class specify which cluster and class of transactions is affected. The acknowledgment field tqu_ack indicates whether an acknowledgement is required.

**4. Physical Design**

This section specifies the physical implementation of Transaction Control.

**a. Data Structures**

The data structure used to store transaction quiesce requests is:

```
typedef struct quiesce_requestTrec

(
        struct quiesce_requestTrec *qur_prev;
        struct quiesce_requestTrec *qur_next;
        bits16T                     qur_class;
        struct agent_nameTrec       qur_agent;
        child_bitsT                 qur_reported[MAX_DOMAIN_DEPTH];
        bits32T                     qur_source;
        struct incarnationTrec     *qur_inc;
        timeT                       qur_start_time;
) quiesce_requestT;


public quiesce_requestT *quiesce_req;
```

Each outstanding transaction quiesce request on a processor has a record of type quiesce_requestT linked into the quiesce_req list. The record contains pointers to the previous qur_prev and next qur_next records as well as the transaction class qur_class.

The head agent qur_agent for the cluster, source processor qur_source, and child reported bits qur_reported are used for cluster quiesce. These fields are not used for leaf quiesce.

An incarnation record pointer qur_inc is used for task transaction quiesce operations. A timestamp qur_start_time is used to determine how long a quiesce request is in effect.

Transaction queues are maintained using a linked list structure.

```
        typedef struct trans_queueTrec

(
        struct transTrec *trq_head;
        struct transTrec *trq_tail;
        card4T            trq_count;
) trans_queueT;


public trans_queueT incoming[MAX_SEQ_GROUP];
public trans_queueT outgoing[MAX_SEQ_GROUP];
public trans_queueT *kincoming;
public trans_queueT *kreceived;
```

Each transaction queue record indicates the head trq_head and tail trq_tail of the queue and the number of transactions currently queued trq_count.

**b. Pseudo Code**

TransSend prepares a transaction for sending. Task names are converted into array form immediately before each send attempt. Remote transactions that are not frozen are passed to the Framework.

```
                                public voidT
                                TransSend( trans )


        transT *trans;
    (
            assert transaction is valid;

            if transaction is not frozen
                    if transaction is for this PE
                            enqueue incoming transaction;
                    else
                            convert task name for named transactions;
                            request Framework send;
                            if send successful
                                    discard transaction;
            else frozen
                    freeze outgoing transaction;
    ) /* TransSend */
```

TransReceive is called by the Framework when a new transaction is received.

```
public voidT
TransReceive (trans)
transT *trans;
{
        assert transaction is valid;
        convert task name for named transactions;
        enqueue incoming transaction;
} /* TransReceive */
```

TransDeliver is called by the Framework to allow transactions to be delivered to the kernel.

```
public voidT
TransDeliver(trq)
trans-queueT *trq
{


        assert transaction type is valid;
        dequeue transaction;
        nil transaction pointer fields in header;
        if transaction is not frozen
                deliver transaction to kernel;
        else
                freeze incoming transaction;
} /* TransDeliver */
```

TransReprocess allows transactions held by the kernel to be reprocessed.

```
public boolT
TransReprocess (agent, trans, flags)
addressT     *agent;
transactionT *trans;
bits16T       flags;
{
    assert transaction is valid;
    enqueue reprocessed transaction;
    return FALSE;
} /* TransReprocess */
```

The leaf quiesce functions FreezeTaskTrans and ThawTaskTrans perform the leaf agent actions of TQU processing.

```
public voidT
FreezeTaskTrans (class, inc)
bits16T     class;
incarnation *inc;
{
    assert incarnation is valid;
    assert quiesce record does not already exist;
    allocate and fill in quiesce record;
    increment incarnation reference count;
    link quiesce record into  quiesce  request  list;
```

```
) /* FreezeTaskTrans */


public voidT
ThawTaskTrans (class, inc)
bits16T class;
incarnationT *inc;
(
      assert incarnation is valid;
      assert quiesce record exists;
      move thawed transactions back into queues;
      decrement incarnation reference count;
      unlink and free quiesce record;
) /* ThawTaskTrans */
```

The cluster quiesce function SendTQU simply sends a TQU transaction to the cluster head agent.

```
public voidT
SendTQU (oper, class, agent_name, ack)
bits16T      oper;
bits16T      class;
agent_nameT *agent_name;
boolT        ack;
(
      assert agent name is valid;
      allocate TQU transaction;
      set operation, class, agent name, and acknowledge;
      send transaction to head agent;
) /* SendTQU */
```

Processing TQU transactions involves sending the transaction to the correct agent then updating the quiesce records. Simultaneous and overlapping quiesce operations are permitted by using a separate quiesce record for each request.

```
public voidT
ProcessTQU (trans)
```

```
transactionT *trans;
{
    assert transaction and transaction tail are valid;
    if transaction from supervisor
        send transaction to head cluster agent;


    else transaction for this cluster
        if acknowledge
            assert nonleaf agent;
            assert child not already reported;
            set child reported bit;
            if all children reported
                send to supervisor or head agent;
                if acknowledgement complete
                    unlink and free quiesce record;
            else
                discard transaction;


        else if freeze
            if quiesce record does not exist
                allocate and fill in quiesce record;
                link quiesce record into quiesce request list;
            if leaf agent
                acknowledge if required otherwise discard transaction;
            else nonleaf agent
                clear child reported bits;
                send transaction to children;


        else if thaw
            if quiesce record exists
                if leaf agent
                    acknowledge if required otherwise discard
transaction;
                    move thawed transactions back into queues;
                    unlink and free quiesce record;
                else nonleaf agent
                    clear child reported bits;
```

```
                        send transaction to children;
                else
                        discard transaction;
        else
                error;
    } /* ProcessTQU */
```

### VI. Task Manager

#### A. Virtual Memory Mapping

In addition to being a multiprocessing machine, our system is also a multiprogramming machine. Each processor is capable of running multiple tasks concurrently. Some method is needed, then, to provide each such task with its address space. This is traditionally done using virtual memory. A task fetches and stores using "logical" memory. The virtual address specified by the task is translated into a real address, which is used to apply the fetch or store to physical memory. The translation is conventionally done by hardware, using information provided by the operating system. Herein, address translation is done by hardware.

#### B. Task Manager Activities

The task manager is a component of the kernel which does various things with tasks. It selects, from whatever task intervals and tasks are available on a processor, which task or tasks to run. It decides whether to start an unstarted task. It accepts task intervals and tasks from the planner, and surrenders them to the planner. It accepts waiting state information from various components, notably the planner, pager, and I/O support. It helps coordinates task creation, completion, and motion activities with other kernel activities. It transforms unstarted tasks into started tasks by specifying the machine state.

When the kernel decides to run a task, the task manager is called upon to pick one. Its decisions are guided by the following criteria:

(1) Running tasks should be selected from only one task interval, the primary interval.
(2) There is an optimal number of running tasks, the contending tasks goal, which should be achieved when practical, but never exceeded. The task manager keeps count of the contending tasks (the contending tasks count). This count refers only to nonslowing, nonstopped tasks in the primary interval. Other tasks aren't considered to be contending, even if they are.
(3) Tasks should be run in "depth-first" order. This works even if the domain is running breadth-first, since in that case, there aren't enough tasks to go around. The task manager probably has only one task to "choose" from.
(4) Tasks should be run to minimize transprocessor paging (assuming locality of reference across tasks).

The primary interval is chosen from all intervals on the processor which have runnable tasks (unstarted, ready, or waiting). Given two intervals, both with runnable tasks:

(i) If one task interval was spawned on this processor, and the other was "imported," prefer the former.
(ii) Otherwise, if one task interval has started tasks, and the other doesn't, prefer the former.
(iii) Otherwise, if one task interval has a longer geneology than the other, prefer the longer geneology.
(iv) Otherwise, pick one arbitrarily.

Once the primary interval has been chosen, the task manager decides which interval to run. Normally, the primary interval would be run. But if other task intervals have tasks with pinned pages, those tasks are selected to run, allowing them to unpin their pages. Intervals which have slowing tasks (tasks in the process of being stopped) are called slowing intervals; these have priority over the primary interval.

Finally, the task manager decides which task to run in the selected interval. If the interval has slowing, ready tasks, one of them is chosen. If there are any other started, ready tasks in the primary interval, the task manager picks one of them. Otherwise, if the contending tasks count is less than the goal, the interval is primary, and it has unstarted tasks, the task manager selects the first one (lowest iteration number) and starts it. Otherwise, no task is selected.

The task manager and the planner share task interval and started task structures. The relevant portions of each structure are given here:

```
typedef proc_infoTrec {
        #define TIR_QUEUE_QUAN 4
    struct task_intervalT   *prc_tir_queues[TIR_QUEUE_QUAN];
     #define TIR_PRIMARY_QUEUE 0
        #define TIR_SLOWING_QUEUE 1
        #define TIR_STOPPED_QUEUE 2
        #define TIR_EUREKA_QUEUE 3
    struct tcbTrec          *prc_exec_tcb;
} proc_infoT;


typedef struct task_intervalTrec {
    struct task_intervalTrec        *tir_next;
    struct task_intervalTrec        *tir_prev;
        #define STT_QUEUE_QUAN 3
    struct started_taskTrec         *tir_stt_queues[STT_QUEUE_QUAN];
     #define STT_RUNNING_QUEUE 0
        #define STT_STOPPED_QUEUE 1
        #define STT_FINISHED_QUEUE 2
    card4T                          tir_lo_iteration;
    card4T                          tir_hi_iteration;
    card2T                          tir_queue;
    ...
} task_intervalT;
```

```
typedef struct started_taskTrec (
        struct started_taskT            *stt_next;
        struct started_taskT            *stt_prev;
        struct task_intervalT           *stt_interval;
        struct task_intervalT           *stt_child_interval;
    struct tcbTrec                  *stt_tcb;
        card2T                          stt_queue;
        card4T                          stt_io_tickets;
        card2T                          stt_page_creations;
    bits16T                         stt_status;
        ...
    ) started_taskT;
```

The proc_info record is the starting point for task interval and task records. All task interval records are placed on one of three queues: the primary queue, which contains the primary interval, if there is one; the slowing queue, which contains all slowing intervals; and the stopped queue, which contains all intervals which the task manager does not want to run and are not slowing. The eureka queue is not used in this implementation.

Task interval records, in turn, contain lists of started task records. Started tasks can be running (which means slowing, for a slowing task interval), stopped or finished; there is a queue for each state. Task interval records also may contain unstarted tasks, represented by the tir_lo_iteration and tir_hi_iteration fields. Any value between this data, inclusive, is the iteration number of an unstarted task. Finally, the tir_queue is the index number of the task interval queue upon which the interval record is placed.

A started task record contains a pointer to the task interval record to which the task belongs, a pointer to a child task interval, if the task is suspended, a pointer to the task's TCB, the index of the record's started task queue, the number of tickets and page creations in progress, and the running status of the task.

The prc_exec_tcb field is actually private to the task manager. When it decides which task to run, a pointer to the TCB is stored here.

### C. Task Manager Interfaces

The Framework calls the task manager to find out which task to run:

tcbT *GetCurrentTaskTCB()

Usually, the task manager just returns the value of prc_exec_tcb. Only when this is nil does the task manager actually decide what to run.

The task manager accepts task intervals from the planner, and surrenders them on demand. The planner is free to alter the above records as it pleases, but either action may affect the selection of the primary interval. There are six task manager routines which the planner calls to signal its actions:

```
voidT TMNoteInterval(new_interval)
task_intervalT *new_interval;


voidT TMNoteTheft(interval, allofit)
task_intervalT *interval;
boolT allofit;


voidT TMNoteTaskMove(task)
started_taskT *task;


voidT TMRestartTask(task)
started_taskT *task;


voidT TMRemoveTask(task)
started_taskT *task;


voidT TMStartTask(task)
started_taskT *task;
```

The first routine is called to indicate the presence of a new interval; the second is used when the planner "steals" a task interval or part of one. In both cases the task manager may select a new primary interval. For TMNoteInterval, the task manager checks whether the new interval was spawned by a task in the primary interval. If so, the new interval becomes the primary interval, and the previous primary interval is slowed. Otherwise the new interval is just placed on the stopped interval queue. For TMNoteTheft, the primary interval is affected only if the "stolen" interval is primary. If the entire primary interval is taken, the task manager defers the selection of a new primary interval until the framework asks for a task to run. If part of the primary interval is taken, the task manager checks whether that interval can run at all; if not, it is moved to the stopped interval queue, and the new primary decision is deferred as in the other case.

The remaining four routines, TMNoteTaskMove, TMRestartTask, TMRemoveTask, and TMStartTask, are used by the Planner to move started tasks between processors.

The task manager accepts running information from various components, notably the planner, pager, and I/O support. These components call the following routines to indicate that a task may or may not run:

```
voidT TMEventStart(task, eventmask)
started_taskT *task;
bits16T eventmask;


voidT TMEventEnd(task, eventmask)
started_taskT *task;
bits16T eventmask;


voidT TMNotePardo(task)
started_taskT *task;


voidT TMNoteParEnd(task)
started_taskT *task;




voidT TMNoteTaskEnd(task, finished)
started_taskT *task;
boolT finished;


voidT TMNoteDeferredEnd(task)
started_taskT *task;
```

TMEventStart is called to indicate that the task may not run because of some event such as a page fault or I/O. The event is encoded in the event mask.

TMEventEnd is called to indicate that an event which prevented the task from running has completed. The event is encoded in the event mask.

TMNotePardo is called to indicate that the task is suspended.

TMNoteParEnd is called to indicate that the task is resuming after a pardo.

TMNoteTaskEnd is called to indicate that the task is finished or completed. The finished flag indicates which.

TMNoteDeferredEnd is called to indicate that a finished task has completed.

For TMEventStart and TMEventEnd, the task manager updates the status in the started task record. And, when a task becomes non-dispatchable, the prc_exec_tcb pointer is set to nil.

The task manager helps coordinate task creation, completion, and motion activities with other kernel activities. When either the last I/O ticket becomes inactive, or the last page creation completes, this routine is called:

```
voidT DoTaskActivity(task)
started_taskT *task;
```

Now, if the task is already finished, it completes; if a pardo has been deferred, it takes effect; and if the planner wants to move the task, that is done.

## VII. Information Component

### A. Introduction

This section describes the information component. To properly manage the physical resources of the computer system, the kernel needs information concerning resource utilization throughout the domain. One function of the information component is to collect and distribute this information. For this information to be of use it must be as up-to-date as possible. This requirement provides the main design feature of the information component. That is, the distribution of user and kernel work across the domain does not appreciably affect the collection and distribution of information.

### B. Design of the Information Subcomponent

Resource management component agents maintain two types of information, domain information and cluster information. Domain information is spread via a broadcast mechanism down the resource management tree from parent to children, while, cluster information is gathered via a concentration mechanism up the resource management tree from children to parent.

There are two types of information flow in a domain, periodic and episodic. The former exists to ensure that gradual changes in the state of the domain are tracked. The latter exists to announce sudden changes in the state of the domain.

### 1. Periodic Information Flow

Periodically, each information component leaf agent gathers into a collect statistics transaction (CST) information from each of the other resource management components. The CST is marked as a periodic CST. This transaction is sent to its superagent. The information contained in this transaction is used to update the superagent's cluster information. Once all the subagents of the superagent have reported, this agent, if it is not a top-level agent, sends a CST to its superagent. This process is repeated until the top-level resource agent has received collect statistics transactions from all of its subagents.

When all subagents of the top-level agent have reported with CSTs, the top-level information component agent sends domain information to its subagents via the distribute statistics transaction (DST). This DST is marked as a periodic DST. The domain information is gathered from each of the other resource management components. The information in this transaction is used to update each agent's domain information. Then a DST is created for and sent to each of the agent's subagents. This process is repeated until each leaf agent has received a DST.

The period of the periodic information collection is called the *sample period*. It is a kernel parameter. It is set to appropriately balance the tradeoff between the cost of keeping information up-to-date and the cost of having old information.

This approach to the movement of information throughout the domain must deal with two problems. First, for a non-leaf agent to send a collect or disperse statistics transaction all of the agent's subagents must first report. Thus, if for some reason a single subagent does not report the flow of information throughout the domain comes to a halt. Another type of problem results if each subagent reports randomly. In this case more collect statistics transactions must be received than just the number of subagents before all subagents have reported. The end result of this is that there is an imbalance between the number of collect statistics transactions that must be sent up in order to obtain a single disperse statistics transaction.

Both of the above problems are lessened by requiring that the collect and disperse statistics transactions have top priority. This does not completely resolve the imbalance problem. Since processors clocks are out of sync and one cannot interrupt the processing of transactions there will always be some randomness in the receipt of collect statistics transactions and thus this problem will still occur.

The imbalance problem is resolved by requiring that CST production be in lockstep with DST reception. That is, leaf agents can only send CST's up once the sample period has expired and a DST transaction has been received.

### 2. Episodic Information Flow

The information component handles episodic CSTs and DSTs in a different fashion than periodic CSTs and DSTs. Each non head agent receiving an episodic CST, processes the transaction and then forwards the transaction to its superagent. The head agent only processes a received episodic CST; it does not broadcast a DST transaction in response. In the case of an episodic DST, each leaf agent processes the transaction; it does not send a CST in response.

Each resource management component handles episodic information in a different fashion than periodic infor-

# EP 0 420 142 B1

mation. For example, when the planner component is invoked to process its share of the information contained in an episodic DST, the load leveling operation is not invoked. only periodic DSTs invoke the planner component's load leveling operation.

## 3. Component Coordination

This section describes the events which cause the information component to act and the order of its actions. The booleau flags: timer_expired and dst_received are used to coordinate the sending of CSTs and DSTs in a lockstep manner.

(1) periodic timer expiry.

(a) set timer-expired to TRUE.
(b) if dst_received is TRUE then call the CST generation routines for each resource management agent and send a CST to its superagent; set both timer_expired and dst_received to FALSE.

(2) arrival of periodic CST.

(a) Call the CST data acceptance routines for all resource managers with data from the subagent.
(b) if all subagents have reported then if non-top agent then call CST generation routines and send the CST to its superagent else call DST generation routines and send DSTs to its subagents

(3) arrival of episodic CST.

(a) Call the CST data acceptance routines for all resource managers with data from the subagent.
(b) if non-top agent then call CST generation routines and send CST to its superagent.

(4) arrival of periodic DST.

(a) Call DST acceptance routines for all resource managers with data from the superagent.
(b) set dst_received to TRUE.
(c) if leaf agent and timer-expired is true then call CST generation routines and send the CST to its superagent.
(d) if non-leaf agent then send DST to subagents.

(5) arrival of episodic DST.

(a) Call DST acceptance routines for all resource managers with data from the superagent.
(b) if non-leaf agent then send DST to subagents.

## 4. Interfaces and Data Structures

The information component has interfaces with the following components:

(1) resource management initialization.
(2) timer service.
(3) resource managers.

The interface to the resource management initialization consists of one entry into the information component which initializes the information component's data structures and timer entries.
The interface to the timer service is one periodic timer queue entry which initiates the periodic information collection.
The interface to the resource managers consists of the following:

(1) entries into the resource managers which perform the following:

(a) generate information for periodic/episodic CST.
(b) accept information from subagent periodic/episodic CST.
(c) generate information for periodic/episodic DST.

(d) accept information from superagent periodic/episodic DST.

(2) externally known memory locations which contain address-length pairs which locate information to be sent in CST and DST messages.
(3) an entry into the information component which initiates episodic CST creation.
(4) an entry into the information component which initiates episodic DST creation.

```
        typedef enum ( ift_PERIODIC, ift_EPISODIC) inf_flow_typeT;


        typedef struct addr_lenTrec (
                address alp_addr;
                int      alp_len;
        ) addr_lenT;


        typedef struct inf_rm_interfaceTrec (
                bool            (*iri_gen_CST) (rmt_res_recT *,
                                                inf_flow_typeT);




                void            (*iri_acc_CST) (rmt_res_recT *,
                                                address, int,
                                                inf_flow_typeT);
                bool            (*iri_gen_DST) (rmt_res_recT *,
                                                inf_flow_typeT);
                void            (*iri_acc_DST) (rmt_res_recT *,
                                                address, int,
                                                inf_flow_typeT);
                addr_lenT   iri_CST_info;
                addr_lenT   iri_DST_info;
        ) inf_rm_interfaceT;
```

If the information generation routine exists, it returns a value which says whether or not the information was generated. The generated information will be located by iri_CST_info for CST information and by iri_DST_info for DST information. The address and length pair in the acceptance routines, locate the data which was sent from a super or subagent. Note that a resource manager cannot view the data sent by a manager for a different resource. The rmt_res_recT type is the resource management record:

```
typedef struct rmt_mgmt_recTrec (
        struct rmt_mgmt_recTrec *rrr_next;


        /* Data common to all resource management components */
        struct agent_name rrr_name;
        int                     rrr_child_quan;
        child_bitsT             rrr_child_agents;
        int                     rrr_tree_size;
        int                     rrr_child_tree_size[MAX_CHILD_AGENTS];


        /* Pointers to data peculiar to each resource management component */
        struct inf_mgmt_dataTrec *rrr_inf_data;
        struct pla_mgmt_dataTrec *rrr_pla_data;
        struct mem_mgmt_dataTrec *rrr_mem_data;
    ) rmt_mgmt_recT;
```

The entries into the information component which initiate episodic information flow have the following calling sequence:

```
void inf_epi_DST(rmt_res_recT *);
void inf_epi_CST(rmt_res_recT *);
```

The following is the information component management data structure. The resource management record has a pointer to this data structure. There is one of these for each node in the resource management tree. It is used to maintain the information necessary to provide the coordination to the rest of the resource management components.

```
        typedef struct inf_mgmt_dataTrec
        (
        bool ind_timer_expired;
            bool ind_dst_received;
            child_bitsT imd_child_reported;
        ) inf_mgmt_dataT;
```

imd_child_reported is used to keep track of which subagents have reported since the last time all subagents had reported once.

**VIII. Framework**

**A. Functional Description**

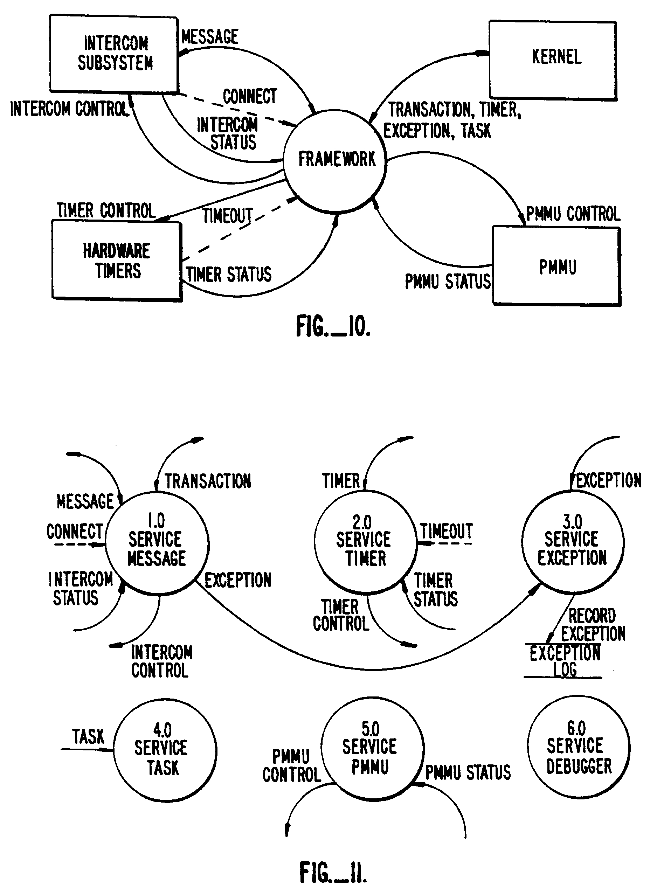

The Framework provides a set of basic services to the kernel to isolate the kernel from the underlying hardware. This helps make the kernel portable across different hardware architectures. Figure 10 is a diagram illustrating the context of the Framework.

The external event list for the Framework consists of: message sent, message received, and timer expired.

The message related events are due to the communication (Intercom) subsystem. This subsystem allows PEs to communicate with one another using messages. The timer events are due to the hardware timers which are utilized to provide timer services for the kernel. Other hardware that interacts with the Framework is the Page Memory Management Unit (PMMU) which is used to manage virtual memory. Many Framework services are provided to the kernel proper: transaction service, timer service, exception service, and task service.

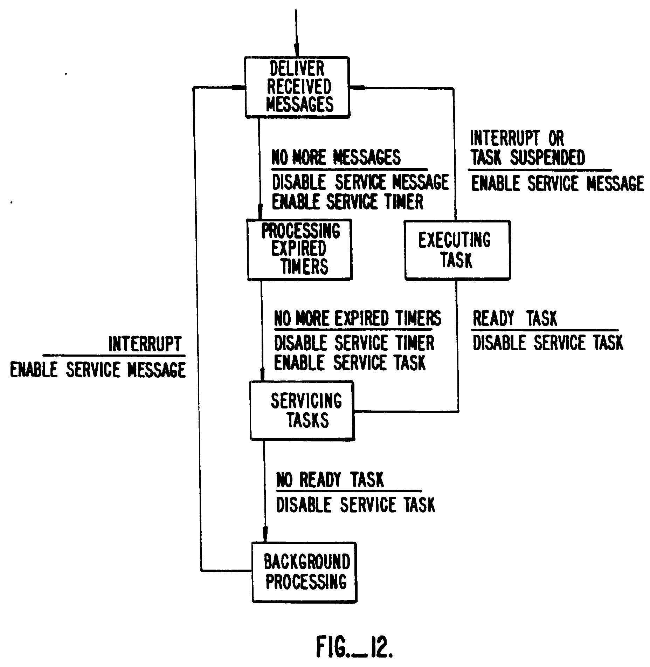

Figure 11 shows the top level Data Flow Diagram (DFD) for the Framework. There are six transforms in Figure 11.

(1) Service message. This transform handles all messages which are sent from and received by the PE. Intercom status and control are read and written respectively; Intercom errors are logged.

(2) Service timer. The service timer transform provides software timers to other kernel components. Status and control for hardware timers are also read and written.

(3) Service exception. The service exception transform has two purposes: dispatch hardware exceptions to the appropriate handler, and service software exceptions. Diagnostic information is saved to identify the exception.

(4) Service task. This transform performs task context switching on behalf on the kernel.

(5) Service PMMU. This transform manages the PMMU on behalf of the kernel. The transform is invoked by a PMMU exception or task context switch.

(6) Service debugger. This transform provides low level debugger support. The transform is invoked by a debugger exception (e.g. breakpoint).

The state transition diagram (STD) corresponding to the top level DFD is given in Figure 12. The STD diagram for the Framework illustrates the dispatch loop, that is, the order in which service is given to various functions. Note that the kernel is not reentrant; the dispatch loop must observe this restriction. The states in the STD are as follows.

(1) Deliver received messages. This is the initial state for the Framework and is always the first state in the dispatch loop. In this state, all received incoming messages are prepared then passed to the kernel. When there are no more incoming messages to process a transition to the Processing expired timers state occurs; the Service message transform is disabled and the Service timer transform is enabled.

(2) Processing expired timers. The second state in the dispatch loop is Processing expired timers. Any timers which expired in the past or at the present are serviced by invoking the action associated with the timer. When no more expired timers exist a transition to the Servicing tasks state occurs; the Service timer transform is disabled and the Service task transform is enabled.

(3) Servicing tasks. The Servicing tasks state checks whether a task is ready to run. If there is a ready task the Service task transform is disabled and a transition to the Executing task state occurs. Alternately, if there is no ready task, the Service task transform is disabled and a transition to Background processing takes place.

(4) Executing task. In this state a user task is executing on the PE. The task will run until an interrupt occurs, or the task suspends or completes. Either of the above conditions results in the Service message transform being enabled and causes a transition to Deliver received messages. The dispatch loop is thus restarted from the beginning.

(5) Background processing. The Background processing state is the idle state for the Framework. In this state there is no useful work to do so low priority background functions and auditing are performed. Any interrupt causes the Service message transform to be enabled and a transition back to Deliver received messages. Again, the dispatch loop starts from the beginning.

## B. Messages

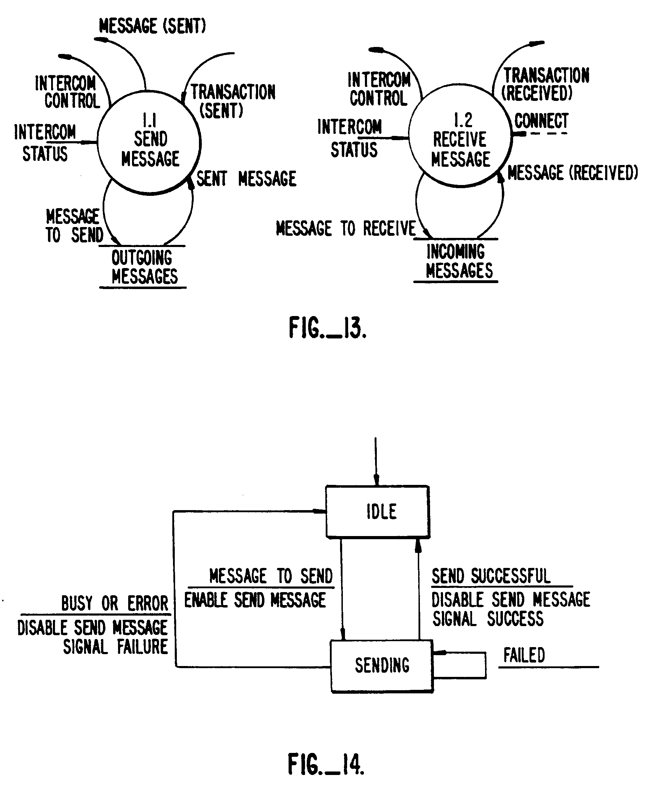

The Service message transform in Figure 11 is divided into a send and a receive part in Figure 13. These transforms are independent and perform the following functions.

(1) Send message. This transform accepts transactions to send from the kernel and maintains a store of outgoing messages. The Intercom subsystem is controlled to send those messages. A message is deleted from the store once it is successfully sent.

(2) Receive message. The Receive message transform maintains a store of incoming messages and controls the Intercom subsystem to receive those messages. A message is deleted from the store once it is delivered to the kernel.

Figure 14 shows the STD corresponding to the Send message transform.

There are two states in sending a message:

(1) Idle. The initial state for send part of the message service is Idle. Once a message is available to send, the Send message transform is enabled and a transition to the Sending state occurs. Messages which must be retried due to a previous busy are held for sending again later.

(2) Sending. In this state an attempt is made to send the message to the specified destination. When the message is sent successfully, the Send message transform is disabled, success is signalled, and a transition back to the Idle state occurs. If the destination is busy, the Send message transform is disabled, busy is signalled, and a transition to Idle takes place. If the send failed and the destination was not busy, another attempt is made to send the message. An error is signalled if the message cannot be sent after several attempts.

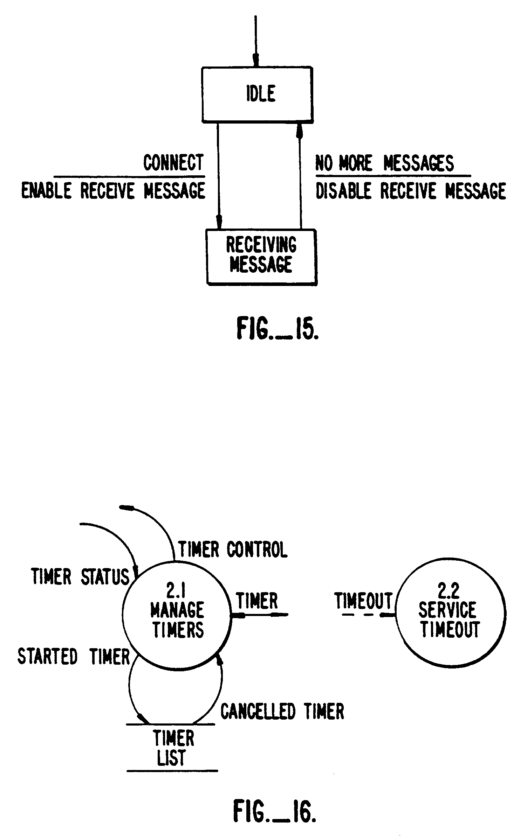

Figure 15 shows the STD corresponding to the receive part of the message service.

The states for receiving a message are:

(1) Idle. Idle is the initial state. When a connection is requested the Receive message transform is enabled and a transition into the Receiving message state occurs.

(2) Receiving message. In this state a new incoming message is received on behalf of the kernel. Once receiving is complete the Receive message state is disabled and a transition back to Idle occurs.

The message services are used for communicating between PEs.

(1) SendMessage converts a transaction and attempts to send the corresponding message to the PE specified in the transaction header. Only Transaction Control calls this function.

```
public boolT SendMessage( trans )
transT * trans;
```

The return code from sendmessage indicates whether the message was successfully sent or failures occurred.

SendMessage converts a transaction into the message format and attempts to send the message to the specified destination.

```
public boolT SendMessage( trans )
transT *trans;
{
    if new transaction
        convert to message format;
    else retry
        find corresponding message in outgoing message
            queue;

    clear transmit count;
    repeat
        send message;
        increment transmit count;
    until success or transmit count exceeded;

    if success and retry
        delete message from outgoing message queue;
    else if busy and new transaction
        link message into outgoing message queue;

    return status;
} /* SendMessage */
```

TargetHandler is the interrupt handler for messages received by the PE. The handler restarts the dispatch loop when it is safe to do so.

```
private voidT TargetHandler( )
{
    if message should be ignored
        signal message rejected;
```

```
        else
            receive message;
            link message into incoming message queue;
        check for dispatch loop restart;
    ) /* TargetHandler */
```

### C. Timers

The Service timer transform in Figure 11 is expanded in Figure 16.

The timer transforms in Figure 16 are:

(1) Manage timers. The Manage timers transform maintains a store of all active timers. New started timers are added to the store and cancelled timers are removed.

(2) Service timeout. The Service timeout transform is invoked when one of the hardware timers expires.

The timer services are used for reading the clock and managing timers.

(1) GetTime returns the current time of day.

```
public voidT GetTime( time )
timeT *time;
```

(2) StartTimer starts a oneshot or continuous timer which causes a function to be called each timeout with a single argument. The timer expires after expiry time. If repeat is not nil, the timer is automatically restarted to timeout after repeat time. A pointer is returned which may be used to cancel the timer if necessary.

```
public timerT *StartTimer( func, arg, expiry, repeat )
voidT  (*func)();
card4T  arg;
timeT  *expiry;



timeT  *repeat;
```

(3) CancelTimer cancels the started timer. The function returns TRUE if the timer was successfully cancelled or FALSE otherwise.

```
public boolT CancelTimer( timer )
timerT *timer;
```

Data structures used by timer services are shown below.

```
typedef struct timerTrec
{
        timeT                   tmr_interval;
        voidT                   (*tmr_func)();
        card4T                  tmr_tod;
        card4T                  tmr_arg;
        struct timerTrec    *tmr_next;
} timerT;
```

The timer structure timerT contains the repeat interval, expiry time, a pointer to the function called on expiry, an argument for that function, and a pointer to the next timer record.

GetTime returns current TOD clock value. The function must be careful to account for warp-around when reading the clock.

```
public voidT GetTime( time )
timeT *time;
{
      repeat
         save high order part of TOD clock;
         read low order part of TOD clock;
      until saved and current high order parts are equal;
} /* GetTime */
```

StartTimer and CancelTimer start and cancel software timers respectively.

```
public timerT *StartTimer (func, arg, expiry, repeat)
voidT (*func)();
card4T  arg;
timeT  *expiry;
timeT  *repeat;
{
        if timers available on free timer list
                unlink first timer from free timer list;
        else
                allocate a new timer record;
        save the function, argument, expiry, and repeat
                parameters;
        add the current TOD to the expiry time;
        link new timer into started timer list in sorted
order;
        return new timer;
} /* StartTimer */


public boolT CancelTimer( timer )
timerT *timer;
{
        set return code to failed;
        for all timers on started timer list
                if timer found
                        unlink cancelled timer from started timer
list;
                        link cancelled timer into free timer list;
                        set return code to success;
                        break;
} /* CancelTimer */
```

Interval timer interrupts are handled by IntervalHandler. The interval timer must be enabled for the handler to be called.

```
private voidT IntervalHandler( )
{
        find first unexpired timer on started timer
            list;
        process timers;
        calculate next retry timeout;
        reload interval timer;
        check for dispatch loop restart;
) /* IntervalHandler */
```

## D. Exceptions

Exception services are used for logging recoverable and nonrecoverable exceptions.

(1) warning logs a recoverable hardware or software exception and informs the CFE. An indication of the exception reason is given.

```
public voidT Warning (reason)
card4T     reason;
```

(2) MachineCheck logs a nonrecoverable exception and informs the CFE. An indication of the exception reason is given.

```
public voidT MachineCheck (reason)
card4T  reason;
```

The exception service functions maintain all PE status information in a common KDB logout area.

```
typedef struct log_areaTrec
{
                    bits32T        log_dreg[8];
                    bits32T        log_areg[7];
                    bits32T        log_ssp;
                    bits32T        log_usp;
                    bits16T        log_sr;
                    bits16T        log_fv;
                    bits32T        log_pc;
                    bits16T        log_vec;
} log_areaT;
public log_areaT KdbRegisters;
public card4T    *StackTop;
public card2T     KdbStatus;
```

A crash log consisting of a register save area *KdbRegisters* is used to record machine checks. KDB also requires a kernel stack pointer *StackTop* and status information *KdbStatus* for breakpoints and tracking.

Pseudo code for the exception service functions is given below.

```
public voidT Warning (reason)
cardT  reason;
{
        save warning function and reason;
        send exception notification to CFE ;
} /* Warning */


public voidT MachineCheck (reason)
cardT  reason;
{
        set PE state to machine check;
        save machine check function and reason;
        save all registers;
        save last part of stack;
```

```
if not already machine checked
        send exception notification to CFE ;
    else double machine check
        halt;
} /* MachineCheck */
```

**E. PMMU Support**

In the kernel, pages belong to either the kernel or a user task. PMMU support allows the kernel to create and delete task translation tables, make pages available or unavailable to a task, and check whether a user page has been accessed.

(1) CreateTaskTT initializes the user translation tables when a task, given by a TCB pointer, is started.

```
public voidT CreateTaskTT (tcb)
tcbT    *tcb;
```

(2) DeleteTaskTT removes the user translation tables when a task, given by a TCB pointer, completes or is moved.

```
public voidT DeleteTaskTT (tcb)
tcbT    *tcb;
```

(3) InsertPage inserts a page in a task's translation table thus making the page available to the task. A TCB pointer, page number, page pointer, and write flag are passed as arguments.

```
public voidT InsertPage (tcb, pagenum, page, write)
tcbT    *tcb;
card4T   pagenum;
pageT   *page;
boolT    write;
```

(4) RemovePage removes a page from a task's translation table thus making the page unavailable to the task. A TCB pointer and page number are passed as arguments.

```
public voidT RemovePage (tcb, pagenum)
tcbT     *tcb;
card4T    pagenum;
```

(5) WasPageUsed checks a task translation table to determine whether a page has been used since the last call. A TCB pointer and page number are passed as arguments. The function returns TRUE if the page was used or FALSE otherwise. The PMMU used bit for the page is cleared on each call.

```
public boolT WasPageUsed (tcb, pagenum)
tcbT     *tcb;
card4T    pagenum;
```

The PMMU support functions control the PMMU on behalf of the kernel and G-RTS. PMMUInit initializes the PMMU at start-up. The supervisor and CPU address spaces are direct mapped; user address spaces are mapped on demand.

```
private  voidT PMMUInit( )
{
        initialize page size, look-up level, and FC look-up;
        mark unused address spaces as invalid;
        direct map supervisor and CPU spaces;



        flush all cache entries;
        set root pointer register;
        set translation control register;
} /* PMMUInit */
```

Five routines are used by the kernel to manage user space mapping. CreateTaskTT initializes the user translation tables for a task; DeleteTaskTT removes them.

```
public voidT CreateTaskTT (tcb)
tcbT    *tcb;
{
        for user data and program spaces
                allocate empty level A table;
} /* CreateTaskTT */


public voidT DeleteTaskTT (tcb)
tcbT    *tcb;
{
        for user data and program spaces
                delete all level B tables;
                delete level A table;
} /* DeleteTaskTT */
```

InsertPage inserts a page in a task's translation table; RemovePage removes it.

```
public voidT InsertPage (tcb, pagenum, page, write)
tcbT    *tcb;
card4T  pagenum;
pageT   *page;
boolT   write;
{
        if write protect
                set write protect bit;
        ensure level A table exists;
```

```
        if no level B table
                allocate empty level B table;


        ensure level B table exists;
        validate page in user table;
    ) /* InsertPage */


public voidT RemovePage (tcb, pagenum)
tcbT    *tcb;
card4T  pagenum;
    {
        ensure level A table exists;
        ensure level B table exists;
        invalidate page in user table;


        if level B table is empty
                delete level B table;


    ) /* RemovePage */
```

WasPageUsed checks and clears the PMMU used bit for a page.

```
public boolT WasPageUsed (tcb, pagenum)
tcbT    *tcb;
card4T  pagenum;
    {
        ensure level A table exists;
        ensure level B table exists;
        set return code to true if used bit set otherwise
false;
        clear used bit;
        return used bit status;
    ) /* WasPageUsed */
```

The bus error handler is the most complicated part of the PMMU support. The handler checks for errors first and then for page faults. Legal page faults are validated. Faults are corrected but software does not repaired the fault.

```
        public BERRHandler( )
        {
                determine where the fault occurred (data or
    instruction);
                find out more about the fault;

                if illegal PMMU configuration
                        machine check;

                if hard bus error
                        machine check;

                if invalid table entry
                        if valid address space
                                if supervisor space
                                        machine check;
                                else
                                        if legal reference
                                        ask kernel for page;
                                else
                                        raise addressing error
                        else
                                machine check;
                flush cache entry;
                return from exception;
        } /* BERRHandler */
```

## F. Dispatcher

The main dispatch loop for the Framework is used to deliver messages and timers to the kernel, execute user tasks, and perform low priority background processing.

154

```
private voidT Dispatcher( )
{
        reset framework stack;
        enable interrupts;


        for all received messages
                convert to transaction format;
                deliver message to kernel;


        for all expired timers
                call expiry function;
                unlink timer from started timer list;
                if repeat interval is nonzero
                        calculate new expiry time;
                        link timer into started timer list in
sorted order;
                else
                        link timer into free timer list;


        if there is a ready task
                restore current task status;
                return to task;


        perform background processing;
}
```

Interrupt handlers call CheckRestart to determine if it is safe to restart the dispatch loop.

```
private voidT CheckRestart( )
{
        if user task executing
                save current task status;
        if user task executing or auditing
                jump to top of dispatch loop;
} /* CheckRestart */
```

## Claims

1. In a computing system having a plurality of interconnected processing elements, wherein a first processing element of the plurality of processing elements is executing a program having a group of instructions which can be executed in parallel, and wherein a parallel instruction statement has been inserted into the program prior to the group of instructions to inform the first processing element that the group of instructions can be executed in parallel by a set of the processing elements selected from the plurality of processing elements, a method of executing the selected instruction steps in parallel comprising:

   executing the parallel instruction statement to cause the first processing element to assign the group of instruction steps to each one of the set of processing elements;
   suspending execution of the program by the first processing element;
   establishing separate memory addresses for each one of the set of processing elements to which the group of instructions has been assigned;
   instructing each of the set of processing elements to execute the group of instructions, each one of the set of processing elements utilizing the separate memory addresses assigned to it; and
   after each of the set of processing elements has completed its execution of the group of instructions, resuming execution of the program by the first processing element.

2. In a computing system having a plurality of processing elements interconnected by communication mechanisms for providing communications among individual ones of the plurality of processing elements, and wherein a first processing element of the plurality of processing elements is executing a program having a group of instructions which can be executed in parallel by a set of the plurality of processing elements and wherein a parallel instruction statement has been inserted into the program prior to the group of instruction steps to inform the first processing element that the group of instruction steps can be executed in parallel, a method of executing the group of instruction steps in parallel comprising:

   executing the parallel instruction statement to cause the first processing element to assign to each one of the set of processing elements the group of instruction steps, the first processing element selected by being the processing element which is executing the program;
   establishing for each of the set of processing elements a separate range of memory addresses;
   suspending execution of the program by the first processing element;
   instructing each one of the set of processing elements to execute the group of instructions in parallel with other members of the set of processing elements;
   wherein each one of the set of processing elements executing the group of instructions does not use addresses from the range of addresses assigned to other processing elements in the set of processing elements;
   directing a selected one of the set of processing elements when it desires to read information from the range of memory addresses established for it to read information from range of memory addresses of the first processing element until the selected one of the group of processing elements writes into the range of memory addresses established for it; and

thereafter directing the selected one of the set of processing elements to read from the separate range of memory addresses established for it; and

resuming execution of the program by the first processing element after the set of processing elements has each completed execution of the group of instructions.

**3.** In a computing system having a plurality of processing elements interconnected by communication mechanisms for providing communications among processing elements and wherein a first processing element of the plurality of processing elements is executing a program stored in a memory at a range of addresses and wherein the program has a group of instruction steps which can be executed in parallel by a set of the processing elements, and wherein a parallel instruction statement has been inserted into the program prior to the group of instruction steps, which parallel instruction statement informs the first processing element that the group of instruction steps can be executed in parallel, a method of executing the group of instruction steps comprising:

executing the parallel instruction statement to cause the first processing element to assign the group of instruction steps to multiple individual ones of the set of processing elements;

establishing for each one of the set of processing elements a separate range of memory addresses;

suspending execution of the program by the first processing element;

instructing each one of the set of processing elements to execute its group of instruction steps in parallel with others in the set of processing elements, each one of the set of processing elements using the range of addresses assigned to it;

upon completion of the execution of the group of instructions by each one of the set of processing elements, merging the range of addresses of each one of the set of processing elements with the range of addresses of the first processing element, the step of merging being performed by a selected one of the set of processing elements; and

upon completion of the step of merging, resuming execution of the program by the first processing element.

**Patentansprüche**

**1.** In einem Computersystem mit einer Vielzahl von untereinander verbundenen Verarbeitungselementen, worin ein erstes Verarbeitungselement der Vielzahl von Verarbeitungselementen ein Programm mit einer Gruppe von Befehlen, die parallel ausgeführt werden können, ausführt und worin eine Parallelbefehlanweisung in das Programm vor die Gruppe von Befehlen eingefügt worden ist, um das erste Verarbeitungselement zu informieren, daß die Gruppe von Befehlen parallel von einem aus der Vielzahl von Verarbeitungselementen ausgewählten Satz der Verarbeitungselemente ausgeführt werden kann, ein Verfahren zum parallelen Ausführen der ausgewählten Befehlsschritte, umfassend:

Ausführen der Parallelbefehlanweisung, um das erste Verarbeitungselement zu veranlassen, die Gruppe von Befehlsschritten jedem einzelnen Verarbeitungselement aus dem Satz von Verarbeitungselementen zuzuordnen;

Aussetzen der Verarbeitung des Programms durch das erste Verarbeitungselement;

Ermitteln separater Speicheradressen für jedes einzelne Verarbeitungselement aus dem Satz von Verarbeitungselementen, welchem die Gruppe von Befehlen zugeordnet worden ist;

Anweisen jedes Verarbeitungselements aus dem Satz von Verarbeitungselementen, die Gruppe von Befehlen auszuführen, wobei jedes einzelne Verarbeitungselement aus dem Satz von Verarbeitungselementen die ihm zugeordneten separaten Speicheradressen verwendet; und

nachdem jedes Verarbeitungselement aus dem Satz von Verarbeitungselementen seine Verarbeitung der Gruppe von Befehlen abgeschlossen hat Fortsetzen der Ausführung des Programms durch das erste Verarbeitungselement.

**2.** In einem Computersystem mit einer Vielzahl von Verarbeitungselementen, die durch Kommunikationsmechanismen zum Bereitstellen von Kommunikation zwischen einzelnen Verarbeitselementen der Vielzahl von Verarbeitungselementen untereinander verbunden sind, und worin ein erstes Verarbeitungselement der Vielzahl von Verarbeitungselementen ein Programm mit einer Gruppe von Befehlen ausführt, die von einem Satz der Vielzahl von Verarbeitungselementen parallel aufgeführt werden können, und worin eine Parallelbefehlanweisung in das Programm vor die Gruppe von Befehlsschritten eingefügt worden ist, um das erste Verarbeitungselement zu informieren, daß die Gruppe von Befehlsschritten parallel ausgeführt werden kann, ein Verfahren zum parallelen Ausführen der Gruppe von Befehlsschritten, umfassend:

Ausführen der Parallelbefehlanweisung, um das erste Verarbeitungselement zu veranlassen, jedem einzelnen Verarbeitungselement aus dem Satz von Verarbeitungselementen die Gruppe von Befehlsschritten zuzuweisen, wobei das erste Verarbeitungselement dadurch ausgewählt wird, daß es das Verarbeitungselement ist, welches das Programm ausführt;

Ermitteln eines separaten Bereichs von Speicheradressen für jedes Verarbeitungselement aus dem Satz von Verarbeitungselementen;

Aussetzen der Ausführung des Programms durch das erste Verarbeitungselement;

Anweisen jedes einzelnen Verarbeitungselements aus dem Satz von Verarbeitungselementen, die Gruppe von Befehlen parallel mit anderen Mitgliedern des Satzes von Verarbeitungselementen auszuführen;

wobei jedes einzelne Verarbeitungselement aus dem Satz von Verarbeitungselementen, das die Gruppe von Befehlen ausführt, Adressen aus dem Bereich der Adressen, die anderen Verarbeitungselementen in dem Satz von Verarbeitungselementen zugewiesen sind, nicht benutzt;

Anweisen eines ausgewählten Verarbeitungselements aus der Gruppe von Verarbeitungselementen, wenn es Informationen aus dem für ihn ermittelten Bereich von Speicheradressen zu lesen wünscht, Informationen aus dem Bereich von Speicheradressen des ersten Verarbeitungselements zu lesen, bis das ausgewählte Verarbeitungselement aus dem Satz von Verarbeitungselementen in den für ihn ermittelten Bereich von Speicheradressen schreibt; und

danach Anweisen des ausgewählten Verarbeitungselements aus dem Satz von Verarbeitungselementen, aus dem separaten für ihn ermittelten Bereich von Speicheradressen zu lesen; und

Fortsetzen der Ausführung des Programms durch das erste Verarbeitungselement, nachdem der Satz von Verarbeitungselementen jeweils die Ausführung der Gruppe von Befehlen beendet hat.

3. In einem Computersystem mit einer Vielzahl von Verarbeitungselementen, die durch Kommunikationsmechanismen zum Bereitstellen von Kommunikation zwischen Verarbeitungselementen untereinander verbunden sind, und worin ein erstes Verarbeitungselement aus der Vielzahl von Verarbeitungselementen ein in einem Speicher in einem Bereich von Adressen gespeichertes Programm ausführt und worin das Programm eine Gruppe von Befehlsschritten umfaßt, die durch einen Satz der Verarbeitungselemente parallel ausgeführt werden können, und worin eine Parallelbefehlanweisung in das Programm vor die Gruppe von Befehlsschritten eingefügt worden ist, wobei die Parallelbefehlanweisung das erste Verarbeitungselement informiert, daß die Gruppe von Befehlsschritten parallel ausgeführt werden kann, ein Verfahren zum Ausführen der Gruppe von Befehlsschritten, umfassend:

Ausführen der Parallelbefehlanweisung, um das erste Verarbeitungselement zu veranlassen, die Gruppe von Befehlsschritten mehreren einzelnen Verarbeitungselementen aus dem Satz von Verarbeitungselementen zuzuweisen;

Ermitteln eines separaten Bereichs von Speicheradressen für jedes einzelne Verarbeitungselement aus dem Satz von Verarbeitungselementen;

Aussetzen der Ausführung des Programms durch das erste Verarbeitungselement;

Anweisen jedes einzelnen Verarbeitungselements aus dem Satz von Verarbeitungselementen, seine Gruppe von Befehlsschritten parallel mit anderen Verarbeitungselementen in dem Satz von Verarbeitungselementen auszuführen, wobei jedes einzelne Verarbeitungselement aus dem Satz von Verarbeitungselementen den ihm zugewiesenen Bereich von Adressen benutzt;

bei Abschluß der Ausführung der Gruppe von Befehlen durch jedes einzelne Verarbeitungselement aus dem Satz von Verarbeitungselementen, Zusammenführen des Bereichs von Adressen für jedes einzelne Verarbeitungselement aus dem Satz von Verarbeitungselementen mit dem Bereich von Adressen des ersten Verarbeitungselements, wobei der Schritt des Zusammenführens von einem ausgewählten Verarbeitungselement aus dem Satz von Verarbeitungselementen ausgeführt wird; und

bei Abschluß des Schritts des Zusammenführens, Fortsetzen des Ausführens des Programms durch das erste Verarbeitungselement.

**Revendications**

1. Dans un système d'ordinateur comprenant une pluralité d'éléments de traitement interconnectés, dans lequel un premier élément de traitement parmi la pluralité d'éléments de traitement exécute un programme ayant un groupe d'instructions qui peuvent être exécutées en parallèle, et dans lequel une instruction parallèle a été insérée dans le programme avant le groupe d'instructions pour informer le premier élément de traitement que le groupe d'instructions peut être exécuté en parallèle par un ensemble d'éléments de traitement sélectionnés parmi la pluralité d'éléments de traitement, procédé pour exécuter les étapes d'instructions sélectionnées en parallèle comprenant les étapes de :

exécuter l'instruction parallèle pour conduire le premier élément de traitement à assigner le groupe d'étapes d'instructions à chacun des éléments de traitement de l'ensemble;

suspendre l'exécution du programme par le premier élément de traitement;

établir des adresses de mémoire séparées pour chacun des éléments de traitement de l'ensemble auquel le groupe d'instructions a été assigné;

instruire chacun des éléments de traitement de l'ensemble pour exécuter le groupe d'instructions, chacun des éléments de traitement de l'ensemble utilisant les adresses de mémoire séparées qui lui ont été assignées; et

après que chacun des éléments de traitement de l'ensemble a terminé son exécution du groupe d'instructions, reprendre l'exécution du programme par le premier élément de traitement.

**2.** Dans un système d'ordinateur ayant une pluralité d'éléments de traitement interconnectés par des mécanismes de communication pour fournir des communications parmi des éléments de traitement individuels d'une pluralité d'éléments de traitement, et dans lequel un premier élément de traitement de la pluralité d'éléments de traitement exécute un programme ayant un groupe d'instructions qui peuvent être exécutées en parallèle par un ensemble d'éléments de traitement de la pluralité d'éléments de traitement et dans lequel une instruction parallèle a été insérée dans le programme avant le groupe d'étapes d'instructions pour informer le premier élément de traitement que le groupe d'étapes d'instructions peut être exécuté en parallèle, procédé pour exécuter le groupe d'étapes d'instructions en parallèle comprenant les étapes de :

exécuter l'instruction parallèle pour conduire le premier élément de traitement à assigner le groupe d'étapes d'instructions à chacun des éléments de traitement de l'ensemble, le premier élément de traitement sélectionné étant l'élément de traitement qui est en train d'exécuter le programme;

établir pour chacun des éléments de traitement de l'ensemble une gamme séparée d'adresses de mémoire;

suspendre l'exécution du programme par le premier élément de traitement;

instruire chacun des éléments de traitement de l'ensemble pour exécuter le groupe d'instructions en parallèle avec d'autres membres de l'ensemble d'éléments de traitement;

dans lequel chacun des éléments de traitement de l'ensemble exécutant le groupe d'instructions n'utilise pas les adresses de la gamme d'adresses assignées à d'autres éléments de traitement dans l'ensemble d'éléments de traitement;

diriger un élément de traitement sélectionné de l'ensemble lorsqu'il souhaite lire une information de la gamme d'adresses de mémoire établie pour cet élément pour lire l'information de la gamme d'adresses de mémoire du premier élément de traitement jusqu'à ce que l'élément de traitement sélectionné du groupe d'éléments de traitement écrive dans la gamme des adresses de mémoire établies pour cet élément; et

diriger ensuite l'élément de traitement sélectionné de l'ensemble pour lire dans la gamme séparée des adresses mémoires qui est établie pour cet élément; et

- reprendre l'exécution du programme par le premier élément de traitement après que l'ensemble d'éléments de traitement a terminé l'exécution du groupe d'instructions.

**3.** Dans un système d'ordinateur ayant une pluralité d'éléments de traitement interconnectés par des mécanismes de communication pour fournir des communications parmi des éléments de traitement et dans lequel un premier élément de traitement de la pluralité d'éléments de traitement exécute un programme stocké dans une mémoire dans une gamme d'adresses et dans lequel le programme a un groupe d'étapes d'instructions qui peuvent être exécutées en parallèle par un ensemble d'éléments de traitement, et dans lequel une instruction parallèle a été insérée dans le programme avant le groupe d'étapes d'instructions, cette instruction parallèle informant le premier élément de traitement que le groupe d'étapes d'instructions peut être exécuté en parallèle, procédé d'exécution du groupe d'étapes d'instructions comprenant les étapes de :

exécuter l'instruction parallèle pour conduire le premier élément de traitement à assigner le groupe d'étapes d'instructions à plusieurs éléments individuels de l'ensemble d'éléments de traitement;

établir pour chacun des éléments de traitement de l'ensemble une gamme séparée d'adresses de mémoire;

suspendre l'exécution du programme par le premier élément de traitement;

instruire chacun des éléments de traitement de l'ensemble pour qu'il exécute son groupe d'étapes d'instructions en parallèle avec d'autre éléments de traitement de l'ensemble, chacun des éléments de traitement de l'ensemble utilisant la gamme d'adresses qui lui a été assignée;

après achèvement de l'exécution du groupe d'instructions par chacun des éléments de traitement de l'ensemble, fusionner la gamme d'adresses de chacun des éléments de traitement de l'ensemble avec la gamme d'adresses du premier élément de traitement, l'étape de fusion étant réalisée par un élément de traitement

**159**

sélectionné de l'ensemble d'éléments de traitement; et

après achèvement de l'étape de fusion, reprendre l'exécution du programme par le premier élément de traitement.

FIG._I.

FIG._2.

FIG._4.

PLANNER 20

FAME MANAGER 40

PAGER 30

TASK MANAGER 60

INFORMATION COMPONENT 70

PAGE FRAME MANAGER

I/O 90

TRANSACTION CONTROL 50

FRAMEWORK 80

TASKS

FIG._3.

EP 0 420 142 B1

FIG._5a.

FIG._5d.

FIG._5b.

FIG._5e.

FIG._5c.

FIG._5f.

FIG._6.

FIG._7.

165

FIG.—8.

FIG.—9.

FIG._10.

FIG._II.

167

FIG.—12.

FIG._13.

FIG._14.

IDLE

CONNECT
ENABLE RECEIVE MESSAGE

NO MORE MESSAGES
DISABLE RECEIVE MESSAGE

RECEIVING
MESSAGE

FIG.__15.

TIMER CONTROL

TIMER STATUS

2.1
MANAGE
TIMERS

TIMER

TIMEOUT

2.2
SERVICE
TIMEOUT

STARTED TIMER

CANCELLED TIMER

TIMER
LIST

FIG.__16.

170